(19)

Europäisches
Patentamt

European
Patent Office

Office européen
des brevets

(11) **EP 4 661 399 A1**

(12) **EUROPEAN PATENT APPLICATION**

(43) Date of publication:
**10.12.2025 Bulletin 2025/50**

(21) Application number: **25181176.6**

(22) Date of filing: **05.06.2025**

(51) International Patent Classification (IPC):
**H04N 19/132** (2014.01)   **G06T 9/00** (2006.01)
**H04N 19/186** (2014.01)   **H04N 19/597** (2014.01)

(52) Cooperative Patent Classification (CPC):
**H04N 19/597; G06T 9/001; G06T 9/004;
G06T 9/007; G06T 9/40; H04N 19/132;
H04N 19/186**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.06.2024 US 202463657218 P**

(71) Applicant: **Comcast Cable Communications, LLC
Philadelphia, PA 19103 (US)**

(72) Inventors:
• **LASSERRE, Sébastien
  Philadelphia, 19103 (US)**
• **TAQUET, Jonathan
  Philadelphia, 19103 (US)**

(74) Representative: **V.O.
P.O. Box 87930
2508 DH Den Haag (NL)**

(54) **CHROMA SAMPLING FOR COLORED POINT CLOUD**

(57)    Systems, apparatuses, methods, and computer-readable media are described for determining and/or coding color attribute information in a colored point cloud frame. Chroma information may be transformed into chroma coefficients at a first level of spatial precision and luma information may be transformed into luma coefficients at a second level of spatial precision such that the chroma information is represented at a lower spatial precision than the luma information. The color attributes may be reconstructed based on decoding the chroma coefficients and the luma coefficients from the bitstream.

FIG. 23

EP 4 661 399 A1

**Description**

**CROSS-REFERENCE TO RELATED APPLICATIONS**

This application claims the benefit of U.S. Provisional Application No. 63/657,218 filed on June 7, 2024. The above referenced application is hereby incorporated by reference in its entirety.

**BACKGROUND**

An object or scene may be described using volumetric visual data consisting of a series of points. The points may be stored as a point cloud format that includes a collection of points in three-dimensional space. As point clouds can get quite large in data size, transmitting and processing point cloud data may need a data compression scheme that is specifically designed with respect to the unique characteristics of point cloud data.

**SUMMARY**

The following summary presents a simplified summary of certain features. The summary is not an extensive overview and is not intended to identify key or critical elements.

Point cloud frames associated with content may comprise geometry information and attribute information (e.g., color or texture of the geometry). Color attribute information may be coded separately from geometry information in a colored point cloud, for example, based on projecting the color attributes to points of the geometry of the colored point cloud. An encoder may transform chroma information into chroma coefficients at a first level of spatial precision and luma information into luma coefficients at a second level of spatial precision. The encoder may encode the chroma coefficients and the luma coefficients in a bitstream, for example, such that the chroma information is represented at a lower spatial precision than the luma information. A decoder may decode the chroma coefficients and the luma coefficients from the bitstream. The decoder may determine and/or reconstruct the color attributes associated with the colored point cloud by inverse transforming the chroma coefficients at the first level of spatial precision and the luma coefficients at the second level of spatial precision. By encoding the chroma coefficients and the luma coefficients at different spatial precisions, for example, representing the chroma information at a lower spatial precision than the luma information, the spatial higher frequencies of the chroma component of the color attributes may be filtered out, thereby improving compression of color attributes of colored point clouds without requiring direct 3D sampling of the color attributes.

These and other features and advantages are described in greater detail below.

**BRIEF DESCRIPTION OF THE DRAWINGS**

Some features are shown by way of example, and not by limitation, in the accompanying drawings. In the drawings, like numerals reference similar elements.

FIG. 1 shows an example point cloud coding system.

FIG. 2 shows an example Morton order.

FIG. 3 shows an example scanning order.

FIG. 4 shows an example neighborhood of cuboids for entropy coding the occupancy of a child cuboid.

FIG. 5 shows an example of a dynamic reduction function DR that may be used in dynamic OBUF.

FIG. 6 shows an example method for coding occupancy of a cuboid using dynamic OBUF.

FIG. 7 shows an example of an occupied cuboid.

FIG. 8A shows an example cuboid corresponding to a TriSoup node.

FIG. 8B shows an example refinement to the TriSoup model.

FIG. 8C shows an example of encoding a centroid residual value.

FIG. 9A shows an example of voxelization.

FIG. 9B shows an example of voxelization using barycentric coordinates.

FIG. 10 shows an example method for encoding point cloud attributes based on prediction transform.

FIG. 11 shows an example method for decoding point cloud attributes based on prediction transform.

FIG. 12 shows an example method for encoding point cloud attributes based on prediction with lifting transform.

FIG. 13 shows an example method for decoding point cloud attributes based on prediction with lifting transform.

FIG. 14 shows an example region adaptive hierarchical transform (RAHT) transformation based on an octree.

FIG. 15 shows an example of the RAHT transformation based on an octree.

FIG. 16 shows an example iteration of a RAHT transformation based on a tree.

FIG. 17 shows another example of the RAHT transformation based on an octree.

FIGS. 18 shows an example iterative RAHT transformation based on a tree.

FIG. 19 shows an example inverse RAHT iterative transformation based on a tree.

FIG. 20 shows an example method for encoding color attributes associated with a geometry of a colored point cloud in a bitstream.

FIG. 21 shows an example method for decoding color attributes associated with a geometry of a colored point cloud from a bitstream.

FIG. 22 shows an example method for transforming color information associated with a geometry of a colored point cloud by using a hierarchical transform .

FIG. 23 shows an example method for inverse transforming luma coefficients and chroma coefficients by using an inverse hierarchical transform .

FIG. 24 shows an example method for encoding color attributes of a colored point cloud.

FIG. 25 shows an example method for decoding color attributes of a colored point cloud.

FIG. 26 shows an example computer system in which examples of the present disclosure may be

implemented.

FIG. 27 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

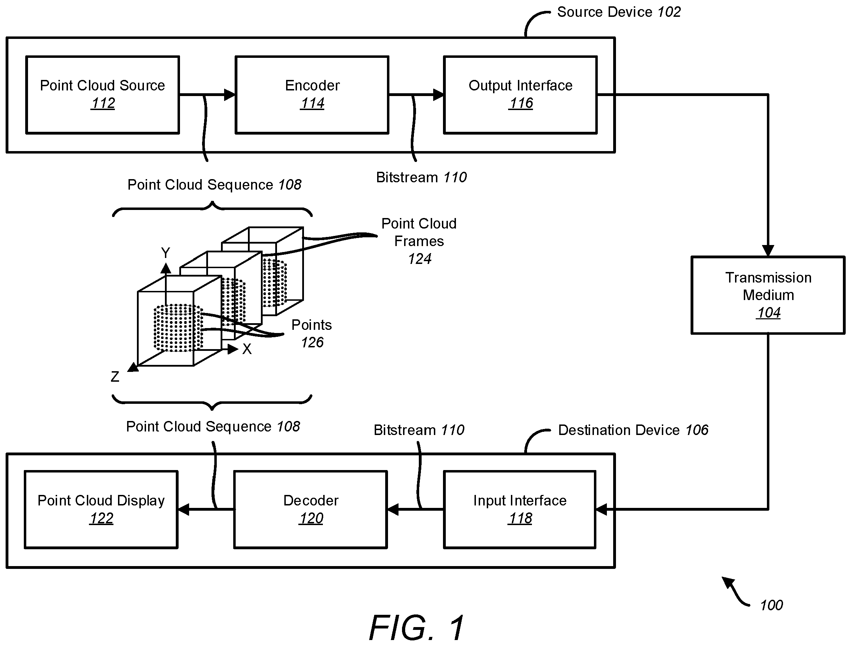

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel may be considered as a 3D extension of pixels corresponding to the 2D image grid coordinates. A voxel may be referred to as a volumetric pixel. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. The sub-grid center coordinates may correspond to voxels. The sub-grid center coordinates may be referred to as a voxelized grid. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.32 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume, may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, some maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary "1" in the 1-byte occupancy word. Unoccupied sub-cuboids may be each represented or indicated by a binary "0" in the 1-byte occupancy word. Occupied and un-occupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

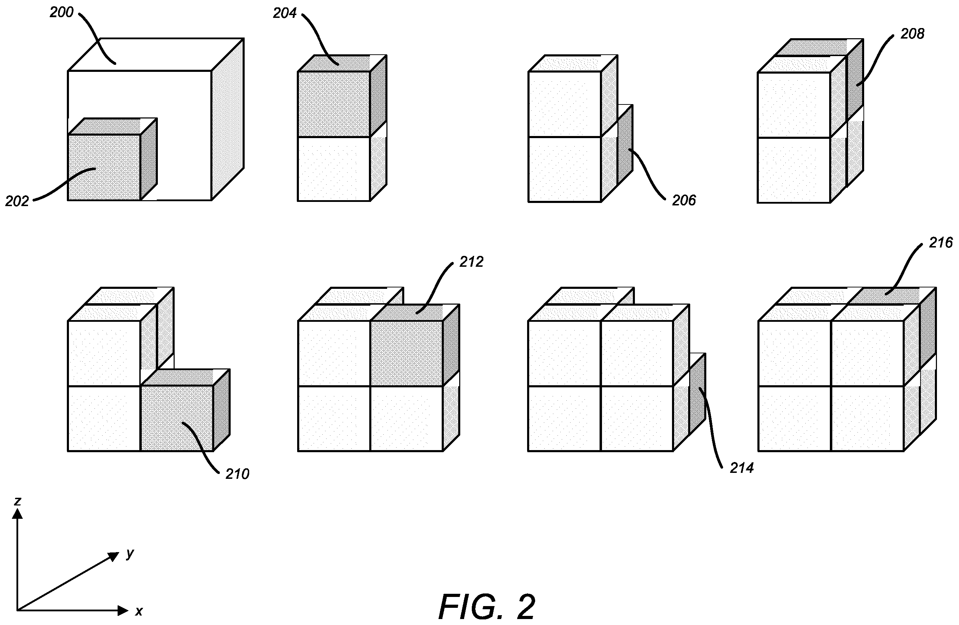

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

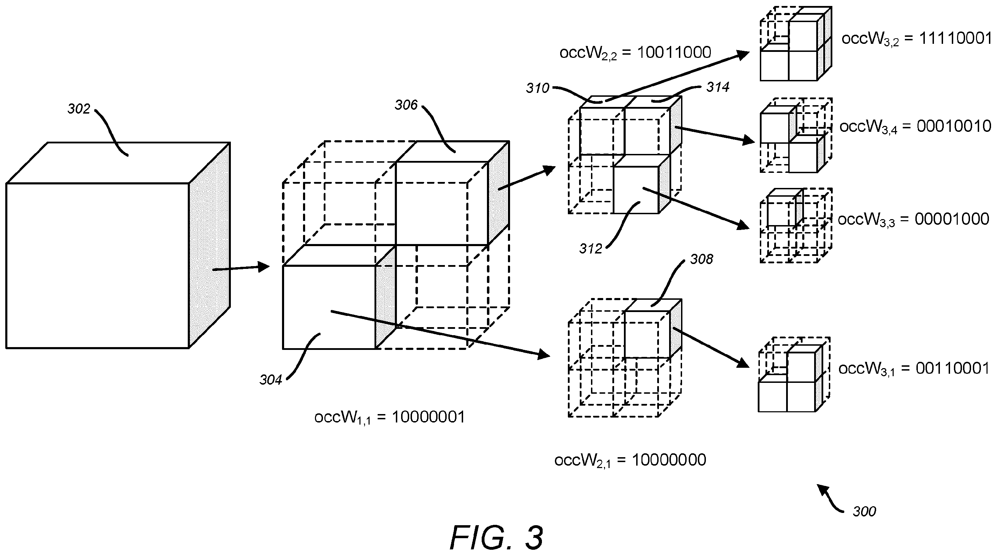

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. A plurality of cuboids (e.g., cubes) may be generated, for example, at each level of the occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order. The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

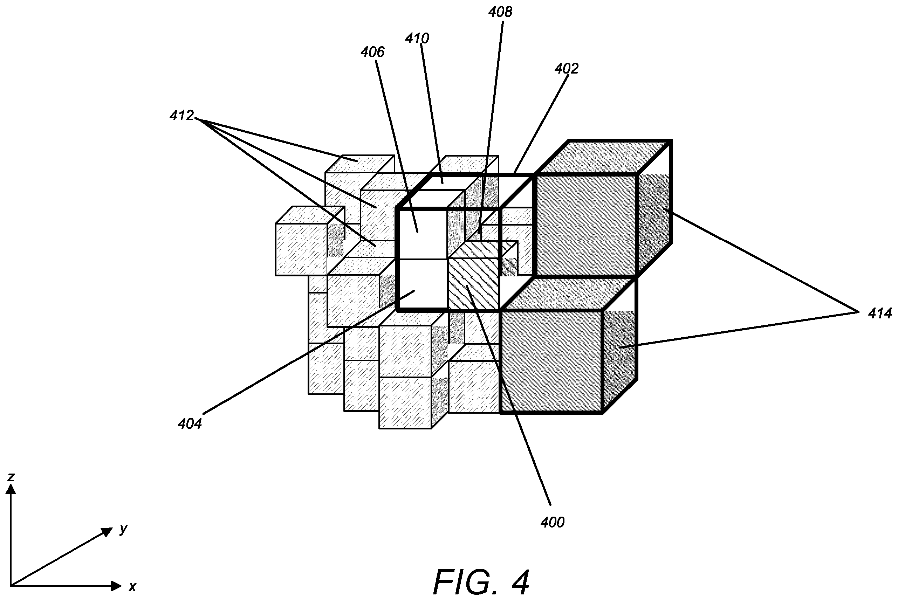

FIG. 4 shows an example neighborhood of cuboids for entropy coding the occupancy of a child cuboid. More specifically, FIG. 4 shows an example neighborhood of cuboids with already-coded occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

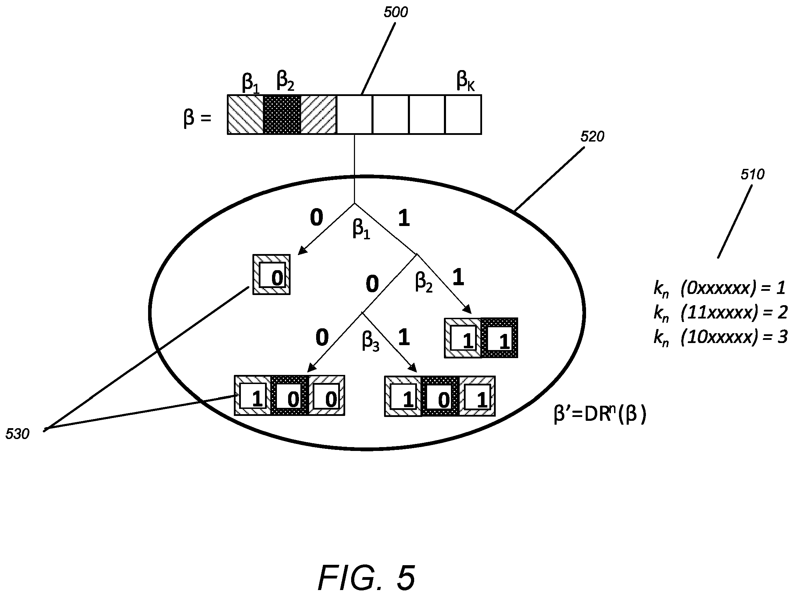

FIG. 5 shows an example of a dynamic reduction function DR that may be used in dynamic OBUF. The dynamic reduction function DR may be obtained by masking bits $\beta_j$ of occupancy configurations 500

$$\beta = \beta_1 \ldots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by

$$\beta' = DR^n(\beta) = \beta_1 \ldots \beta_{k_n(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable $NV(\beta')$ for all dynamically reduced occupancy configurations $\beta' = DR^n(\beta)$. The corresponding number (e.g., quantity) of visits $NV(\beta^V)$ may be increased by one, for example, after each instance of coding of an occupancy bit based on an occupancy configuration $\beta^V$. If this number (e.g., quantity) of visits $NV(\beta^V)$ is greater than a threshold $th_V$,

$$NV(\beta^{V'}) > th_V$$

then the number (e.g., quantity) of unmasked bits $k_n(\beta)$ may be increased by one for all occupancy configurations $\beta$ being dynamically reduced to $\beta^{V'}$. This corresponds to replacing the dynamically reduced occupancy configuration $\beta^{V'}$ by the two new dynamically reduced occupancy configurations $\beta^{0'}$ and $\beta^{1'}$ defined by

$$\beta^{0'} = \beta^{V'}0 = \beta^V_1 \ldots \beta^V_{k_n(\beta)}0 \quad \text{and} \quad \beta^{1'} = \beta^{V'}1 = \beta^V_1 \ldots \beta^V_{k_n(\beta)}1.$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero

$$NV(\beta^{0'}) = NV(\beta^{1'}) = 0. \qquad (I)$$

At the start of the coding, the initial number (e.g., quantity) of visits for the initial dynamic reduction function $DR^0$ may be set to

$$NV(DR^0(\beta)) = NV(0) = 0,$$

and the evolution of NV on dynamically reduced occupancy configurations may be entirely defined.

The corresponding LUT entry $LUT[\beta^{V'}]$ may be replaced by the two new entries $LUT[\beta^{0'}]$ and $LUT[\beta^{1'}]$ that are initialized by the coder index associated with $B^V$. The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$, for example, if a dynamically reduced occupancy configuration $\beta^{V'}$ is replaced by the two new dynamically reduced occupancy configurations $\beta^{0'}$ and $\beta^{1'}$,

$$LUT[\beta^{0'}] = LUT[\beta^{1'}] = LUT[\beta^{V'}], \qquad (II)$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR^0(\beta)$. The replacement of the dynamically reduced to $\beta^{V'}$ by $\beta^{0'}$ and $\beta^{1'}$ may correspond to growing the tree $T^n$ from the leaf node associated with $\beta^{V'}$, for example, by attaching to it two new nodes associated with $\beta^{0'}$ and $\beta^{1'}$. The tree $T^{n+1}$ may be

obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array $NV[\beta']$ and the $LUT[\beta']$ of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_i$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

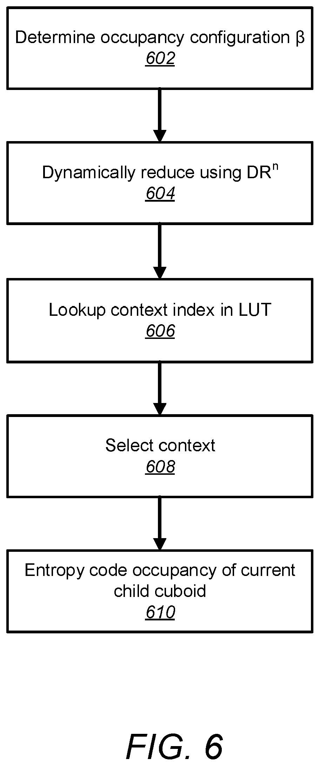

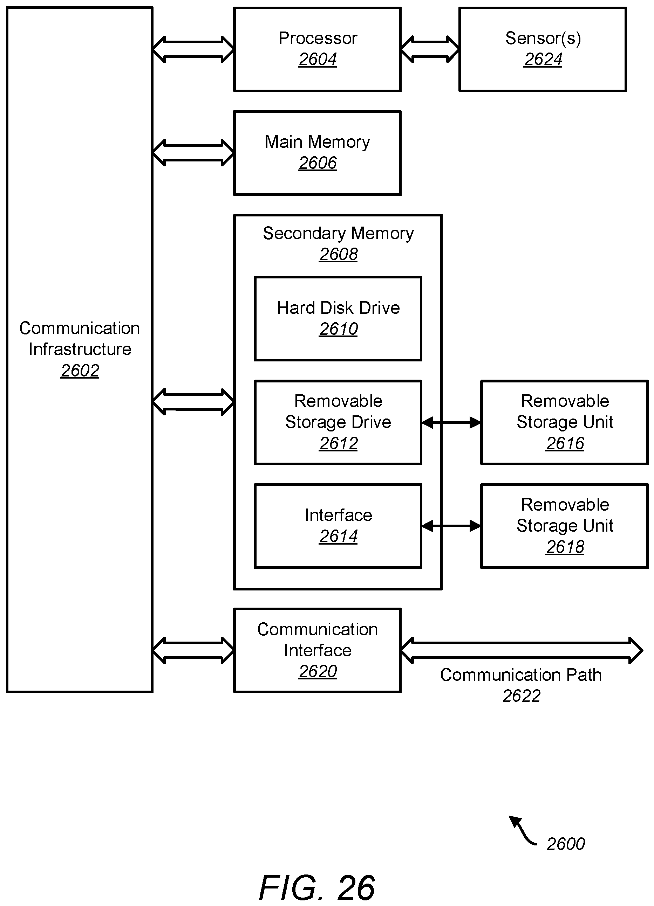

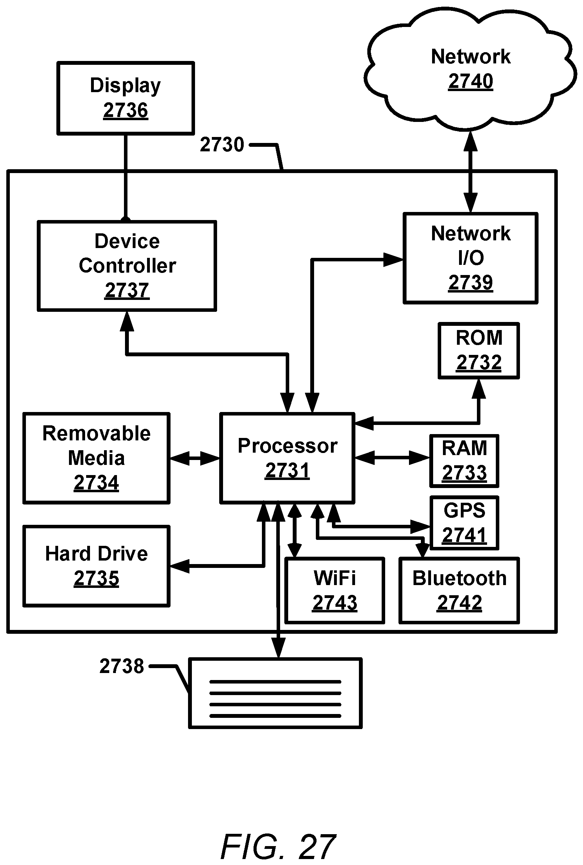

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 2600 in FIG. 26, and/or an example computing device 2730 in FIG. 27.

At step 602, an occupancy configuration (e.g., occupancy configuration $\beta$) of the current child cuboid may be determined. The occupancy configuration (e.g., occupancy configuration $\beta$) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function $DR^n$. For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index $LUT[\beta']$ in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index $LUT[\beta']$, for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

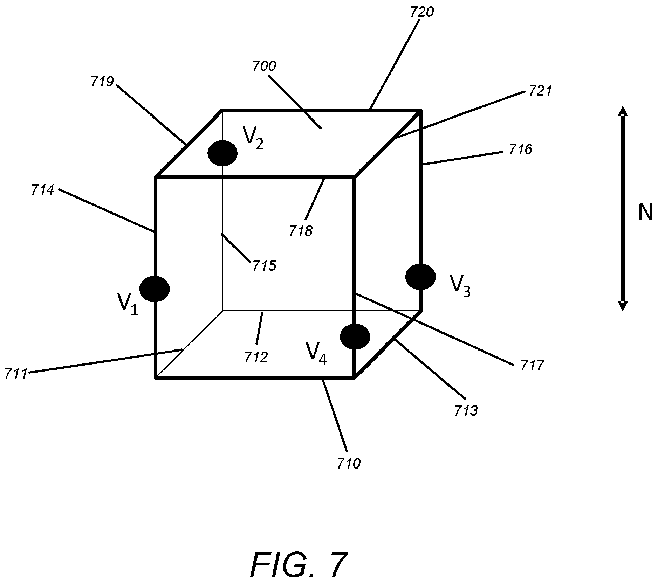

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. The neighborhood configuration $\beta_{TS}$ may be obtained, for example, based on presence flags ($s_k$) and positions ($p_k$) of vertices of neighboring already-coded edges of the current (TriSoup) edge and the occupancy of corresponding neighboring leaf nodes. A context index LUT[$\beta_{TS}'$] may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position ($p_k$) (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N. The TriSoup edge of length N may be uniformly divided into $2^{N_b}$ quantization intervals. By doing so, the TriSoup vertex position ($p_k$) may be represented by $N_b$ bits ($p_k^j$, j=1, ..., $N_b$) that may be individually coded by the dynamic OBUF scheme as well as the bit corresponding to the presence flag ($s_k$). The neighborhood configuration $\beta_{TS}$, the OBUF reduction function $DR^n$, and the context index may depend on the nature, characteristic, and/or property of the coded bit (e.g., a presence flag ($s_k$), a highest position bit ($p_{k1}$), a second highest position bit ($p_{k2}$), etc.) of the coded bit (e.g., presence flag ($s_k$), highest position bit ($p_k^1$), second highest position bit ($p_k^2$), etc.). There may practically be several dynamic OBUF schemes, each dedicated to a specific bit of information (e.g., presence flag ($s_k$) or position bit ($p_k^j$)) of the vertex information.

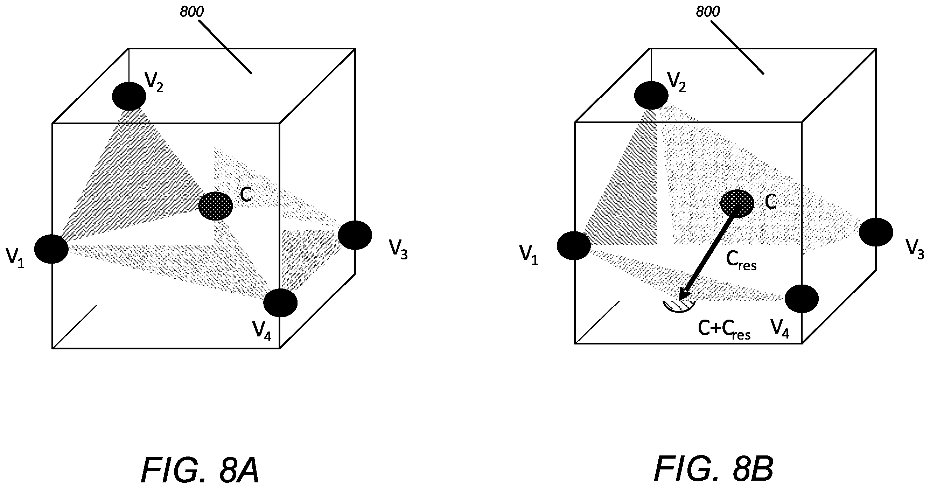

FIG. 8A shows an example cuboid 800 (e.g., a cube) corresponding to a TriSoup node. A cuboid 800 may correspond to a TriSoup node with a number K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C$, $V_2V_3C$, ..., $V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value. A centroid residual value $C_{res}$ may be coded into the bitstream. A centroid residual value $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

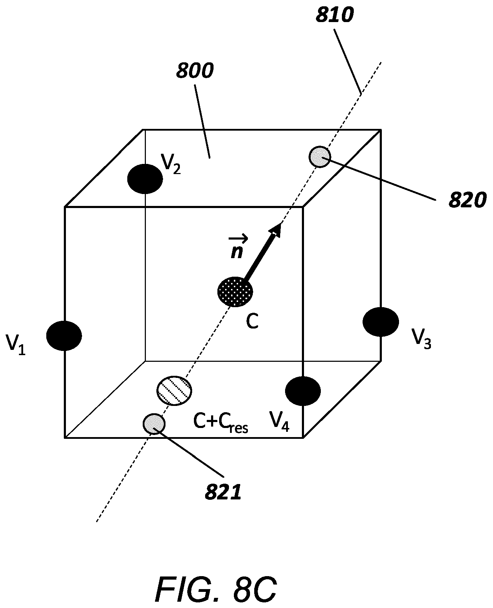

FIG. 8C shows an example of encoding a centroid residual value. An encoder may encode, for example, a centroid residual value $C_{res}$ into a bitstream. An adjusted centroid $C+C_{res}$ may be used instead of the centroid C for generating TriSoup triangles of a cuboid 800 (corresponding to a TriSoup node), for example, corresponding to a portion of a point cloud. The triangles may be generated based on the adjusted centroid $C+C_{res}$ and adjacent pairs of vertices of an ordering of the vertices $V_1$-$V_4$ (e.g., as described in FIG. 8A). The TriSoup triangles of the cuboid 800 may be voxelized (e.g., at the decoder), for example, to generate voxels representing (or modeling) the portion, of the point cloud, corresponding to the cuboid 800. The adjusted centroid $C+C_{res}$ may be used instead of the centroid C, for example, as a pivoting vertex for the triangles. A unitary vector $\vec{n}$ (e.g., also referred to as a unit vector or as a normalized vector) may be determined as a (normalized) mean and/or as a normalization of normal vectors to the triangles ($V_1V_2C$, $V_2V_3C$, ..., $V_KV_1C$). The triangles ($V_1V_2C$, $V_2V_3C$, ..., $V_KV_1C$) may be constructed by centroid C and pairs of the vertices of the cuboid 800, for example, by pivoting around the centroid C (e.g., as described in FIG. 8A). The unit vector $\vec{n}$ may be the normalized vector of the following mean of cross-products (e.g., representing areas of the triangles): $(\overrightarrow{V_1C} \times \overrightarrow{V_2C} + \overrightarrow{V_2C} \times \overrightarrow{V_3C} + \cdots + \overrightarrow{V_KC} \times \overrightarrow{V_1C})/K$. The unit vector $\vec{n}$ may be determined by dividing the mean vector (n) by the norm (or length) of the mean vector (i.e., $\vec{n} = n / \|n\|$).

A value resulting from each cross product is equal to an area of a parallelogram formed by the two vectors in the cross product. Therefore, the value may be representative of an area of a triangle formed by the two vectors because the area of the triangle is equal to half of the value. The unit vector $\vec{n}$ may be indicative of the direction normal to a local surface that is represented by the point cloud, for example, since the unit vector $\vec{n}$ indicates a direction of the triangles (e.g., TriSoup triangles) representing (e.g., modeling) the portion of the point cloud. A one-component residual $\alpha_{res}$ along the line $(C, \vec{n})$ 810 may be coded (e.g., encoded) instead of a 3D centroid residual value $C_{res}$, for example, to increase (e.g., maximize) the effect of the centroid residual value $C_{res}$ and/or to decrease (e.g., minimize) its coding cost. The 3D centroid residual value $C_{res}$ may be, for example, the one-component residual $\alpha_{res}$ multiplied by the unitary vector $\vec{n}$ (e.g., $C_{res} = \alpha_{res}\vec{n}$).

The encoder may determine the residual value $\alpha_{res}$. The encoder may determine the residual value of $\alpha_{res}$, for example, as the intersection between the current point cloud and the line $(C, \vec{n})$, which is along the same direction of the normalized vector $\vec{n}$. A set of points, of the portion of the point cloud, closest (e.g., within a threshold distance and/or a threshold number of/quantity of points) to the line may be determined. The set of points may be projected on the line and the residual value $\alpha_{res}$ may be the mean component along the line of the projected points. The mean may be a weighted mean, for example, whose weights may depend on a distance of the set of points from the line. A point from the set closer to the line may, for example, have a higher weight than another point from the set farther from the line.

The residual value $\alpha_{res}$ may be quantized. The residual value $\alpha_{res}$ may be quantized, for example, by a uniform quantization function that may have a quantization step similar to the quantization precision of the TriSoup vertices $V_k$. The quantization error may be uniform over all vertices $V_k$ and/or $C+C_{res}$ such that the local surface may be uniformly approximated.

The residual value $\alpha_{res}$ may be binarized and/or coded (e.g., entropy coded) into the bitstream. The residual value $\alpha_{res}$ may be binarized and/or coded (e.g., entropy coded) into the bitstream, for example, by using a typical unary-based (coding) scheme. The residual value $\alpha_{res}$ may be coded, for example, using a set of flags. A flag $f_0$ may be coded, for example, to indicate if the residual value $\alpha_{res}$ is equal to zero. If the flag $f_0$ indicates the residual value $\alpha_{res}$ is zero, no further syntax elements may be needed. If $\alpha_{res}$ is not equal to zero, a sign bit may be coded and/or the residual magnitude $|\alpha_{res}|$-1 may be coded using an entropy code. The residual magnitude may be coded, for example, using a unary scheme that may code successive flags $f_i$ ($i \geq 1$) indicating if the residual value magnitude $|\alpha_{res}|$ is equal to 'i'. A binary entropy coder may binarize the residual value $\alpha_{res}$ into the flags $f_i$ ($i \geq 0$). A binary entropy coder may entropy code the binarized residual value and/or the sign bit.

Compression of the residual value $\alpha_{res}$ may be improved. Compression of the residual value $\alpha_{res}$ may be improved, for example, by determining bounds as shown in FIG. 8C. The line $(C, \vec{n})$ 810 may intersect the current cuboid 800 (corresponding to a TriSoup node) at two bounding points 820 and 821. The encoder may ensure that the point $C+C_{res}$ (e.g., the adjusted centroid vertex) is located between the two bounding points 820 and 821. By ensuring that the point $C+C_{res}$ is located between the two bounding points 820 and 821, this implies bounds on the (quantized) residual value $\alpha_{res}$ such that the (quantized) residual value $\alpha_{res}$ may belong to an integral interval $[m, M]$, where $m \leq 0 \leq M$. Some bits of the binarized residual value $\alpha_{res}$ may be inferred. $A_{res}$ may be necessarily equal to zero, for example, if $m=M=0$. The sign bit may be necessarily positive, for example, if $m=0<M$. The magnitude of the residual value $|\alpha_{res}|$ may be bounded by either $|m|$ or $M$ such that the magnitude may be coded by a truncated unary (coding) scheme that may infer the value of the last of successive flags $f_i$ ($i \geq 1$), for example, if the residual value $\alpha_{res}$ is not equal to zero and its sign is known.

The coder (e.g., the binary entropy coder) used to code the binarized residual value $\alpha_{res}$ may be a context-adaptive binary arithmetic coder (CABAC). The probability model (or context or entropy coder) used to code at least one bit ($f_i$ or sign bit) of the binarized residual value $\alpha_{res}$ may be updated, for example, depending on the value of the at least one bit ($f_i$ or sign bit) of the binarized residual value $\alpha_{res}$. The probability model of the coder (e.g., the binary entropy coder) may be determined, for example, based on contextual information. The contextual information may comprise the values of the bounds m and M, the location of vertices $V_k$, and/or the size of the TriSoup node (e.g., the cuboid 800). The selection of the coder (or the selection of the probability model of the coder) may be performed by a dynamic OBUF scheme that may use the contextual information described herein as entry (e.g., inputs).

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

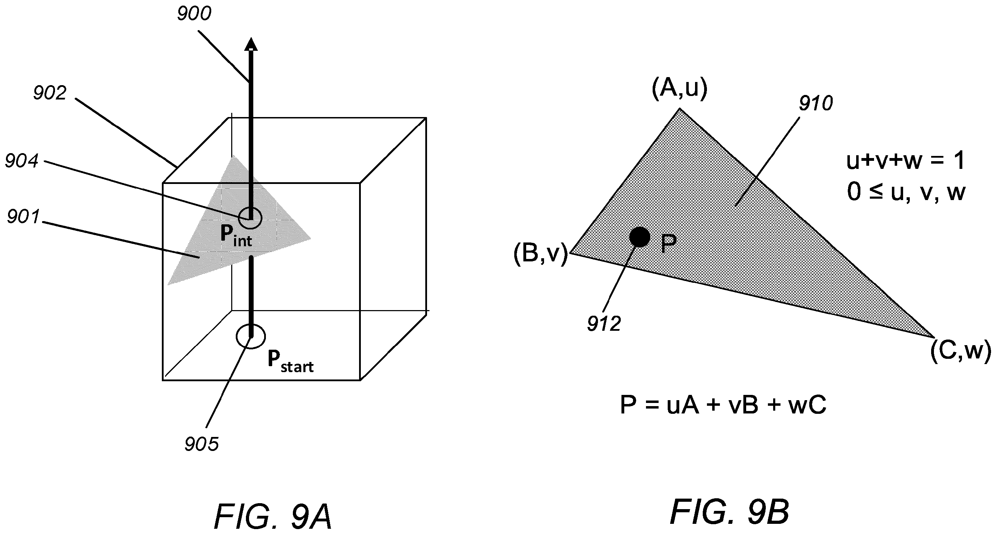

FIG. 9A shows an example of voxelization using ray tracing. Ray-triangle intersection algorithms, such as the Möller-Trumbore algorithm, may take advantage of launching rays, for example, to determine whether rays intersect with TriSoup triangles and if so, at what points of the TriSoup triangles. Rays may be launched from integral coordinates that correspond to the centers of voxels. As shown in FIG. 9A, rays, for example, ray 900 may be launched substantially parallel to one of the three coordinate axes of the 3D space, starting from integral coordinates (sometimes referred to as integer coordinates) such as an origin point 905 (shown as origin or starting point $P_{start}$ in FIG. 9A).

An intersection point 904 (shown as $P_{int}$ in FIG. 9A), if any, between ray 900 and a TriSoup triangle 901 belonging to a cube 902, corresponding to a TriSoup node, may be rounded (or, e.g., quantized) to obtain a decoded point corresponding to a voxel. A ray, for example, launched substantially parallel to a coordinate axis in 3D space, may intersect a TriSoup triangle. The ray may intersect the TriSoup triangle, for example, if and only if the projection, along the ray direction, of the center of a voxel belongs to the TriSoup triangle. In other words, the ray may be determined to intersect the TriSoup triangle if the point of intersection corresponds to the center of the voxel. This intersection may be determined, for example, by using a ray-triangle intersection algorithm (e.g., tracing or ray casting technique) such as the Möller-Trumbore algorithm to generate voxels representing the triangle.

Ray tracing techniques such as the Möller-Trumbore algorithm is based on generating, with respect to a triangle, barycentric coordinates of points of intersection between rays and a plane of the triangle. Then, points of the triangle may be determined from the barycentric coordinates.

FIG. 9B shows an example of voxelization using barycentric coordinates. More particularly, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). The ray may be launched, for example, substantially parallel to one of the three coordinate axes in 3D space. In some examples, this intersection point 912 may be uniquely represented as a sum of the three vertices of TriSoup triangle 910:

$$P = uA + vB + wC$$

under the condition u + v + w = 1. Therefore, any point P of the plane (containing TriSoup triangle 910) has unique coordinates (u,v,w) in the barycentric coordinate system. A point with barycentric coordinates (u,v,w) may include an ordered triple of numbers u, v, and w. A point with barycentric coordinates (u,v,w) that sum to 1 (e.g., u + v +w = 1) may be referred to as homogeneous barycentric coordinates and/or normalized barycentric coordinates. The barycentric coordinates of the intersection point with respect to TriSoup triangle 910 may be determined using algorithms, for example, the Möller-Trumbore algorithm.

By converting points with Cartesian coordinates in 3D space to homogeneous barycentric coordinates, the three vertices A, B, C of TriSoup triangle 910 may comprise respective barycentric coordinates A(1,0,0), B(0,1,0) and C(0,0,1). The convex hull (e.g., the TriSoup triangle 910) of the three vertices A, B, and C may be equal to the set of all points such that the barycentric coordinates u, v, and w is each greater than or equal to zero:

$$0 \leq u, v, w$$

Therefore, the intersection point may be determined to belong to TriSoup triangle 910, for example, based on the intersection point having barycentric coordinates with an ordered triple of values that are each greater than or equal to zero. Relatedly, if at least one of barycentric coordinates (i.e., one of u, v, or w) is negative or less than 0, then the intersection point may be determined to not belong to TriSoup triangle because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

Presence flags ($s_k$) and positions ($p_k$) of TriSoup vertices on TriSoup edges can be efficiently entropy coded using neighboring information of neighboring (e.g., already-coded) TriSoup edges (e.g., already-coded flags and positions of TriSoup vertices) and the occupancy of cuboids neighboring leaf nodes and/or the TriSoup edges. Specifically, a presence flag ($s_k$) and, if the presence flag ($s_k$) indicates the presence of a vertex, a position ($p_k$) of the vertex along a current TriSoup edge may be entropy coded based on already-coded presence flags and positions (of present TriSoup vertices) of TriSoup edges, for example, that neighbor the current TriSoup edge. A presence flag ($s_k$) and, if the presence flag ($s_k$) indicates the presence of a vertex, a position ($p_k$) on (e.g., indicating a position of the vertex along) a current TriSoup edge may be additionally or alternatively entropy coded based on occupancies of cuboids, for example, that neighbor the current TriSoup edge. The presence flag ($s_k$) and position ($p_k$) may be individually or collectively referred to as vertex information. Similar to the entropy coding of the occupancy bits (e.g., binary information) of the occupancy tree, a configuration βTS for a neighborhood (also referred to as a neighborhood configuration βTS) of a current TriSoup edge may be obtained and dynamically reduced into a reduced configuration βTS' = DRn(βTS), for example, by using a dynamic OBUF scheme for TriSoup. A context index LUT[βTS'] may be obtained from the OBUF LUT and at least a part of the vertex information of the current TriSoup edge may be entropy coded, for example, using the context (also referred to as probability model or entropy coder) pointed to by the context index.

The TriSoup vertex position ($p_k$) (if present) along its TriSoup edge may be binarized, for example, for use of a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N that is uniformly divided into $2^{Nb}$ quantization intervals. By doing so, the TriSoup vertex position ($p_k$) may be represented by $N_b$ bits ($p_k^j$, j = 1,... ,$N_b$) that may be individually coded by the dynamic OBUF scheme as well as the bit corresponding to the presence flag ($s_k$). The neighborhood configuration $β_{TS}$, the OBUF reduction function $DR^n$, and thus, the context index may depend on the nature/characteristic/property of the coded bit (presence flag ($s_k$), highest position bit ($p_k^1$), second highest position bit ($p_k^2$), etc.). There may be several dynamic OBUF schemes implemented, for example, with each dedicated to a specific bit of information (presence flag ($s_k$) or position bit ($p_k^j$)) of the vertex information.

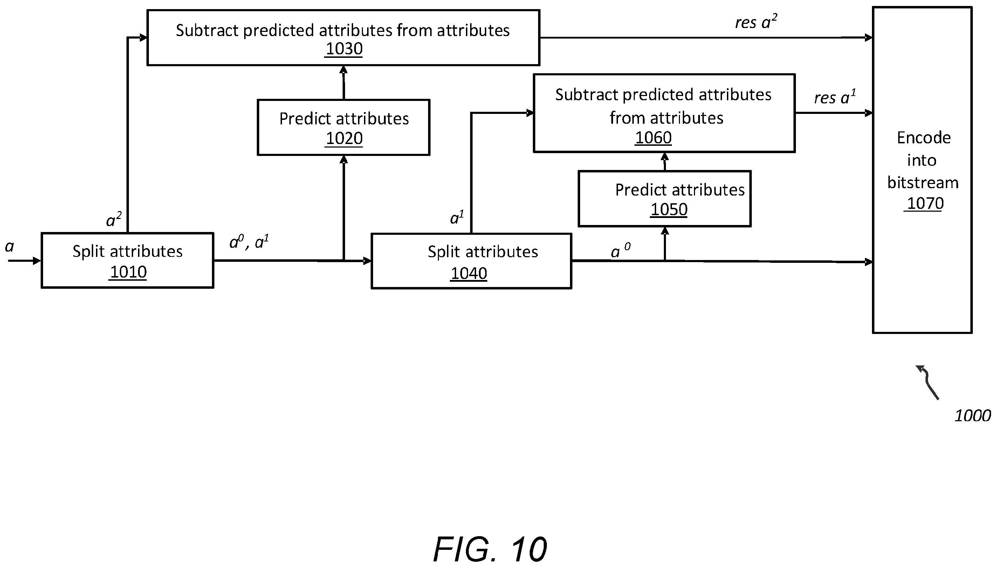

FIG. 10 shows an example method for encoding point cloud attributes. The encoding may be based on a prediction transform scheme. One or more steps of FIG. 10 may be performed by an encoder (e.g., the encoder 114 in FIG. 1).

A set 'a' of attributes may be coded, for example, using prediction for and between one or more (e.g., three) levels of details, from a highest (e.g., first predicted) level of details (e.g., associated with highest frequencies such as res $a^2$) to a lowest (e.g., third) level of details (e.g., associated with lowest frequencies such as $a^0$). At step 1010, an encoder may split a set 'a' of attributes into a first set of attributes comprising the attributes of the subset $a^2$ and a second set of attributes comprising the attributes of the two subsets $a^0$ and $a^1$. At step 1020, the encoder may determine predictive values of the attributes of the first set of attributes ($a^2$) from the attributes of the second set of attributes ($a^0$ and $a^1$). At step 1030, the encoder may determine first residual values 'res $a^2$'. The encoder may determine first residual values 'res $a^2$', for example, by subtracting the predictive values from the attributes of the first set of attributes ($a^2$). At step 1070, the encoder may encode the first residual values 'res $a^2$' into the bitstream. The operations at steps 1020-1030 may be iteratively used for (e.g., applied to) each successively lower (e.g., coarser) LoD.

At step 1040, the encoder may split the second set of attributes ($a^0$ and $a^1$) into a third set of attributes and a fourth set of attributes. The third set of attributes may comprise the attributes of the subsets $a^1$. The fourth set of attributes may comprise the attributes of the subset $a^0$. At step 1050, the encoder may determine predictive values of the attributes of the third set of attributes ($a^1$) from the attributes of the fourth set of attributes ($a^0$). At step 1060, the encoder may determine second residual values 'res $a^1$'. The encoder may determine second residual values 'res $a^1$', for example, by subtracting predictive values from the attributes of the third set ($a^1$). At step 1070, the encoder may encode the second residual values 'res $a^1$' into the bitstream. The encoder may encode the attributes of the fourth set of attributes ($a^0$) into the bitstream.

The bitstream may comprise data representative of first residual values 'res $a^2$', second residual values 'res $a^1$', and/or the attributes of the subset $a^0$ (e.g., the fourth set of attributes). At step 1070, the residual values may be entropy coded. The encoder may encode the attributes of the subset $a^0$ into the bitstream. Additionally or alternatively, the encoder may perform intra prediction of a current attribute $a^0_j$ of the subset $a^0$ to be coded. The encoder may perform intra prediction of a current attribute $a^0_j$ of the subset $a^0$ to be coded, for example, based on already-coded attributes of the subset $a^0$. This may improve the compression efficiency of the attributes of the subset $a^0$.

The encoder may quantize the attributes of the subset $a^0$, the first residual value 'res $a^2$', and/or the second residual value 'res $a^1$', for example, if lossy attribute coding is allowed. The encoder may encode (e.g., entropy encode), into the bitstream, the attributes of the subset $a^0$ (or the quantized attributes of the subset $a^0$), the first residual value 'res $a^2$' (or the quantized first residual values 'res $a^2$'), and/or the second residual value 'res $a^1$' (or the quantized second residual value 'res $a^1$').

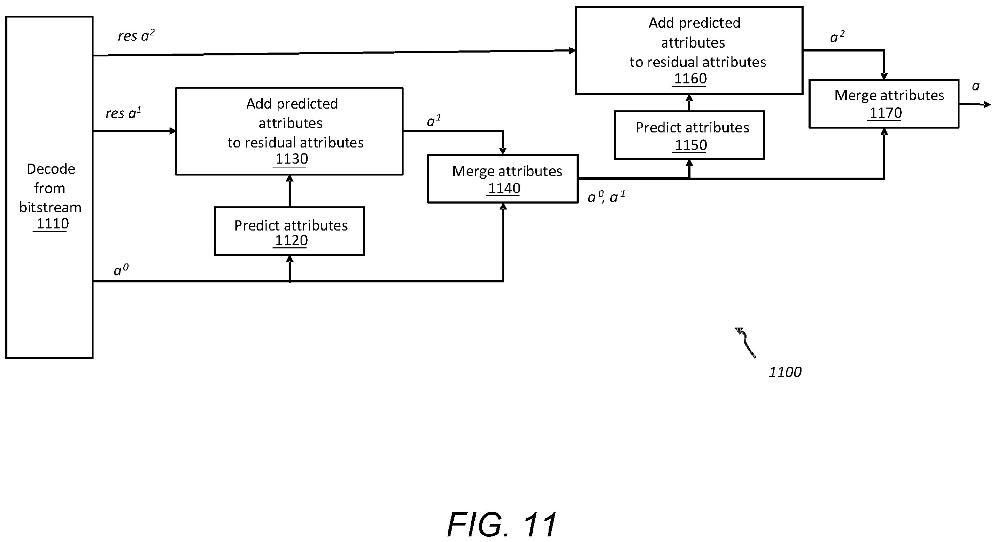

FIG. 11 shows an example method for decoding point cloud attributes. The decoding may be based on a prediction transform scheme. One or more steps of FIG. 11 may be performed by a decoder (e.g., the decoder 120 in FIG.

1). A set 'a' of attributes may be decoded. The set of 'a' attributes may be encoded, for example, as described herein with respect to FIG. 10. The decoding may use prediction between one or more (e.g., three) levels of details, from a lowest (e.g., third) level of details to a highest (e.g., first) level of details (e.g., in reverse order of the encoder described herein with respect to FIG. 10).

At step 1110, the decoder may decode the first residual values 'res $a^2$', the second residual values 'res $a^1$', and/or attributes of a fourth set of attributes ($a^0$) from the bitstream. The decoder may use (e.g., apply) dequantization (e.g., for lossy compression). At step 1120, the decoder may determine predictive values of the attributes of a third set of attributes ($a^1$) from the decoded attributes of the fourth set of attributes ($a^0$). The decoder may determine the predictive values, for example, in a way similar to that described with respect to step 1050 of FIG. 10. At step 1130, the decoder may determine decoded attributes of the third set of attributes ($a^1$), for example, by adding the predictive values to the decoded first residual values 'res $a^1$'. The operations at steps 1120-1130 may be iteratively used for (e.g., applied to) each successively higher (e.g., finer) LoD.

At step 1140, the decoder may determine a second set of attributes ($a^0$ and $a^1$). The decoder may determine a second set of attributes ($a^0$ and $a^1$), for example, by merging the third set of attributes ($a^1$) and the fourth set of attributes ($a^0$). Step 1140 may be an inverse of step 1040. At step 1150, the decoder may determine predictive values of the attributes of a first set of attributes ($a^2$) from the attributes of the second set of attributes ($a^0$ and $a^1$). The decoder may determine predictive values in a way similar to that described with respect to step 1020. At step 1160, the decoder may determine decoded attributes of the first set of attributes ($a^2$), for example, by adding the predictive values to the decoded second residual values 'res $a^2$'. At step 1170, the decoder may determine the set 'a' of decoded attributes for the coded geometry S (e.g., the whole coded geometry S), for example, by merging the first set of attributes ($a^2$) and the second set of attributes ($a^0$ and $a^1$). Step 1170 may be an inverse of step 1010.

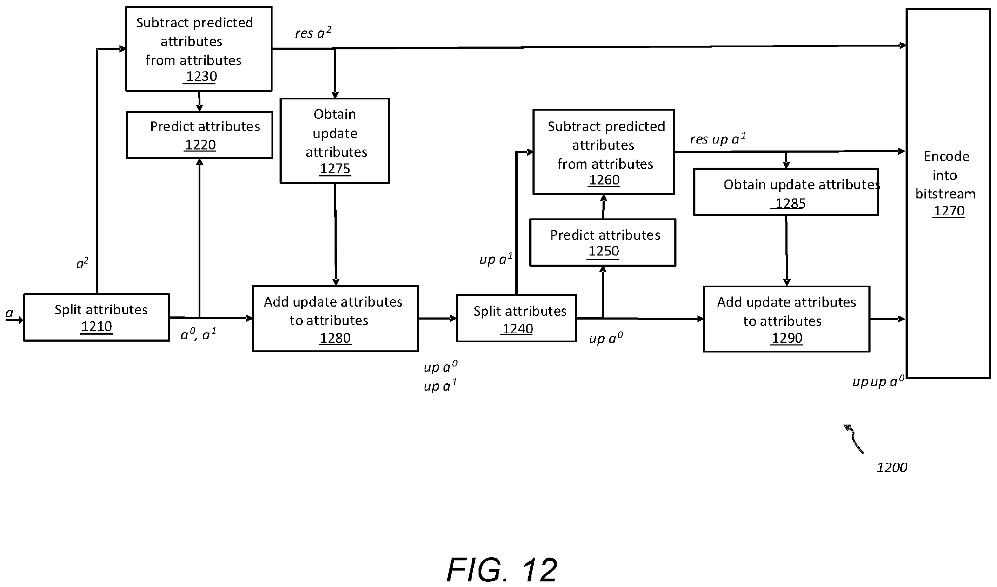

FIG. 12 shows an example method for encoding point cloud attributes. The encoding may be based on a pred-lift transform scheme with prediction and update. One or more steps of FIG. 12 may be performed by an encoder (e.g., the encoder 114 in FIG. 1). A set 'a' of attributes may be encoded using prediction between one or more (e.g., three) levels of details, from a highest (e.g., first) level of details (e.g., associated with highest frequencies such as res $a^2$) to a lowest (e.g., third) level of details (e.g., associated with lowest frequencies such as up up $a^0$).

At step 1210, an encoder may split a set 'a' of attributes into a first set of attributes comprising the attributes of the subset $a^2$ and a second set of attributes comprising the attributes of the two subsets $a^0$ and $a^1$. Step 1210 may be performed similar to that described herein with respect to step 1010 of FIG. 10. At step 1220, the encoder may determine predictive values of the attributes of the first set of attributes ($a^2$) from the attributes of the second set of attributes ($a^0$ and $a^1$). Step 1220 may be performed similar to that described herein with respect to step 1020. At step 1230, the encoder may determine first residual values 'res $a^2$', for example, by subtracting predictive values from the attributes of the first set of attributes ($a^2$). Step 1230 may be performed similar to that described herein with respect to step 1030. At step 1270, the encoder may encode the first residual values 'res $a^2$' into the bitstream. Step 1270 may be performed similar to that described herein with respect to step 1070.

At step 1275, the encoder may determine update attribute values from the first residual values 'res $a^2$'. The encoder may determine an update attribute value, for example, based on a first residual value. The update attribute value may be determined as the first residual value multiplied by a scaling factor (e.g., ½, ¼, 1/8) that may be predetermined or signaled in the bitstream. At step 1280, the encoder may update attribute values 'up $a^0$' and 'up $a^1$' of the second set of attributes ($a^0$ and $a^1$) by adding the update attribute values to the attribute values of the second set of attributes ($a^0$ and $a^1$). The operations at steps 1220, 1230, 1275, and 1280 may be iteratively used for (e.g., applied to) each successively lower (e.g., coarser) LoD.

At step 1240, the encoder may split the second set of attributes ($a^0$ and $a^1$) into a third set of attributes and a fourth set of attributes. The third set of attributes may comprise the updated attribute values 'up $a^1$' of the subset $a^1$. The fourth set of attributes may comprise the updated attribute values 'up $a^0$' of the subset $a^0$. At step 1250, the encoder may determine predictive values of the updated attribute values 'up $a^1$' of the third set of attributes ($a^1$) from the updated attribute values 'up $a^0$' of the fourth set of attributes ($a^0$). At step 1260, the encoder may determine third residual values 'res up $a^1$', for example, by subtracting predictive values from the updated attribute values 'up $a^1$' of the third set of attributes ($a^1$). At step 1270, the encoder may encode the third residual values 'res up $a^1$' into the bitstream. At step 1285, the encoder may determine update attribute values from the third residual values 'res up $a^1$'. At step 1290, the encoder may determine further updated attribute values 'up up $a^0$' of the fourth set of attributes ($a^0$), for example, by adding the update attribute values to the updated attribute values 'up $a^0$' of the fourth set of attributes ($a^0$). At step 1270, the encoder may encode the further updated attribute values 'up up $a^0$' of the fourth set of attributes ($a^0$) into the bitstream.

The bitstream may comprise data representative of transformed attributes (e.g., data representative of the first residual values 'res $a^2$', third residual values 'res up $a^1$' and/or further updated attribute values 'up up $a^0$' of the fourth set of attributes). The encoder may encode the further updated attribute values 'up up $a^0$' of the fourth set of attributes into the bitstream. The encoder may perform intra prediction of a current further updated attribute values 'up up $a^0_j$' to be coded, for example, based on already-coded attributes of the fourth set of attributes. This may improve the compression efficiency of the further updated attribute values 'up up $a^0$' of the fourth set of attributes.

The encoder may quantize the further updated attribute values 'up up $a^0$' of the fourth set of attributes, the first residual value 'res $a^2$' and/or the third residual value 'res up $a^1$', for example, if lossy attribute coding is allowed. The encoder may entropy encode into the bitstream the further updated attribute values 'up up $a^0$' of the fourth set of attributes, the first residual value 'res $a^2$' (or the quantized first residual values 'res $a^2$'), and/or the third residual value 'res up $a^1$' (or the quantized third residual value 'res up $a^1$').

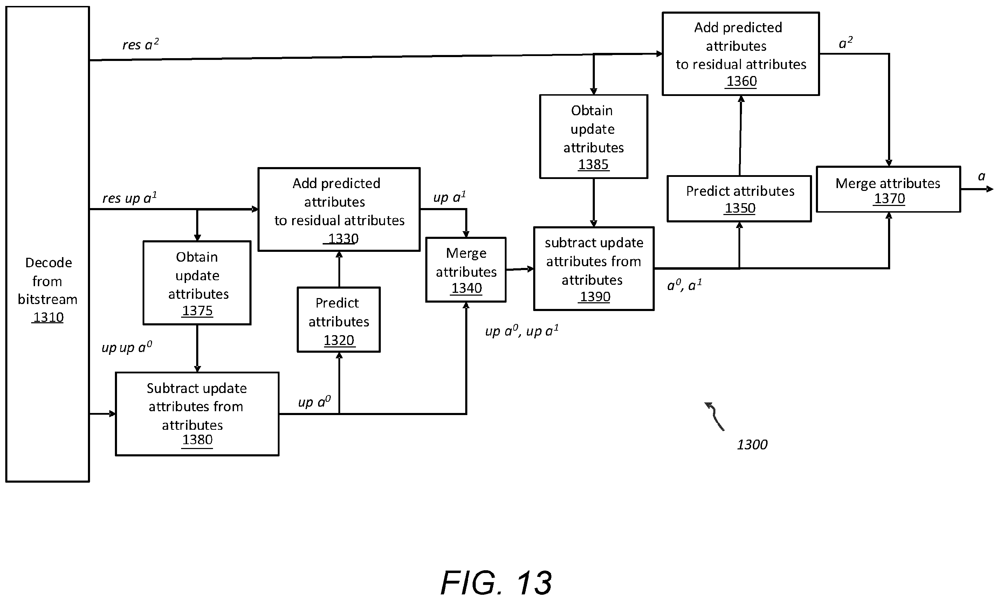

FIG. 13 shows an example method for decoding point cloud attributes. The decoding may be based on a pred-lift transform scheme with prediction and update. One or more steps of FIG. 13 may be performed by a decoder (e.g., the decoder 120 in FIG. 1). A set of 'a' attributes may be encoded as described herein with respect to Fig. 12. The set 'a' of attributes (e.g., encoded set 'a' of attributes) may be decoded. The decoding may use prediction between one or more (e.g., three) levels of details, from a lowest (e.g., third) level of details to a highest (e.g., first) level of details (in reverse order of the encoder described herein with respect to FIG. 12).

At step 1310, the decoder may decode the first residual values 'res $a^2$', the third residual values 'res up $a^1$', and/or further updated attribute values 'up up $a^0$' of a fourth set of attributes ($a^0$) from the bitstream. The decoder may use (e.g., apply) an optional dequantization for lossy compression. At step 1375, the decoder may determine update attribute values from the decoded third residual values 'res up $a^1$'. Step 1375 may be performed in a manner similar to that described herein with respect to step 1285. The decoder may determine an update attribute value based on the third residual values. The update attribute value may be determined as the third residual values multiplied by a scaling factor (e.g., ½, ¼, 1/8) that may be predetermined or signaled in the bitstream.

At step 1380, the decoder may determine updated attribute values 'up $a^0$' of the fourth set of attributes ($a^0$), for example, by subtracting the update attribute values from the decoded further updated attribute values 'up up $a^0$' of the fourth set of attributes ($a^0$). At step 1320, the decoder may determine predictive values of the updated attribute values 'up $a^1$' of a third set of attributes ($a^1$) from the updated attribute values 'up $a^0$' of the fourth set of attributes ($a^0$). Step 1320 may be performed in a similar manner as described herein with respect to step 1250. At step 1330, the decoder may determine updated attribute values 'up $a^1$' of the third set of attributes ($a^1$), for example, by adding the predictive values to the decoded third residual values 'res up $a^1$'. At step 1340, the decoder may determine a second set of attributes ($a^0$ and $a^1$), for example, by merging the third set of attributes ($a^1$) and the fourth set of attributes ($a°$). Step 1340 may be an inverse of step 1240. The second set of attributes ($a^0$ and $a^1$) may comprise updated attribute values 'up $a^0$' and updated attribute values 'up $a^1$'. At step 1385, the decoder may determine update attribute values from the decoded first residual values 'res $a^2$'. Step 1385 may be performed in a manner similar to that as described herein with respect to step 1275. The operations at steps 1320, 1330, 1340, 1375, and 1380 may be iteratively used for (e.g., applied to) each successively higher (e.g., finer) LoD.

At step 1390, the decoder may determine attribute values '$a^0$' and attribute values '$a^1$' of the second set of attributes ($a^0$ and $a^1$), for example, by subtracting the update attribute values from the updated attribute values 'up $a^0$' and from updated attribute values 'up $a1$' of the second set of attributes ($a^0$ and $a^1$). At step 1350, the decoder may determine predictive values of the attributes of a first set of attributes ($a^2$) from the attributes of the second set of attributes ($a^0$ and $a^1$). Step 1350 may be performed in a manner similar to that described herein with respect to step 1220. At step 1360, the decoder may determine decoded attributes of the first set of attributes ($a^2$), for example, by adding the predictive values to the decoded second residual values 'res $a^2$'. At step 1370, the decoder may determine the set 'a' of decoded attributes for the coded geometry S (e.g., the whole coded geometry), for example, by merging the first set of attributes ($a^2$) and the second set of attributes ($a^0$ and $a^1$). Step 1370 may be an inverse of step 1210.

Pred-lift schemes may be similar to the lifting scheme used for (e.g., applied to) wavelets in image coding. A pre-lift scheme may comprise update steps that are not in prediction transform scheme (e.g., in addition to the prediction steps in the prediction transform scheme). The update steps may provide better compression performance (e.g., in combination with the prediction steps). This may compact the energy in the lowest level of details, which may reduce distortion with lossy coding.

Attributes may be coded using the RAHT scheme. The RAHT scheme may be based on the iterative use of a two-point transform. In point cloud attribute coding, the two-point RAHT transform may be based on (e.g., applied to) two sets ($A_1$ and $A_2$) of attributes. Each of $A_1$ and $A_2$ may have respectively $w_1$ and $w_2$ number of attributes. Each of $A_1$ and $A_2$ may have respective associated coefficients $c_{A1}$ and $c_{A2}$. Each of $c_{A1}$ and $c_{A2}$ is representative of the sum of attribute values over the corresponding set divided by the square root of the number of attributes.

$$c_{Ai} = \frac{1}{\sqrt{w_i}}\sum_{a \in A_i} a. \qquad (w_i = \#A_i) \qquad (*)$$

The two-point RAHT transform may depend on the weights $w_1$ and $w_2$. The two-point RAHT transform may be defined by a 2x2 matrix as follows

$$\mathrm{RAHT}(w_1, w_2) = \frac{1}{\sqrt{w_1+w_2}} \begin{bmatrix} \sqrt{w_1} & \sqrt{w_2} \\ -\sqrt{w_2} & \sqrt{w_1} \end{bmatrix}.$$

Two new coefficients DC and AC may be determined, for example, if used for (e.g., applied to) the two coefficients $c_{A1}$ and $c_{A2}$.

$$\begin{bmatrix} DC \\ AC \end{bmatrix} = \mathrm{RAHT}(w_1, w_2) \begin{bmatrix} c_{A1} \\ c_{A2} \end{bmatrix}$$

As described herein, the above property (*) on coefficients may hold for the DC coefficient.

$$DC = \frac{1}{\sqrt{w_1 + w_2}} \left( \sqrt{w_1} c_{A1} + \sqrt{w_2} c_{A2} \right) = \frac{1}{\sqrt{w_1 + w_2}} \left( \sum_{a \in A_1} a + \sum_{a \in A_2} a \right) = \frac{1}{\sqrt{w_1 + w_2}} \sum_{a \in A_1 \cup A_2} a = c_{A1 \cup A2}$$

The two point RAHT transform may be iteratively based on (e.g., applied to) DC coefficients. This may be referred to as the RAHT iterative method. AC coefficients may not undergo further transformation, for example, after being determined. At the start of the RAHT iterative method, there may be as many initial sets $A_i$ of attributes as there are points in the coded geometry S. Each initial set $A_i$ of attributes may contain one attribute ($w_i$=1). The coefficient $c_{Ai}$ may be equal to the value of the one attribute, and/or may fulfill the property (*). By induction, the property (*) may hold for subsequent DC coefficients (e.g., all subsequent DC coefficients) determined, for example, after iterative application of the two point RAHT transform.

At a particular stage of the RAHT iterative method, determined coefficients may be the union of a set of DC coefficients fulfilling the property (*) and a set of AC coefficients. The RAHT iterative method may continue until DC coefficients are depleted and only one DC coefficient may be left. The one DC coefficient may be equal to $C_A$ where A may be the set of attributes (e.g., all attributes) associated with the coded geometry S (e.g., the complete coded geometry S). The RAHT iterative method may follow an order among pairs of DC coefficients.

The two-point inverse RAHT transform may be defined by a 2x2 matrix as follows

$$\mathrm{iRAHT}(w_1, w_2) = \frac{1}{\sqrt{w_1 + w_2}} \begin{bmatrix} \sqrt{w_1} & -\sqrt{w_2} \\ \sqrt{w_2} & \sqrt{w_1} \end{bmatrix}$$

The two-point inverse RAHT transform may be used with respect to (e.g., applied to) DC and AC coefficients for obtaining back the two coefficients $c_{A1}$ and $c_{A2}$.

$$\begin{bmatrix} c_{A1} \\ c_{A2} \end{bmatrix} = \mathrm{iRAHT}(w_1, w_2) \begin{bmatrix} DC \\ AC \end{bmatrix}$$

The inverse iterative RAHT method may use (e.g., apply) the inverse two-point RAHT to DC and AC coefficient in reverse order relative to their obtention by the iterative RAHT method. At the end of the inverse iterative RAHT method, coefficients $c_{Ai}$ associated with the initial sets $A_i$ of attributes may be obtained. These coefficients $c_{Ai}$ may be equal to the values of the one attribute associated with the initial sets $A_i$.

For lossy RAHT compression of attributes, coefficients may be further compressed based on using (e.g., applying) a quantization to the DC and AC coefficients, for example, before encoding in the bitstream. The decoder may use (e.g., apply) a dequantization, for example, after decoding of the quantized DC and AC coefficients from the bitstream.

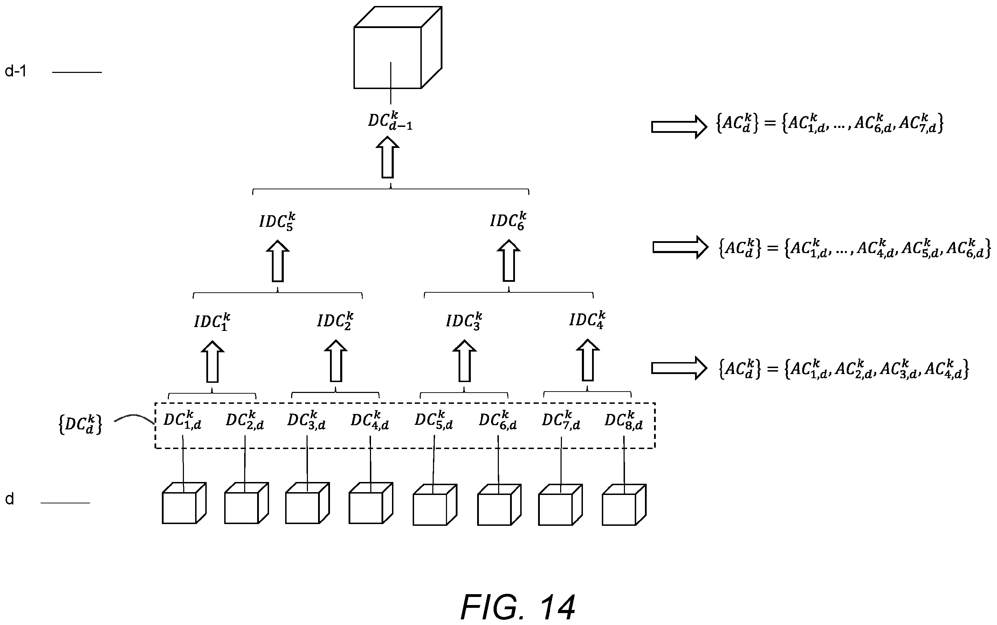

The RAHT iterative method may follow a tree data structure (e.g., an octree) as a specific iterative order (e.g., shown in FIGS. 14-17), for example, in G-PCC. The tree (e.g., octree) may represent the geometry of the colored point cloud. The tree (e.g., octree) may be an occupancy tree, for example, representing occupancy nodes of the tree. One or more (e.g., up to eight) DC coefficients, associated with one or more (e.g., up to eight) occupied child nodes of a parent node in the octree, may undergo a cascade of two-point RAHT transformations until one DC coefficient remains, together with the remaining (e.g., up to seven) AC coefficients. This one DC coefficient may be pushed at parent node level. The method may be repeated at upper octree depth, for example, until the root node is reached.

FIG. 14 shows an example RAHT transformation based on (e.g., applied to) an octree. The RAHT transformation may be based on (e.g., applied to) eight occupied child nodes at depth 'd' of an octree parent node at depth d-1. The eight DC coefficients $\{DC_{i,d}^{k}\}$ (i=1,...,8) associated with the eight occupied child nodes may undergo a cascade of two-point RAHT transformations, for example, until one (e.g., a single) DC coefficient $DC_{d-1}^{k}$ remains, together with up to a set $\{AC_d^k\}$ of seven AC coefficients $\{AC_{j,d}^k\}$ (j=1,...,7), wherein $DC_{i,d}^k$ indicates a DC coefficient at depth d relative to a color component k and $\{AC_{j,d}^k\}$ indicates an AC coefficient at depth d relative to a color component k. The RAHT transformation may be based on (e.g., applied to) one or more (e.g., up to eight) occupied child nodes of a parent node, for example, the eight occupied child nodes shown in FIG. 14. The number of obtained AC coefficients $\{AC_{j,d}^k\}$ (j=1,...,N$_{occChild}$-1) is equal to the number N$_{occChild}$ of occupied child nodes minus one.

A first two-point RAHT transformation may determine (e.g., at a first step in FIG. 14) AC coefficients for the set of AC coefficients. The first two-point RAHT transformation may determine one or more AC coefficients for the set of AC coefficients, for example, such that the set of AC coefficients $\{AC_d^k\}$ comprises four AC coefficients (e.g., $\{AC_d^k\} = \{AC_{1,d}^k, AC_{2,d}^k, AC_{3,d}^k, AC_{4,d}^k\}$ shown in FIG. 14). The first two-point RAHT transformation may be based on (e.g., applied to) the DC coefficients $DC_{1,d}^k$ and $DC_{2,d}^k$. The first two-point RAHT transformation may determine one intermediate DC coefficient $IDC_1^k$ and one AC coefficient $AC_{1,d}^k$. The AC coefficient $AC_{1,d}^k$ may be added to the set of AC coefficients $\{AC_d^k\}$. The first two-point RAHT transformation may be based on (e.g., applied to) the DC coefficients $DC_{3,d}^k$ and $DC_{4,d}^k$. The first two-point RAHT transformation may determine one intermediate DC coefficient $IDC_2^k$ and one AC coefficient $AC_{2,d}^k$. The AC coefficient $AC_{2,d}^k$ may be added to the set of AC coefficients $\{AC_d^k\}$. The first two-point RAHT transformation may determine the remaining AC coefficients (e.g., AC coefficients $\{AC_{3,d}^k, AC_{4,d}^k\}$) using the same process described herein. The first two-point RAHT transformation may be a first two-point RAHT transformation in the cascade of two-point RAHT transformations.

A second two-point RAHT transformation may determine (e.g., at a second step in FIG. 14) AC coefficients for the set of AC coefficients. The second two-point RAHT transformation may determine AC coefficients for the set of AC coefficients, for example, such that the set of AC coefficients $\{AC_d^k\}$ comprises six AC coefficients (e.g., $\{AC_d^k\} = \{AC_{1,d}^k, ..., AC_{4,d}^k, AC_{5,d}^k, AC_{6,d}^k\}$ shown in FIG. 14). The second two-point RAHT transformation may be based on (e.g., applied to) the intermediate DC coefficients $IDC_1^k$ and $IDC_2^k$. The second two-point RAHT transformation may determine one intermediate DC coefficient $IDC_{5,d}^k$ and one AC coefficient $AC_{5,d}^k$. The AC coefficient $AC_5^k$ may be added to the set of AC coefficients $\{AC_d^k\}$. The second two-point RAHT transformation may be based on (e.g., applied to) the intermediate DC coefficients $IDC_3^k$ and $IDC_4^k$. The second two-point RAHT transformation may determine one intermediate DC coefficient $IDC_6^k$ and one AC coefficient $AC_6^k$. The AC coefficient $AC_6^k$ may be added to the set of AC coefficients $\{AC_d^k\}$. The second two-point RAHT transformation may be a second two-point RAHT transformation in the cascade of two-point RAHT transformations.

A third two-point RAHT transformation may determine (e.g., at a third step in FIG. 14) AC coefficients for the set of AC coefficients. The third two-point RAHT transformation may determine AC coefficients for the set of AC coefficients, for example, such that the set of AC coefficients $\{AC_d^k\}$ comprises seven AC coefficients (e.g., $\{AC_d^k\} = \{AC_{1,d}^k, ..., AC_{6,d}^k, AC_{7,d}^k\}$ shown in FIG. 14). The third two-point RAHT transformation may be based on (e.g., applied to) the intermediate DC coefficients $IDC_{5,d}^k$ and $IDC_{6,d}^k$. The third two-point RAHT transformation may determine one DC coefficient $DC_{d-1}^k$ and one AC coefficient $AC_{7,d}^k$. The AC coefficient $AC_7^k$ may be added to the set of AC coefficients $\{AC_d^k\}$. The third two-point RAHT transformation may be a third two-point RAHT transformation in the cascade of two-point RAHT transformations. The one DC coefficient $DC_{d-1}^k$ may be pushed at parent node level depth d-1.

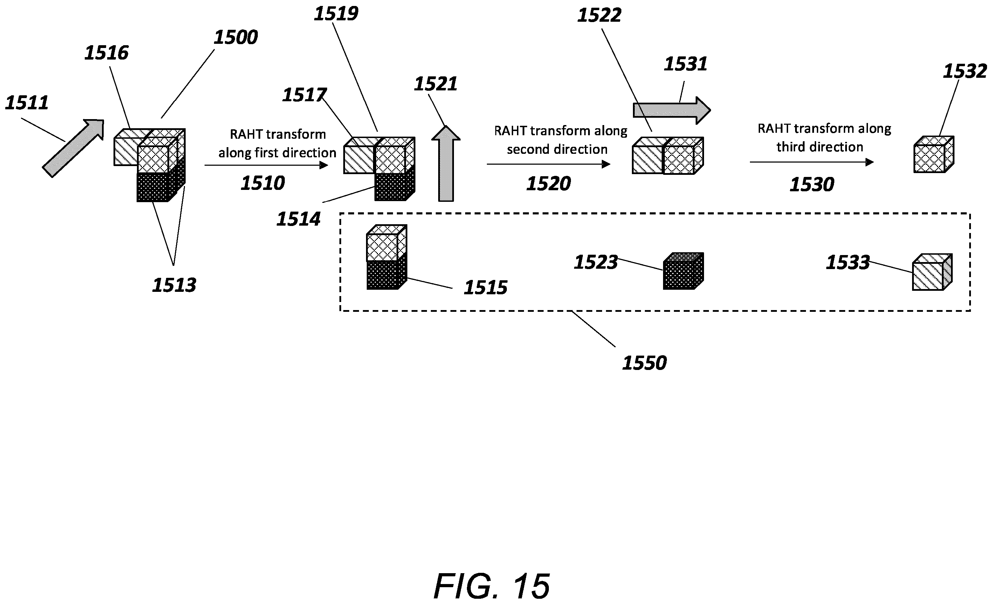

FIG. 15 shows an example of the RAHT transformation. The RAHT transformation may be based on (e.g., applied to) an octree. The RAHT transformation may be based on (e.g., applied to) child nodes of an octree parent node along three successive directions. The RAHT transformation may be applied on child nodes of an octree parent node, for example, such that the parent node may have non-occupied child nodes (i.e., not all eight child nodes may be occupied, as described in FIG. 14). The parent node 1500 may have multiple (e.g., five) occupied child nodes each having a respective associated coefficient $c_i$ and weight $w_i$. A first RAHT transformation 1510 may be performed along a first direction 1511. If there are two adjacent occupied child nodes 1513 along the first direction, the two adjacent occupied child nodes 1513 may undergo a two-point RAHT transform. A new DC coefficient 1514 and an AC coefficient 1515 may be determined and pushed to a set 1550 of AC coefficients. The node may be left as is and its DC coefficient may be kept 1517, for example, if there is only one occupied child node 1516 along the first direction. In this example, the child nodes may be collapsed along the first direction to determine a new set 1519 of nodes (e.g., a set of three nodes), with associated new DC coefficients.

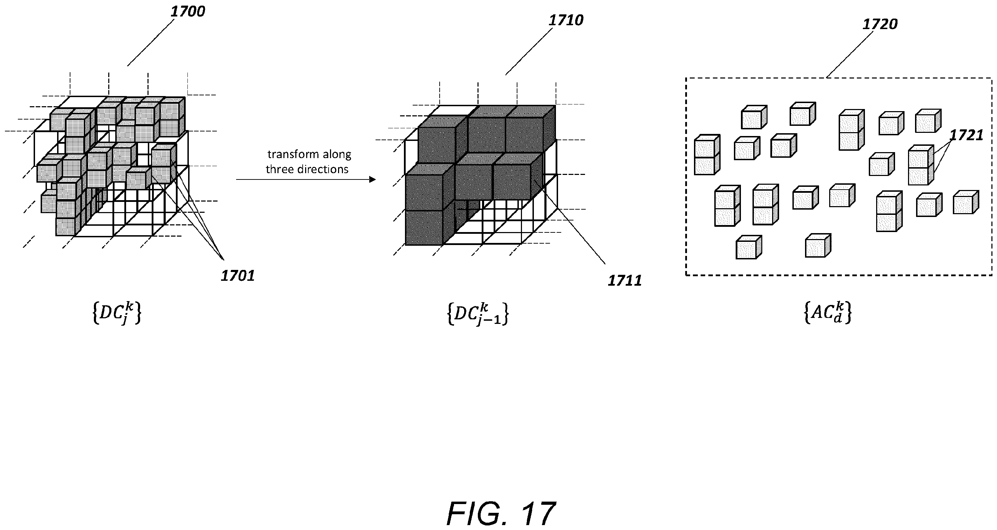

A second RAHT transformation 1520 may be performed, for example, after the first RAHT transformation. The second RAHT transformation may be along a second direction 1521. The second RAHT transformation may be performed similarly to the first RAHT transformation. The child nodes 1522 may be determined. The child nodes 1522 may have been collapsed along the first two directions 1511 and 1521. The AC coefficients 1523 may be pushed to the set 1550 of AC coefficients. A third RAHT transformation 1530 may be performed, for example, after the second RAHT transformation. The third RAHT transformation may be along a third direction 1531. The third RAHT transformation may be performed similarly to the first and/or second RAHT transformation. A (e.g., unique) child node 1532 may be determined. The child node 1532 may result from the collapse along all three directions. The AC coefficients 1533 may be pushed to the set 1550 of AC coefficients. The child node 1532 may have an associated DC coefficient that is pushed to the parent node (e.g., as shown for example in FIG. 17).

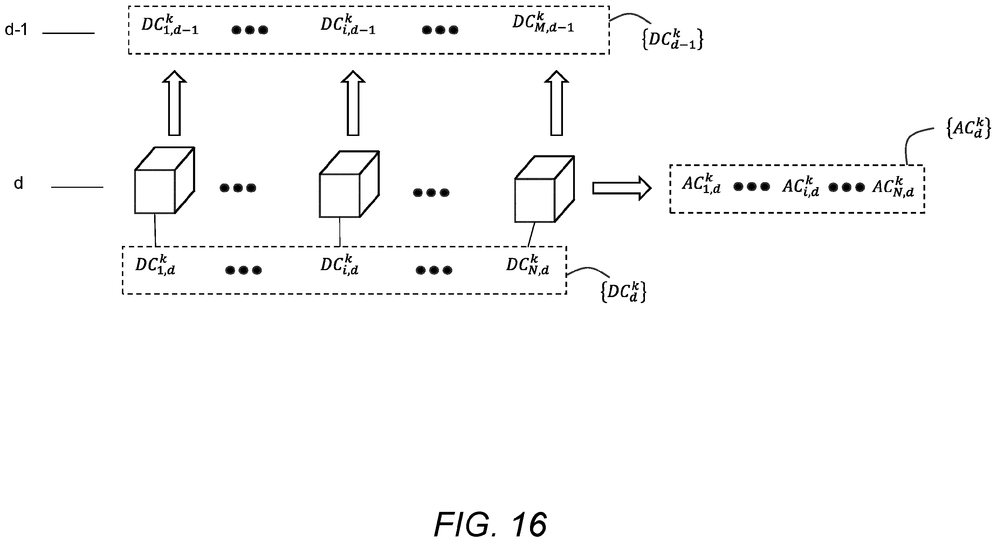

FIG. 16 shows an example iteration of a RAHT transformation based on (e.g., applied to) a tree. An iteration of the RAHT transformation (e.g., iterative RAHT transformation) may be based on (e.g., applied to) one or more (e.g., several) sets of child nodes at depth 'd' of one or more (e.g., several) parent nodes of a tree. Each parent node of the one or more (e.g., several) parent nodes may be associated with (e.g., up to) N occupied child nodes. The tree may be an octree (i.e., each parent node may be associated with up to eight occupied nodes). A set of DC coefficients $\{DC_{d-1}^k\}$ and a set of AC coefficients $\{AC_d^k\}$ may be obtained, for example, by applying a RAHT transformation to each pair of occupied child nodes at depth d of each parent node at depth d-1 (e.g., as described and shown in FIG. 14 and FIG.15). The set of DC coefficients $\{DC_{d-1}^k\}$ and the set of AC coefficients $\{AC_d^k\}$ may represent color attributes of the coded geometry S at depth d, for example, at a level of spatial precision defined by the size of nodes at depth d.

FIG. 17 shows an example RAHT transformation. The RAHT transformation may be based on (e.g., applied to) octree nodes (e.g., all octree nodes) at depth 'd' to determine DC coefficients at depth d-1 and AC coefficients. Occupied nodes 1700 of an octree may be at depth d. Occupied nodes 1700 may undergo a RAHT transformation along the three directions. DC coefficients for each node may be pushed up to the corresponding occupied parent nodes 1710 that belong to the octree at depth d-1. The three DC coefficients of the child nodes 1701 may, for example, undergo a RAHT transformation along the three directions. A unique DC coefficient associated with the parent node 1711 may be determined and two AC coefficients 1721 may be pushed to a set 1720 of AC coefficients. By performing this method for (e.g., all) occupied nodes 1700 of the octree at depth d, the set $\{DC_d^k\}$ of DC coefficients, associated with occupied nodes of the octree at depth d, may be transformed into a set $\{DC_{d-1}^k\}$ of DC coefficients, associated with occupied nodes 1710 of the octree at depth d-1 and a set of AC coefficients $\{AC_d^k\}$ (1720), as shown in FIG. 16.

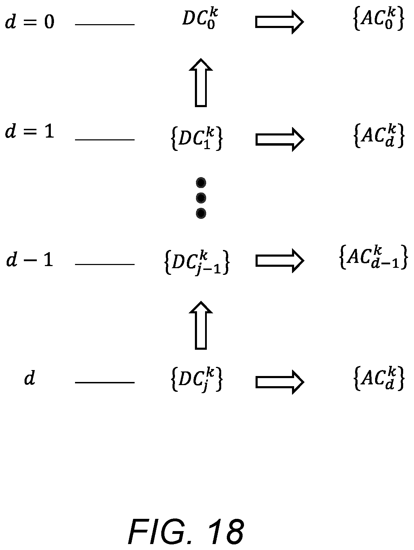

FIG. 18 shows an example iterative RAHT transformation based on (e.g., applied to) a tree. The iterative RAHT transformation may be based on (e.g., applied to) all tree nodes to determine one DC coefficient at root node and AC coefficients. This bottom-up method may be repeated depth per depth, for example, until reaching the minimum depth (the root node). The result of the RAHT transformation over the octree (e.g., complete octree) may be a set of coefficients comprising a unique DC coefficient and a set of (many) AC coefficients.

The RAHT transformation (e.g., the iterative RAHT transformation) method may start from the highest depth dmax, for example, where occupied child nodes correspond to a unique point (voxel) of the coded geometry S (e.g., point cloud). The unique point may be associated with a unique attribute among the set 'a' of attributes, for example, to the lowest depth corresponding to the root node of the tree. The DC coefficient at highest depth dmax may be set as the value of the unique attribute associated with each occupied node. The weights 'w' may be set to 1. The DC coefficient at the lowest depth may be set as the value of a single color attribute of the coded geometry S. The iterative RAHT transformation may be a bottom-up method. The method of FIG. 16 may be repeated from the leaf nodes of the tree (e.g., maximum depth of the tree, depth 'd') to the root node (e.g., minimum depth of the tree, d=0), for example, according to the bottom-up method shown in FIG. 18.

The iterative RAHT transformation over the complete octree may result in a single DC coefficient $DC_0^k$ determined at the lowest depth and a set of AC coefficients $\{AC_d^k\}, \ldots, \{AC_1^k\}$, and $\{AC_0^k\}$. The set of AC coefficients $\{AC_d^k\}, \ldots, \{AC_1^k\}$, and $\{AC_0^k\}$ may represent the color attributes of the geometry of the colored point cloud. The color attributes of the geometry of the colored point cloud may be represented at different depth (i.e., at different spatial precision defined by the size of the nodes at said depth). The color attributes of the geometry of the colored point cloud may be represented by the set of DC coefficients $\{DC_{d1}^k\}$, for example, at depth $d_1$ (i.e., the color attribute associated with each node I at depth $d_1$ is a DC coefficient i of the set of DC coefficients $\{DC_{d1}^k\}$). A color component at depth $d_1$ of the color attributes of geometry of the colored point cloud may be determined, for example, by assigning a same DC coefficient of the set of DC coefficients $\{DC_{d1}^k\}$ to each point belonging to a cube associated with each node at depth $d_1$. Points (e.g., all points) belonging to a same cube associated with a node at depth $d_1$ may comprise (e.g., may have) the same value (e.g., same DC coefficient).

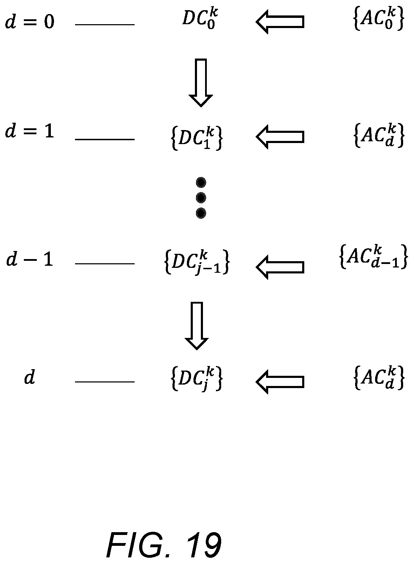

FIG. 19 shows an example inverse RAHT iterative transformation based on (e.g., applied to) a tree. The inverse RAHT iterative transformation may be based on (e.g., applied to) all tree nodes of the tree. The inverse RAHT iterative transformation may be based on (e.g., applied to) all tree nodes of the tree, for example, to determine color attributes of the tree nodes.

The inverse RAHT iterative transformation may be a top-down method. The inverse RAHT iterative transformation may start from a lowest depth corresponding to the root node of the tree (e.g., d=0) to a highest depth (e.g., depth d). Occupied child nodes may correspond to a unique point (e.g., a voxel) of the geometry of the colored point cloud. An inverse RAHT transformation may be based on (e.g., applied to) each pair of a single (e.g., one) DC coefficient $DC_0^k$ and one AC coefficient of the set of AC coefficients $\{AC_{d=0}^k\}$. The inverse RAHT transformation may determine a set of DC coefficients $\{DC_{d=1}^k\}$ at the lowest depth. A two-point inverse RAHT (iRAHT) transformation may be based on (e.g., applied to) each pair of the single (e.g., the one) DC coefficient $DC_0^k$ and an AC coefficient (e.g., one AC coefficient) of the set of AC coefficients $\{AC_0^k\}$. The two-point iRAHT transformation may determine each DC coefficient $\{DC_{i,d=1}^k\}$ associated with a node at depth d=1. The two-point iRAHT transformation may be based on (e.g., applied to) pairs of a DC coefficient of the set of DC coefficients $\{DC_{d-1}^k\}$ and an AC coefficient (e.g., one AC coefficient) of the set of AC coefficients $\{AC_{d-1}^k\}$. The two-point iRAHT transformation may determine a set of DC coefficients $\{DC_d^k\}$ at any other depth d (e.g., for the nodes at depth d).

The two-point iRAHT transformation may be based on (e.g., applied along) three directions in reverse order. The two-point iRAHT transformation may be based on (e.g., applied along) three directions, in reverse order, for example, to invert the node transformation process shown in FIG. 17. The two-point iRAHT transformation may determine DC coefficients at the highest depth. The two-point iRAHT transformation may determine, for example, that the color attributes associated with the unique point of each of the leaf nodes of the tree are equal to the DC coefficients determined at the highest depth.

In at least some technologies, colored point clouds may be used for AR/VR/MR applications and/or for storage of big colored objects or scenes (e.g., 3D maps, buildings, highly-valued culture heritage objects, etc.). The bitrate needed for representing colors may be higher than the bitrate needed for representing the geometry, for example, for dense point clouds.

In image and/or video compression, natural objects and/or scenes may be advantageously represented in color spaces having one luma (e.g., Y) component and two chroma (e.g., UV or CbCr) components. The color spaces having one luma (e.g., Y) component and two chroma (e.g., UV or CbCr) components may be advantageous, for example, because most of a color signal may be carried by the luma component and highest frequencies of the color signal may become compacted into one component. The highest frequencies of the color signal becoming compacted into one component may provide (e.g., may help to provide) increased compression of the color signal and the luma component may comprise (e.g., may constitute) most of the bitstream representing the colors, for example, because the chroma components may be massively (e.g., significantly) compressed.

The two chroma components may comprise (e.g., may have) less spatial variability than the luma component (i.e., the two chroma components may be "flatter" than the luma component). The two chroma components may be spatially downsampled (e.g., before compression) without much (e.g., substantial, noticeable) impact on the visual quality of the decoded colors, for example, based on the two chroma components comprising (e.g., having) less spatial variability than the luma component.

A video format (e.g., a 4:2:0 video format described herein) may represent images and/or videos with spatially downsampled chroma components. The 4:2:0 video format may represent images and/or videos with chroma components having been spatially downsampled by a factor two in each of the two spatial directions, for example, based on the advantage of the chroma components comprising (e.g., having) less spatial variability than the luma component. In the 4:2:0 video format, the number of (e.g., quantity of) chroma samples may be four times fewer than the luma samples.

Image and/or video codecs may not typically comprise the chroma down-sampling, for example, because the input images and/or videos may be (e.g., may already be) in the 4:2:0 format. The positions of chroma samples relative to luma samples may be fixed, for example, at the center of 2x2 squares of the luma samples.

The image and/or video codecs may comprise internal processes (e.g., all internal processes) performed according to the 4:2:0 format. A N*N transform may be based on (e.g., applied to) N*N luma samples, for example, if a N*N block of an image and/or a picture of a video is transformed. A N/2*N/2 transform may be based on (e.g., applied to) N/2*N/2 chroma samples, for example, if a N*N block of an image and/or a picture of a video is transformed. Other internal processes (e.g., filtering) may be performed in (e.g., according to) the 4:2:0 format.

A decoded image and/or video may be output according to the 4:2:0 format. A decoded image and/or video may be output according to the 4:2:0 format, for example, after decoding. Rendering to a viewer may require up-sampling of the chroma component to the same spatial sampling as the luma samples and transformation to a color space directly usable by a rendering device (e.g., a display). Decoded video data may be in the 4:2:0 YUV format and the two chroma components U and V may be up-sampled to the same locations as the luma samples Y. Triplets of samples YUV may be transformed (e.g., for each location) to the RGB color space, for example, to obtain a set of RGB pixels directly usable by the device.

Colors of natural content point clouds may comprise (e.g., may have) the same luma, chroma, and spatial characteristics (e.g., spatial sampling) as for colors of images and videos. The chroma components may comprise (e.g., may have) less spatial variability than the luma component (i.e., the chroma components may be "flatter" than the luma component). A point cloud format with similar chroma sampling as the 4:2:0 format of videos and images may be advantageous for compression, for example, based on a tradeoff between bitrate and distortion and/or between bitrate and visual quality.

The nature of the geometry of point clouds may not allow for straightforward 3D down-sampling and up-sampling of the color components of color attributes associated with the points of a colored point cloud. The nature of the geometry of point clouds may not allow for straightforward 3D down-sampling and up-sampling of the color components of color attributes associated with the points of a colored point cloud, for example, if not all voxels of the 3D space are occupied (e.g., there exist unoccupied voxels of the 3D space). Straightforward 3D down-sampling and up-sampling of the color components of color attributes associated with the points of a colored point cloud may not be allowed, for example, because no file format representing "4:2:0"-like point clouds exists.

Examples described herein may include an approach for improving compression of color attributes of colored point clouds. The examples described herein may improve compression of color attributes of colored point clouds, for example, by transforming, at a first level of spatial precision and based on a geometry of a colored point cloud, chroma information of color attributes associated with the geometry of the colored point cloud into chroma coefficients. The examples described herein may improve compression of color attributes of colored point clouds, for example, by transforming, at a second level of spatial precision and based on the geometry of the colored point cloud, luma information of color attributes associated with the geometry of the colored point cloud into luma coefficients. The examples described herein may improve compression of color attributes of colored point clouds, for example, by encoding, in a bitstream, the luma and chroma coefficients.

The examples described herein may include an approach for decoding (e.g., reconstructing), from a bitstream, chroma and luma coefficients. The examples described herein may determine chroma information, for example, by inverse transforming, at a first level of spatial precision and based on a geometry of a colored point cloud, the decoded chroma coefficients. The examples described herein may determine luma information, for example, by inverse transforming, at a second level of spatial precision and based on the geometry of the colored point cloud, the decoded luma coefficients. The examples described herein may reconstruct color attributes associated with the geometry of the colored point cloud, for example, based on the luma information and the chroma information.

The examples described herein may avoid direct 3D sampling (e.g., down-sampling and up-sampling) of color attributes associated with the geometry of the colored point cloud. The examples described herein may provide representations at different spatial precisions of luma and chroma information of color attributes associated with a colored point cloud, for example, to discard (e.g., filter out) spatial higher frequencies from the colors (e.g., from the chroma component). The first and second levels of spatial precision may be different, for example, such that the chroma information and/or chroma coefficients may be represented at a lower spatial precision than the luma information and/or luma coefficients.

An encoder may encode and/or decode (e.g., may reconstruct) a geometry of the colored point cloud. The encoder may determine color attributes of the reconstructed geometry, for example, based on color attributes of the geometry of the colored point cloud. The encoder may map color attributes of the geometry of the colored point cloud to the reconstructed geometry to determine the color attributes of the reconstructed geometry, for example, in lossy compression. Additionally, or alternatively, a decoder may decode (e.g., may reconstruct) the geometry of the colored point cloud. The decoder may decode the color attributes. Additionally, or alternatively, the decoder may map the decoded color attributes to the reconstructed geometry.

An iterative RAHT transformation may be used for transforming the chroma information at the first level of spatial precision and/or transforming the luma information at the second level of spatial precision. An inverse RAHT iterative transformation may be used for inverse transforming the chroma coefficients at the first level of spatial precision and/or inverse transforming the luma coefficients at the second level of spatial precision.

A hierarchical transform may be used for transforming the chroma information at the first level of spatial precision and/or transforming the luma information at the second level of spatial precision. The hierarchical transform may comprise a first level of hierarchy, for example, corresponding to the first level of spatial precision. The hierarchical transform may comprise a second level of hierarchy, for example, corresponding to the second level of spatial precision.

An inverse hierarchical transform may be used for inverse transforming the chroma coefficients at the first level of spatial precision and/or inverse transforming the luma coefficients at the second level of spatial precision. The inverse hierarchical transform may comprise a first level of hierarchy, for example, corresponding to the first level of spatial precision. The inverse hierarchical transform may comprise a second level of hierarchy, for example, corresponding to the second level of spatial precision.

The hierarchical transform may operate as a first level transform and/or a second level transform. The hierarchical transform may operate as a first level transform for transforming the chroma information defined at the first level of spatial precision into the chroma coefficients. The hierarchical transform may operate as a second level transform for transforming the luma information defined at the second level of spatial precision into the luma coefficients.

The second level transform may be a combination of a second to first level transform and the first level transform. The second to first level transform may transform the luma information into intermediate luma coefficients (e.g., representing the luma information at the first level of spatial precision) and first luma coefficients of a set of luma coefficients. The first level transform may transform the intermediate luma coefficients into second luma coefficients of the set of luma coefficients. The second to first level transform may be a RAHT transformation. The first level transform may be an iterative RAHT transformation. The iterative RAHT transformation (e.g., the first level transform) may comprise, for example, as many iterations as depths in a tree representing the geometry of the colored point cloud. The tree may be, for example, an occupancy tree representing occupancy of nodes of the tree.

The inverse hierarchical transform may operate as a first level inverse transform and/or a second level inverse transform. The inverse hierarchical transform may operate as a first level inverse transform for inverse transforming the chroma coefficients into chroma information defined at the first level of spatial precision. The inverse hierarchical transform may operate as a second level inverse transform for inverse transforming the luma coefficients into luma information defined at the second level of spatial precision.

The second level inverse transform may be a combination of a first to second level inverse transform and the first level inverse transform. The first level inverse transform may transform the second luma coefficients of the luma coefficients into intermediate luma coefficients. The first to second level inverse transform may inverse transform the first luma coefficients of the luma coefficients and the intermediate luma coefficients into the luma information at the first level of spatial precision. The first to second level inverse transform may be an inverse RAHT transformation. The first level transform may be an inverse RAHT iterative transformation. The inverse RAHT iterative transformation may comprise, for example, as many iterations as depths in a tree representing the geometry of the colored point cloud. The tree may be, for example, an occupancy tree representing occupancy of nodes of the tree.

A RAHT transformation may be based on (e.g., applied to) chroma information of the color attributes of the geometry of the colored point cloud defined at the second level of spatial precision. The RAHT transformation may determine the chroma information (e.g., applied to) defined at the first level of spatial precision. For instance, the chroma information defined at the first level of spatial precision may be determined, for example, by applying a RAHT transformation to chroma information defined at the second level of spatial precision.

A prediction based color transform may be used for transforming the chroma information at the first level of spatial precision and/or transforming the luma information at the second level of spatial precision. The prediction based color transform may comprise a first level of detail of the color attributes, for example, corresponding to the first level of spatial precision. The prediction based color transform may comprise a second level of detail of the color attributes, for example, corresponding to the second level of spatial precision.

A prediction based color transform may be used for inverse transforming the chroma information at the first level of spatial precision and/or inverse transforming the luma information at the second level of spatial precision. The prediction based color transform may comprise a first level of detail of the color attributes, for example, corresponding to the first level of spatial precision. The prediction based color transform may comprise a second level of detail of the color attributes, for example, corresponding to the second level of spatial precision.

The prediction based color transform may be a pred-lift based color transform. The hierarchical transform and/or the inverse hierarchical transform may be a pred-lift based color transform. The pred-lift based color transform may comprise a first level of detail of the color attributes, for example, corresponding to the first level of hierarchy. The pred-lift based color transform may comprise a second level of detail of the color attributes, for example, corresponding to the second level of hierarchy.

The second level of detail of the color attributes may correspond to a voxel precision of the geometry of the colored point cloud. The first level of detail of the color attributes may correspond to points of the colored point cloud having a multiple (e.g., a double) of a characteristic distance between points of the second level of detail. The characteristic distance may be a mean distance between points of the colored point cloud at the second level of detail.

The second level of spatial precision or the second level of detail may correspond to the first level of spatial precision or the first level of detail. The second level of spatial precision or the second level of detail may be a refinement of the first level of spatial precision or the first level of detail. The second level of spatial precision or the second level of detail may be lower than the first level of spatial precision or the first level of detail. The second level of spatial precision or the second level of detail may be, for example, a next, lower level of precision or detail after the first level of spatial precision or the first level of detail, respectively. The second level of spatial precision may equal a voxel precision of the geometry of the colored point cloud. The first level of spatial precision may equal 2x2x2 cubes of voxels.

The second level of spatial precision may correspond to the maximum depth of a tree (e.g., an octree) representing the geometry of the colored point cloud. The first level of spatial precision may correspond to the maximum depth minus one of the tree. The tree may be an occupancy tree representing occupancy of nodes of the tree.

The color attributes associated with the geometry of the point cloud may be reconstructed. The reconstructing the color attributes associated with the geometry of the point cloud may comprise resampling the chroma information to the second level of spatial precision. The reconstructing the color attributes associated with the geometry of the point cloud may comprise determining the color attributes based on the resampled chroma information with the luma information. The color attributes may be projected onto the points of the geometry of the colored point cloud. The reconstructing the color attributes associated with the geometry of the point cloud may comprise determining the color attributes based on the chroma information and the luma information.

One or more color spaces may be used to represent the colors. The color attributes associated with points of a colored point cloud may be represented within existing color spaces used for image and/or video representation. The color space may be (e.g., comprise) an RGB color space.

The color space of capture by a sensor may be a RGB color space. Each of the color components of the RGB color space (e.g., R, G or B) may correspond to a type of color filter associated with a subpixel in a capturing device. A color signal may be transformed into another color space. The another color space may comprise one luma component and two chroma components, for example, to obtain better compaction of the signal. The number of (e.g., quantity of) bits for representing each component (e.g., bit depth) may vary depending on the application. The bit depth may be a number of (e.g., quantity of) bits (e.g., 8 bits, 10 bits, or any other number of/quantity of bits), for example, for distribution of contents. The bit depth may be higher (e.g., a larger number of/quantity of bits), for example, for storage and/or specific applications (e.g., post-production, medical, Lidar, HDR, etc.).

The one or more color spaces (e.g., luma and/or chroma color spaces) may comprise luma and chroma components. The one or more color spaces (e.g., luma and/or chroma color spaces) may be (e.g., may comprise) a YUV color space (e.g., for analogic TV). The one or more color spaces (e.g., luma and/or chroma color spaces) may be (e.g., may comprise) a YCbCr color space (e.g., for digital TV using any one of primaries BT.601, BT.709, and/or BT.2020). The one or more color spaces (e.g., luma and/or chroma color spaces) may be (e.g., may comprise) a DCI-P3 color space (e.g., for cinema). The one or more color spaces (e.g., luma and/or chroma color spaces) may be (e.g., may comprise) a ICtCp color space (e.g., for HDR). The examples described herein may be based on (e.g., applied to) one or more of (e.g., any one of) the one or more color spaces (e.g., the luma and/or chroma color spaces), for example, with any bit depth.

A three-component color space may comprise a luma component and two chroma components. The chroma information may represent two chroma components of the three-component color space. The luma information may represent a luma component of the three-component color space. The chroma components (e.g., the two chroma components or all the chroma components) of the chroma information may be defined at the first level (e.g., the same level) of spatial precision.

The colors may be represented in the one or more color spaces. The colors may be represented, for example, in the YUV color space or the YCbCr color space. The chroma information may represent at least one residual chroma component. The luma information may represent a residual luma component. The residual luma component may be a difference between a luma component of the color attributes associated with the points of the geometry of the colored point cloud and a luma predictor. The at least one residual chroma component may be a difference between at least one chroma component of the color attributes associated with the points of the geometry of the colored point cloud and at least one chroma predictor.

An encoder may encode chroma coefficients and luma coefficients. The transforming the chroma information of the color attributes may comprise transforming the at least one residual chroma component into residual chroma coefficients defined at the first level of spatial precision. The transforming the luma information of the color attributes may comprise transforming the residual luma component into residual luma coefficients defined at the second level of spatial precision. The encoding the chroma coefficients and the luma coefficients may comprise encoding the residual luma coefficients and the residual chroma coefficients.

A decoder may reconstruct color attributes. The inverse transforming the chroma coefficients and the luma coefficients may comprise decoding, from the bitstream, residual luma coefficients and residual chroma coefficients. The determining the chroma information may comprise determining at least one residual chroma component based on inverse transforming the decoded residual chroma coefficients, for example, at a first level of spatial precision and based on a geometry of a colored point cloud. The determining the luma information may comprise determining a residual luma component by inverse transforming the decoded residual luma coefficients, for example, at a second level of spatial precision and based on the geometry of the colored point cloud. The reconstructing the color attributes may comprise determining the chroma information, for example, based on adding the at least one residual chroma component with at least one chroma predictor. The reconstructing the color attributes may comprise determining the luma information, for example, based on adding the residual luma component with a luma predictor.

The encoding may comprise encoding a syntax element to signal activation. The encoding may, for example, not comprise transforming chroma information and luma information with different spatial precisions. The syntax element may be, for example, a flag coded in one or more of a Sequence Parameter Set, an Attribute Parameter Set, and/or an Attribute Data Unit Header (e.g., an Attribute Brick Header).

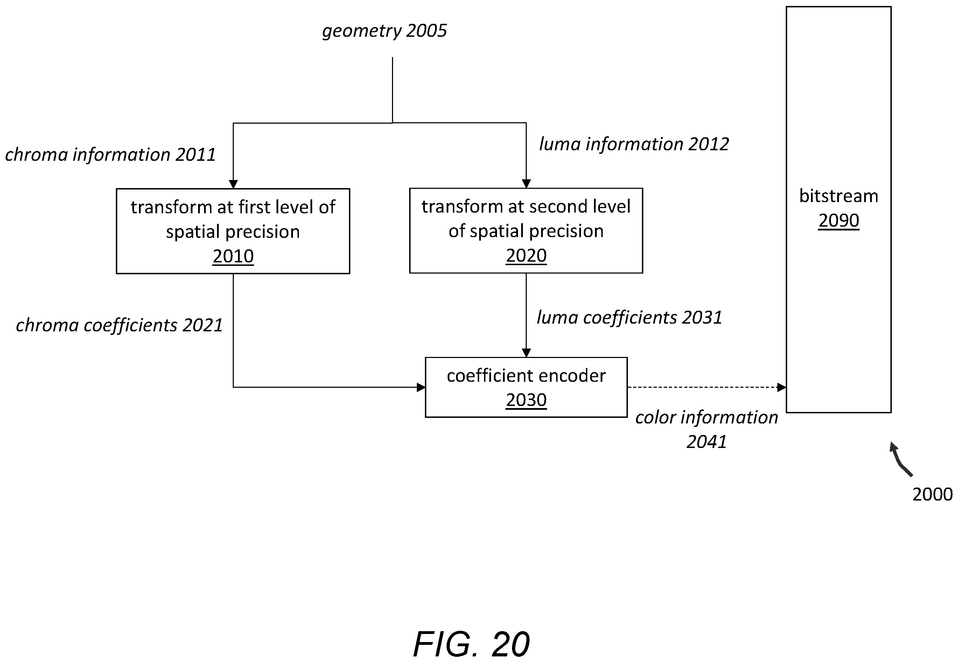

FIG. 20 shows an example method for encoding color attributes. The color attributes may be associated with a geometry of a colored point cloud in a bitstream. A process 2000 may comprise steps 2010, 2020, and 2030, as shown in FIG. 20. One or more steps of the process 2000 (e.g., as shown in FIG. 20) may be performed by an encoder (e.g., the encoder 114 in FIG. 1). The steps 2010, 2020 and 2030 may represent components within the encoder.

At step 2010, the encoder may transform chroma information 2011 of the color attributes associated with a geometry 2005 of a colored point cloud, at a first level of spatial precision, into chroma coefficients 2021. The encoder may transform the chroma information 2011, at the first level of spatial precision, into the chroma coefficients 2021, for example, based on the geometry 2005. The transforming the chroma information 2011 at the first level of spatial precision may comprise obtaining the chroma coefficients 2021 representing the chroma information 2011 at the first level of spatial precision.

At step 2020, the encoder may transform luma information 2012 of the color attributes associated with the geometry 2005 of the colored point cloud, at a second level of spatial precision, into luma coefficients 2031. The encoder may transform the luma information 2012, at the second level of spatial precision, into the luma coefficients 2031, for example, based on the geometry 2005. The transforming the luma information 2012 at the second level of spatial precision may comprise obtaining the luma coefficients 2031 representing the luma information 2012 at the second level of spatial precision.

At step 2030, the encoder may encode the chroma coefficients 2021 and the luma coefficients 2031 in a bitstream 2090. The encoder may encode the chroma coefficients 2021 and the luma coefficients 2031 in the bitstream 2090, for example, as color information 2041.

The process 2000 may be performed using (e.g., applying) one or more (e.g., any) of the transforms described herein comprising first and second levels of spatial precision of color information. An iterative RAHT transformation (e.g., as shown in FIG. 18) may be used for transforming, at the first level of spatial precision, the chroma information 2011, as shown at step 2010 in FIG. 20. The iterative RAHT transformation may be used for transforming, at the second level of spatial precision, the luma information 2012, as shown at step 2020 in FIG. 20. The iterative RAHT transformation may be used for transforming, for example, according to Solid Geometry-based Point Cloud Compression (GPCC) and/or Enhanced GPCC standards.

The color attributes associated with occupied nodes of a tree at each depth may be a set of DC coefficients associated with color components of the color attributes associated with the occupied nodes. The color attributes associated with occupied nodes of a tree at each depth may be a set of DC coefficients associated with color components of the color attributes associated with the occupied nodes, for example, if the tree (e.g., an occupancy octree) represents the geometry of the colored point cloud (e.g., the geometry 2005). Each node of the occupied nodes of the tree at a depth may be associated with a set of DC coefficients per color component. Each node of the occupied nodes of the tree at a depth may be associated with a DC coefficient representing a luma value and two DC coefficients representing two chroma values, for example, if the color attribute is represented by a luma component and two chroma components. Each DC coefficient of the set of DC coefficients multiplied by the square root $\sqrt{w}$ of a weight w associated with a node may be equal to the mean color value taken over all points belonging to the node. Mean color values may provide a spatial sampling of the color attribute, for example, with spatial precision the size of the nodes at the octree depth. Chroma and luma information at a given depth of the octree may be sets of DC and AC coefficients, for example, determined at an iteration of an iterative RAHT corresponding to the given depth.

The luma information 2012 may be represented by a set of DC coefficients $\{DC_{dmax}^L\}$ (i.e., the color attribute of a single point belonging to each node at a maximum depth dmax may be a DC coefficient of the set of DC coefficients $\{DC_{dmax}^L\}$ ). The luma information 2012 may be represented by the set of DC coefficients $\{DC_{dmax}^L\}$, for example, if the first level of spatial precision corresponds to the maximum depth (dmax) of a tree (e.g., an occupancy octree) representing the geometry of the colored point cloud and the second level of spatial precision corresponds to the above (e.g., next above) depth of the tree (i.e., the maximum minus 1 depth (dmax-1)). The luma coefficients 2031 may comprise a single DC coefficient $DC_0^L$ (e.g., a root node) and sets of AC coefficients $\{AC_{dmax}^L\},\ldots,\{AC_1^L\}$, and $\{AC_0^L\}$. The single DC coefficient $DC_0^L$ (e.g., the root node) and the sets of AC coefficients $\{AC_{dmax}^L\},\ldots,\{AC_1^L\}$, and $\{AC_0^L\}$ may be determined by using (e.g., by applying) an iterative RAHT transformation to the set of DC coefficients $\{DC_{dmax}^L\}$ (e.g., as shown in FIG. 18). The upper index 'L' may indicate the DC coefficients and/or the AC coefficients relate to luma information.

The chroma information 2011 may be represented by a set of DC coefficients $\{DC_{dmax-1}^C\}$. The chroma coefficients 2021 may comprise a single DC coefficient $DC_0^C$ (e.g., a root node) and sets of AC coefficients $\{AC_{dmax-1}^C\},\ldots,\{AC_1^C\}$, and $\{AC_0^C\}$. The single DC coefficient $DC_0^C$ (e.g., the root node) and the sets of AC coefficients $\{AC_{dmax-1}^C\},\ldots,\{AC_1^C\}$, and $\{AC_0^C\}$ may be determined, for example, by using (e.g., by applying) the iterative RAHT transformation to the set of DC coefficients $\{DC_{dmax-1}^C\}$ (e.g., as shown in FIG. 18). The upper index 'C' may indicate the DC coefficients and/or the AC coefficients relate to chroma information.

A prediction transform may be used for the transforming in FIG. 20. The prediction transform may be used for the transforming the chroma information 2011 at the first level of spatial precision (e.g., as shown at step 2010 in FIG. 20). The prediction transform may be used for the transforming the luma information 2012 at the second level of spatial precision (e.g., as shown at step 2020 in FIG. 20). The prediction transform may comprise a first level of detail, for example, corresponding to the first level of spatial precision. The prediction transform may comprise a second level of detail, for example, corresponding to the second level of spatial precision. The prediction transform (e.g., the prediction transform comprising the first level of detail and the second level of detail) may be determined (e.g., deduced) from a prediction based color transform (e.g., a prediction based color transform comprising a first level of detail and a second level of detail). The prediction transform may be used for the transforming, for example, according to the Enhanced GPCC standard.

The prediction based color transform may be a pred-lift based color transform. The pred-lift based color transform may comprise a first level of detail and a second level of detail. The pred-lift based color transform (e.g., the pred-lift based color transform comprising the first level of detail and the second level of detail) may be determined (e.g., deduced) from a pred-lift based color transform with three levels of detail (e.g., as shown in FIG. 10). The pred-lift based color transform (e.g., the pred-lift based color transform comprising the first level of detail and the second level of detail) may be determined (e.g., deduced) from a pred-lift based color transform with three levels of detail (e.g., as shown in FIG. 12).

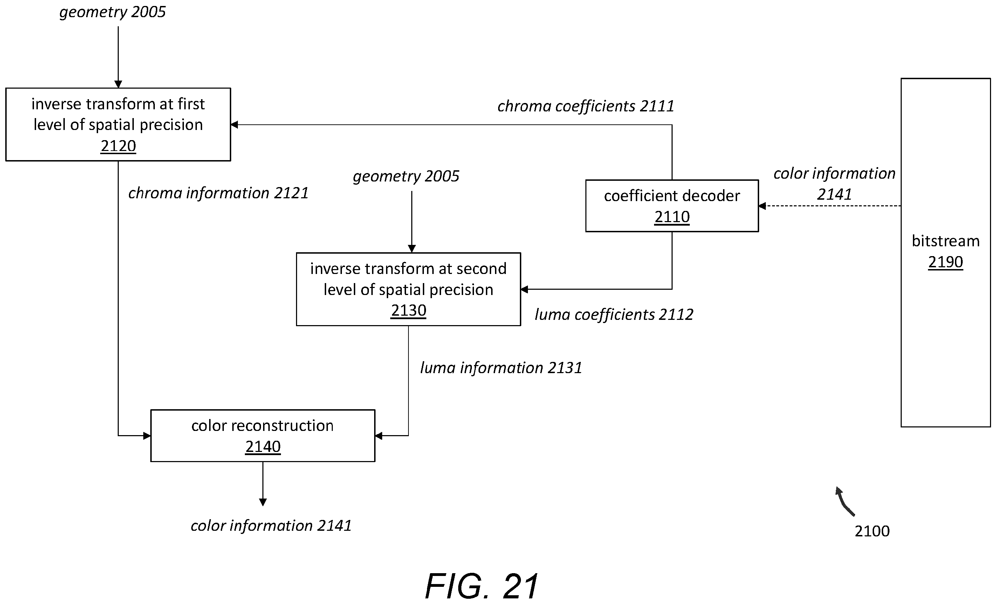

FIG. 21 shows an example method for decoding color attributes associated with a geometry of a colored point cloud from a bitstream. The bitstream (e.g., a bitstream 2190) may be obtained, for example, by the encoding method shown in FIG. 20. A process 2100 may comprise steps 2110, 2120, 2130, and 2140, as shown in FIG. 21. One or more steps of the process 2100 may be performed by a decoder (e.g., the decoder 120 in FIG. 1). The steps 2110, 2120, 2130 and 2140 may represent components within the decoder.

At step 2110, the decoder (e.g., a coefficient decoder) may decode color information 2141. The decoding the color information 2141 may determine chroma coefficients 2111 and/or luma coefficients 2112. The color information 2141 may be decoded, for example, from the bitstream 2190.

At step 2120, the decoder may inverse transform the chroma coefficients 2111, at a first level of spatial precision, into chroma information 2121. The decoder may inverse transform the chroma coefficients 2111, at the first level of spatial precision, into the chroma information 2121, for example, based on a geometry 2005 of the colored point cloud. The inverse transforming the chroma coefficients 2111 at the first level of spatial precision may comprise obtaining the chroma information 2121, for example, representing the chroma information associated with the geometry 2005 of the colored point cloud at the first level of spatial precision.

At step 2130, the decoder may inverse transform the luma coefficients 2112, at a second level of spatial precision, into luma information 2131. The decoder may inverse transform the luma coefficients 2112, at the second level of spatial precision, into the luma information 2131, for example, based on the geometry 2005 of the colored point cloud. The inverse transforming the luma coefficients 2112, at the second level of spatial precision may comprise obtaining the luma information 2131, for example, representing the luma information associated with the geometry 2005 of the colored point cloud at the second level of spatial precision.

At step 2140, the decoder may reconstruct color attributes of the geometry 2005 of the colored point cloud. The decoder may reconstruct the color attributes of the geometry 2005 of the colored point cloud, for example, based on the luma information 2131 and the chroma information 2121. The reconstructing the color attributes of the geometry 2005 of the colored point cloud may be referred to as color reconstruction. The color reconstruction may determine the color information 2141.

The process 2100 may be performed using (e.g., applying) one or more (e.g., any) of the transforms described herein comprising (e.g., offering) first and second levels of spatial precision of color information. An inverse RAHT iterative transformation (e.g., as shown in FIG. 19) may be used for the inverse transforming, at the first level of spatial precision, the chroma coefficients 2111, as shown at step 2120 in FIG. 21. The inverse RAHT iterative transformation may be used for the inverse transforming, at the second level of spatial precision, the luma coefficients 2112, as shown at step 2130 in FIG. 21.

The luma information 2131 may be represented by a set of DC coefficients $\{DC_{dmax}^L\}$ (i.e., each occupied child node corresponding to a unique point (e.g., voxel) of the geometry of the colored point cloud may be associated with a unique color attribute equal to a DC coefficient of the set of DC coefficients $\{DC_{dmax}^L\}$). The luma information 2131 may be represented by the set of DC coefficients $\{DC_{dmax}^L\}$, for example, if the first level of spatial precision corresponds to a maximum depth (dmax) of a tree (e.g., an occupancy octree) representing the geometry of the colored point cloud and the second level of spatial precision corresponds to a just above depth of the tree (i.e., a maximum minus 1 depth (dmax-1)). The luma coefficients 2112 may comprise a single DC coefficient $DC_0^L$ (e.g., a root node) and sets of AC coefficients $\{AC_{dmax}^L\},\ldots,\{AC_1^L\}$, and $\{AC_0^L\}$. The inverse RAHT iterative transformation may be based on (e.g., applied to) the single DC coefficient $DC_0^L$ (e.g., the root node) and the sets of AC coefficients $\{AC_{dmax}^L\},\ldots,\{AC_1^L\}$, and $\{AC_0^L\}$ (e.g., as shown in FIG. 19). The inverse RAHT iterative transformation may derive (e.g., may determine) the set of DC coefficients $\{DC_{dmax}^L\}$.

The chroma information 2121 may be represented by a set of DC coefficients $\{DC_{dmax-1}^C\}$. The chroma coefficients 2111 may comprise a single DC coefficient $DC_0^C$ (e.g., a root node) and sets of AC coefficients $\{AC_{dmax-1}^C\},\ldots,\{AC_1^C\}$, and $\{AC_0^C\}$. The inverse RAHT iterative transformation may be based on (e.g., applied to) the single DC coefficient $DC_0^C$ (e.g., the root node) and the sets of AC coefficients $\{AC_{dmax-1}^C\},\ldots,\{AC_1^C\}$, and $\{AC_0^C\}$ (e.g., as shown in FIG. 19). The inverse RAHT iterative transformation may determine the set of DC coefficients $\{DC_{dmax-1}^C\}$.

A prediction based color transform may be used for the inverse transforming in FIG. 21. The prediction based color transform may be used for the inverse transforming the chroma coefficients 2111 at the first level of spatial precision (e.g., as shown at step 2120 in FIG. 21). The prediction based color transform may be used for the inverse transforming the luma coefficients 2112 at the second level of spatial precision (e.g., as shown at step 2130 in FIG. 21). The prediction based color transform may comprise a first level of detail, for example, corresponding to the first level of spatial precision. The prediction based color transform may comprise a second level of detail, for example, corresponding to the second level of spatial precision. The prediction based color transform (e.g., the prediction based color transform comprising the first level of detail and the second level of detail) may be determined (e.g., deduced) from a prediction based color transform with three levels of detail (e.g., as shown in FIG. 11).

The prediction based color transform may be a pred-lift based color transform. The pred-lift based color transform (e.g., a pred-lift based color transform comprising the first level of detail and the second level of detail) may be determined (e.g., deduced) from a pred-lift based color transform with three levels of detail (e.g., as shown in FIG. 13).

A hierarchical transform may be used for the transforming in FIG. 20. The hierarchical transform may be used for the transforming the chroma information 2011 at the first level of spatial precision (e.g., as shown at step 2010 in FIG. 20). The hierarchical transform may be used for the transforming the luma information 2012 at the second level of spatial precision (e.g., as shown at step 2020 in FIG. 20). The hierarchical transform may comprise at least two levels of hierarchy. A first level of hierarchy may correspond to the first level of spatial precision. A second level of hierarchy may correspond to the second level of spatial precision.

An inverse hierarchical transform may be used for the inverse transforming in FIG. 21. The inverse hierarchical transform may be used for the inverse transforming the chroma coefficients 2111 at the first level of spatial precision (e.g., as shown at step 2120 in FIG. 21). The inverse hierarchical transform may be used for the inverse transforming the luma coefficients 2112 at the second level of spatial precision (e.g., as shown at step 2130 in FIG. 21). The inverse hierarchical transform may comprise at least two levels of hierarchy. A first level of hierarchy may correspond to the first level of spatial precision. A second level of hierarchy may correspond to the second level of spatial precision.

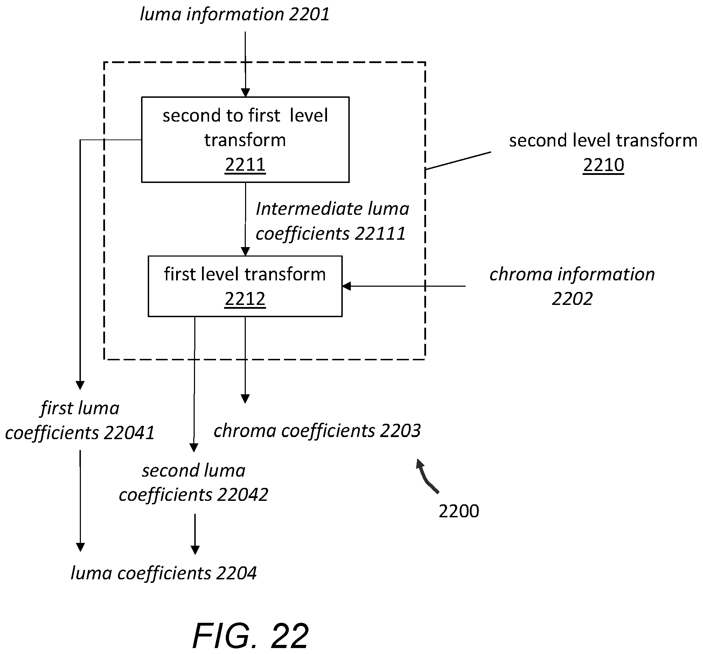

FIG. 22 shows an example method for transforming color information associated with a geometry of a colored point cloud by using a hierarchical transform with at least two levels of hierarchy. A process 2200 may comprise one or more steps for transforming the color information associated with the geometry of the colored point cloud. The process 2200 may use the hierarchical transform with two levels of hierarchy.

The hierarchical transform may comprise at least two levels of hierarchy. The hierarchical transform may operate as a first level transform, as shown at step 2212 in FIG. 22. The first level transform may transform chroma information 2202, defined at a first level of spatial precision, into chroma coefficients 2203 (e.g., as shown at step 2010 in FIG. 20). The hierarchical transform may operate as a second level transform, as shown at step 2210 in FIG. 22. The second level transform may transform luma information 2201, defined at a second level of spatial precision, into luma coefficients 2204 (e.g., as shown at step 2020 in FIG. 20).

The second level transform (e.g., as shown at step 2210 in FIG. 22) may be (e.g., may comprise) a combination of a second to first level transform (e.g., shown at step 2211 in FIG. 22) and the first level transform (e.g., shown at step 2212 in FIG. 22). The second to first level transform may transform the luma information 2201 into intermediate luma coefficients 22111 representing the luma information 2201 at the first level of spatial precision, as shown at step 2211 in FIG. 22. The second to first level transform may transform the luma information 2201 into first luma coefficients 22041 of the luma coefficients 2204, as shown at step 2211 in FIG. 22. The first level transform may transform the intermediate luma coefficients 22111 into second luma coefficients 22042 of the luma coefficients 2204, as shown at step 2212.

The process 2200 may be performed using (e.g., applying) one or more (e.g., any) of the transforms described herein comprising (e.g., offering) first and second levels of spatial precision of color information. The second to first level transform (e.g., as shown at step 2211 in FIG. 22) may be (e.g., may comprise) a RAHT transformation. The first level transform (e.g., as shown at step 2212 in FIG. 22) may be (e.g., may comprise) an iterative RAHT transformation.

The luma information 2201 may be represented by a set of DC coefficients $\{DC^L_{dmax}\}$ (i.e., the color attribute of a single point belonging to each node at a maximum depth (dmax) is a DC coefficient of the set of DC coefficients $\{DC^L_{dmax}\}$). The luma information 2201 may be represented by a set of DC coefficients $\{DC^L_{dmax}\}$, for example, if the first level of spatial precision corresponds to the maximum depth (dmax) of a tree (e.g., an occupancy octree) representing the geometry of the colored point cloud and the second level of spatial precision corresponds to a just above depth of the tree (i.e., a maximum minus 1 depth (dmax-1)). The intermediate luma coefficients 22111 may comprise a set of DC coefficients $\{DC^L_{dmax-1}\}$. The first luma coefficients 22041 may comprise a set of AC coefficients $\{AC^L_{dmax}\}$. The RAHT transformation may determine the set of DC coefficients $\{DC^L_{dmax-1}\}$ and the set of AC coefficients $\{AC^L_{dmax}\}$, for example, by (e.g., based on) using (e.g., applying) the RAHT transformation to the set of DC coefficients $\{DC^L_{dmax}\}$ (e.g., as shown in FIG. 16). The second luma coefficients 22042 may comprise a single DC coefficient $DC^L_0$ (e.g., a root node) and sets of AC coefficients $\{AC^L_{dmax-1}\}, \ldots, \{AC^L_1\}$, and $\{AC^L_0\}$. The iterative RAHT transformation may determine the single DC coefficient $DC^L_0$ (e.g., the root node) and the sets of AC coefficients $\{AC^L_{dmax-1}\}, \ldots, \{AC^L_1\}$, and $\{AC^L_0\}$, for example, by (e.g., based on) using (e.g., applying) the iterative RAHT transformation to the set of DC coefficients $\{DC^L_{dmax-1}\}$ (e.g., as shown in FIG. 18).

The chroma information 2202 may be represented by a set of DC coefficients $\{DC^C_{dmax-1}\}$. The chroma coefficients 2203 may comprise a single DC coefficient $DC^C_0$ (e.g., a root node) and sets of AC coefficients

$\{AC^C_{dmax-1}\},\ldots,\{AC^C_1\}$, and $\{AC^C_0\}$. The iterative RAHT transformation may determine the single DC coefficient $DC^C_0$ (e.g., the root node) and the sets of AC coefficients $\{AC^C_{dmax-1}\},\ldots,\{AC^C_1\}$, and $\{AC^C_0\}$, for example, by (e.g., based on) using (e.g., applying) the iterative RAHT transformation to the set of DC coefficients $\{DC^C_{dmax-1}\}$ (e.g., as shown in FIG. 18). The iterative RAHT transformation may comprise, for example, as many iterations as depths in the tree (e.g., the occupancy octree) representing the geometry of the colored point cloud.

The hierarchical transform may be (e.g., may comprise) a pred-lift based color transform. The pred-lift based color transform may comprise a first level of detail of the color attributes, for example, corresponding to the first level of hierarchy. The pred-lift based color transform may comprise a second level of detail of the color attributes, for example, corresponding to the second level of hierarchy.

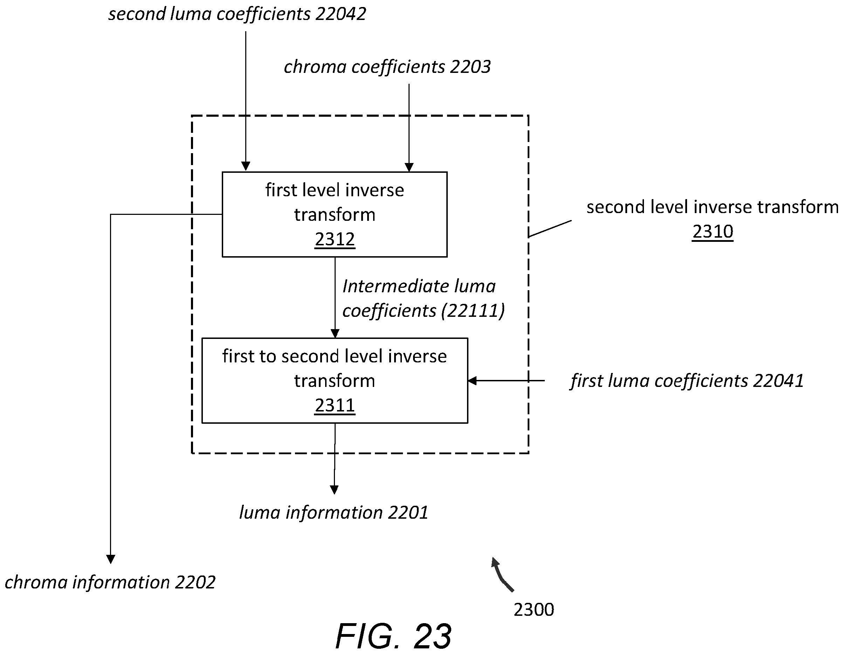

The pred-lift based color transform (e.g., scheme) may be (e.g., may comprise) a hierarchical transform with one or more levels of details. The color information associated with each level of detail $S^0 \cup \ldots \cup S^{i-1}$ may be (e.g., may comprise) a set of color attributes $a^0, \ldots, a^{i-1}$ associated with points of the level of detail. Each level of detail may define a precision of the color attributes associated with the geometry of the colored point cloud. The first level of spatial precision (e.g., as shown in FIG. 20 and FIG. 21) or the first level of hierarchy (e.g., as shown in FIG. 22 and FIG. 23) may be a first level of detail. The color information associated with the geometry of the colored point cloud at the first level of spatial precision may be the set of color attributes associated with points of the colored point cloud of the first level of detail. The second level of spatial precision (e.g., as shown in FIG. 20 and FIG. 21) or the second level of hierarchy (e.g., as shown in FIG. 22 and FIG. 23) may be a second level of detail. The color information associated with the geometry of the colored point cloud at the second level of spatial precision may be the set of color attributes associated with points of the second level of detail.

The second level of spatial precision (e.g., as shown in FIG. 20 and FIG. 21) or the second level of hierarchy (e.g., as shown in FIG. 22 and FIG. 23) may be a given level (e.g., a finer level) of detail $\Lambda_2$ of the pred-lift based color transform,

$$\Lambda_2 = S^0 \subset S^0 \cup S^1 \subset \cdots \subset S^0 \cup \ldots \cup S^{L-1}.$$

The first level of spatial precision (e.g., as shown in FIG. 20 and FIG. 21) or the first level of hierarchy (e.g., as shown in FIG. 22 and FIG. 23) may be a just above level (e.g., a coarser level) of detail $\Lambda_1$,

$$\Lambda_1 = S^0 \subset S^0 \cup S^1 \subset \cdots \subset S^0 \cup \ldots \cup S^{L-2}.$$

The second level of detail of the color attributes (e.g., the finer level of detail $\Lambda_2$) may correspond to a voxel precision of the geometry of the colored point cloud. The first level of detail of the color attributes (e.g., the coarser level of detail $\Lambda_1$) may correspond to points of the colored point cloud, for example, having a quantity larger than (e.g., double of) a characteristic distance between points of the second level of detail. The characteristic distance between points of the second level of detail may be a mean distance between the points of the second level of detail. The spatial precision for the luma information may be a quantity larger (e.g., double) compared to the spatial precision for the chroma information, for example, generalizing the 4:2:0 format of image and/or video to point clouds.

The process 2200 may use a hierarchical transform with two levels of hierarchy for transforming the luma information and the chroma information. The process 2200 may provide faster computation of the chroma coefficients and the luma coefficients compared to the process 2000, for example, because the process 2200 transforms both the chroma information and the luma information of the color information 2041 (e.g., shown in FIG. 20) together compared to the process 2000 in which the chroma information and the luma information are transformed separately.

FIG. 23 shows an example method for inverse transforming luma coefficients and chroma coefficients. More specifically, FIG. 23 shows an example method for inverse transforming luma coefficients and chroma coefficients by using an inverse hierarchical transform with two levels of hierarchy. A process 2300 may comprise one or more steps for inverse transforming the luma coefficients and the chroma coefficients. The process 2300 may use the inverse hierarchical transform with two levels of hierarchy.

The inverse hierarchical transform may comprise two levels of hierarchy. The inverse hierarchical transform may operate as a first level inverse transform, as shown at step 2312 in FIG. 23. The first level inverse transform may inverse transform the chroma coefficients 2203 into the chroma information 2202 defined at the first level of spatial precision. The hierarchical transform may operate as a second level inverse transform, as shown for example at step 2310 in FIG. 23. The second level inverse transform may inverse transform the luma coefficients (e.g., the first luma coefficients 22041 and the second luma coefficients 22042) into the luma information 2201 defined at the second level of spatial precision.

The second level inverse transform (e.g., as shown at step 2310 in FIG. 23) may be (e.g., may comprise) a combination of a first to second level inverse transform (e.g., shown at step 2311 in FIG. 23) and the first level inverse transform (e.g., shown at step 2312 in FIG. 23). The first level inverse transform may transform the second luma coefficients 22042 of the luma coefficients into the intermediate luma coefficients 22111, as shown at step 2312 in FIG. 23. The first to second level inverse transform may inverse transform the first luma coefficients 22041 of the luma coefficients and the intermediate luma coefficients 22111 into the luma information 2201 at the first level of spatial precision, as shown at step 2311 in FIG. 23.

The process 2300 may be performed using (e.g., applying) one or more (e.g., any) of the transforms described herein comprising (e.g., offering) first and second levels of spatial precision of color information. The first to second level transform (e.g., as shown at step 2311 in FIG. 23) may be (e.g., may comprise) an inverse RAHT transformation. The first level inverse transform (e.g., as shown at step 2312 in FIG. 23) may be (e.g., may comprise) an inverse RAHT iterative transformation.

The intermediate luma coefficients 22111 may comprise a set of DC coefficients $\{DC_{dmax-1}^{L}\}$. The intermediate luma coefficients 22111 may comprise a set of DC coefficients $\{DC_{dmax-1}^{L}\}$, for example, if the first level of spatial precision corresponds to a maximum depth (dmax) of a tree (e.g., an occupancy octree) representing the geometry of the colored point cloud and the second level of spatial precision corresponds to a just above depth of the tree (i.e., a maximum minus 1 depth (dmax-1)). The second luma coefficients 22042 may comprise a single DC coefficient $DC_0^{L}$ (e.g., a root node) and sets of AC coefficients $\{AC_{dmax-1}^{L}\}, \ldots, \{AC_1^{L}\}$, and $\{AC_0^{L}\}$. An inverse RAHT iterative transformation may determine the set of DC coefficients $\{DC_{dmax-1}^{L}\}$, for example, by (e.g., based on) using (e.g., applying) the inverse RAHT iterative transformation to the single DC coefficient $DC_0^{L}$ (e.g., the root node) and the sets of AC coefficients $\{AC_{dmax-1}^{L}\}, \ldots, \{AC_1^{L}\}$, and $\{AC_0^{L}\}$ (e.g., as shown in FIG. 19). The luma information 2201 may be represented by a set of DC coefficients $\{DC_{dmax}^{L}\}$ (i.e., each occupied child node corresponding to a unique point (e.g., voxel) of the geometry of the colored point cloud may be associated with a unique color attribute equal to a DC coefficient of the set of DC coefficients $\{DC_{dmax}^{L}\}$). The first luma coefficients 22041 may comprise a set of AC coefficients $\{AC_{dmax}^{L}\}$. An inverse RAHT transformation may determine the set of DC coefficients $\{DC_{dmax}^{L}\}$, for example, by (e.g., based on) using (e.g., applying) the inverse RAHT transformation to the set of AC coefficients $\{AC_{dmax}^{L}\}$ and the set of DC coefficients $\{DC_{dmax-1}^{L}\}$.

The chroma information 2202 may be represented by a set of DC coefficients $\{DC_{dmax-1}^{C}\}$. The chroma coefficients 2203 may comprise a single DC coefficient $DC_0^{C}$ (e.g., a root node) and sets of AC coefficients $\{AC_{dmax-1}^{C}\}, \ldots, \{AC_1^{C}\}$, and $\{AC_0^{C}\}$. An inverse RAHT iterative transformation may obtain (e.g., may determine) the set of DC coefficients $\{DC_{dmax-1}^{C}\}$, for example, by (e.g., based on) using (e.g., applying) the inverse RAHT iterative transformation to the single DC coefficient $DC_0^{C}$ (e.g., the root node) and the sets of AC coefficients $\{AC_{dmax-1}^{C}\}, \ldots, \{AC_1^{C}\}$, and $\{AC_0^{C}\}$ (e.g., as shown in FIG. 19). The inverse RAHT iterative transformation may comprise, for example, as many iterations as depths in the tree (e.g., the occupancy octree) representing the geometry of the colored point cloud.

The inverse hierarchical transform may be (e.g., may comprise) a pred-lift based color transform. The pred-lift based color transform may comprise a first level of detail of the color attributes, for example, corresponding to the first level of hierarchy. The pred-lift based color transform may comprise a second level of detail of the color attributes, for example, corresponding to the second level of hierarchy.

The process 2300 may use an inverse hierarchical transform with two levels of hierarchy for inverse transforming the luma coefficients and the chroma coefficients. The process 2300 may provide faster computation compared to the process 2100, for example, because the process 2300 inverse transforms both the chroma information and the luma information of the color information 2141 (e.g., shown in FIG. 21) together compared to process 2100 in which the chroma information and the luma information are inverse transformed separately.

The chroma information (e.g., the chroma information 2202) described herein may be represented by a set of DC coefficients $\{DC_{dmax-1}^{C}\}$. The set of DC coefficients $\{DC_{dmax-1}^{C}\}$ may represent the chroma information of the color attributes of the geometry of the colored point cloud at the first level of spatial precision (e.g., defined by the size of nodes at depth dmax-1). The chroma information (e.g., the chroma information 2202) defined at the first level of spatial precision, as described herein, may be determined by applying a RAHT transformation to a chroma information of the color attributes of the geometry of the colored point cloud defined at the second level of spatial precision.

The RAHT transformation may determine the set of DC coefficients $\{DC^C_{dmax-1}\}$ representing the chroma information of the color attributes of the geometry of the colored point cloud defined at the first level of spatial precision (e.g., the depth dmax-1). The RAHT transformation may determine the set of DC coefficients $\{DC^C_{dmax-1}\}$, for example, if the first level of spatial precision corresponds to the maximum depth (dmax) of a tree (e.g., an occupancy octree) representing the geometry of the colored point cloud and the second level of spatial precision corresponds to the just above depth of the tree (i.e., the maximum minus 1 depth (dmax-1)). The set of DC coefficients $\{DC^C_{dmax-1}\}$ may be determined by using (e.g., applying) the RAHT transformation to the set of DC coefficients $\{DC^C_{dmax}\}$ representing the chroma information of the color attributes of the geometry of the colored point cloud defined at the second level of spatial precision (e.g., the depth dmax). The RAHT transformation based on (e.g., applied to) the set of DC coefficients $\{DC^C_{dmax}\}$ may lead to a set of DC coefficients $\{DC^C_{dmax-1}\}$ and a set of AC coefficients $\{AC^C_{dmax}\}$ being discarded.

The second level of spatial precision or the second level of detail may correspond to the first level of spatial precision or the first level of detail. The second level of spatial precision or the second level of detail may be a refinement of the first level of spatial precision or the first level of detail. The second level of spatial precision or the second level of detail may be lower than the first level of spatial precision or the first level of detail. The second level of spatial precision or the second level of detail may be, for example, a next, lower level of precision or detail after the first level of spatial precision or the first level of detail, respectively. The second level of spatial precision may equal a voxel precision of the geometry of the colored point cloud. The first level of spatial precision may equal 2x2x2 cubes of voxels.

Each level of one or more levels may be associated with a depth of a tree representing the geometry of the colored point cloud. The second level of spatial precision may correspond to the maximum depth (dmax) of the tree representing the geometry of the colored point cloud. The first level of spatial precision may correspond to the maximum depth minus one (dmax-1) of the tree. The spatial precision for the luma information may be a quantity larger (e.g., double) compared to the spatial precision for the chroma information, for example, generalizing the 4:2:0 format of image and/or video to point clouds. The tree may be an occupancy tree, for example, representing occupancy of nodes of the tree.

The reconstructing (e.g., as shown at step 2140 in FIG. 21) may comprise reconstructing the color attributes associated with the geometry 2005 of the point cloud. The reconstructing the color attributes associated with the geometry 2005 of the point cloud may comprise resampling the chroma information 2121 to the second level of spatial precision. The reconstructing the color attributes associated with the geometry 2005 of the point cloud may comprise determining the color attributes based on the resampled chroma information and the luma information 2131. The color attributes may be projected, for example, to all the points of the geometry 2005 of the colored point cloud.

Examples described herein may be advantageous for reconstructing the color attributes associated with the geometry 2005 of the point cloud. The examples described herein may be advantageous, for example, if a point cloud codec that transforms chroma information and luma information with different spatial precision internally reconstructs color point clouds for compression goals. The codec may reconstruct a colored point cloud frame to be used as a reference colored point cloud frame to predict a current colored point cloud frame, for example, to better compress the current point cloud frame. The color reconstruction may use simple chroma re-up-sampling from a first level of spatial precision to a second level of spatial precision, for example, to maintain low codec complexity. Internal chroma re-up-sampling for RAHT may be a copy (e.g., a simple copy) of a chroma sample associated with a 2x2x2 node, for example, to all of the one or more (e.g., at most 8) occupied voxels of the node.

The rendering of colored point clouds to an end-user (e.g., a viewer) may use chroma re-up-sampling (e.g., more sophisticated chroma re-up-sampling) from a first level to a second level of spatial precision. The more sophisticated chroma re-up-sampling may provide a maximized visual quality. A renderer may use the chroma re-up-sampling for the rendering of the colored point clouds to the end-user. The chroma re-up-sampling may be freely designed and/or not imposed by the codec specification. The chroma re-up-sampling may be limited (e.g., only limited) by a computing capacity of the rendering device (e.g., the renderer).

The second level of spatial precision may be equal to voxel precision. Resampling chroma information may not be required, for example, based on the second level of spatial precision being equal to the voxel precision. The reconstructing the color attributes associated with the geometry 2005 of the point cloud (e.g., as shown at step 2140 in FIG. 21) may comprise determining the color attributes, for example, based on the chroma information 2121 and the luma information 2131. The color attributes may be projected to the points (e.g., all points) of the geometry 2005 of the colored point cloud.

The chroma information (e.g., the chroma information 2011 in FIG. 20 and/or the chroma information 2202 in FIG. 22) may represent at least one residual chroma component. Residual chroma components may be (e.g., may comprise) the difference between chroma components of the color attributes associated with the points of the geometry of the colored point cloud and chroma predictors.

The luma information (e.g., the luma information 2012 in FIG. 20 and/or the luma information 2201 in FIG. 22) may represent a residual luma component. Residual luma components may be (e.g., may comprise) the difference between luma components of the color attributes associated with the points of the geometry of the colored point cloud and luma predictors.

An encoder may transform the residual chroma components and the residual luma components. The transforming the chroma information of the color attributes (e.g., as shown at step 2010 in FIG. 20 and/or step 2212 in FIG. 22) may comprise transforming the at least one residual chroma component into residual chroma coefficients defined at the first level of spatial precision. The transforming the luma information of the color attributes (e.g., as shown at step 2020 in FIG. 20 and/or step 2210 in FIG. 22) may comprise transforming the residual luma component into residual luma coefficients defined at the second level of spatial precision. The encoding the chroma and luma coefficients (e.g., as shown at step 2030 in FIG. 20) may comprise encoding the residual luma coefficients and the residual chroma coefficients.

A decoder may determine the residual chroma coefficients and the residual luma coefficients. The decoding the chroma and luma coefficients (e.g., at step 2120 in FIG. 21) may comprise decoding, from the bitstream, the residual luma coefficients and the residual chroma coefficients. The determining the chroma information (e.g., at step 2120 in FIG. 21 and/or step 2312 in FIG. 23) may comprise determining at least one residual chroma component, for example, based on inverse transforming, at a first level of spatial precision and based on a geometry of a colored point cloud, the decoded residual chroma coefficients. The determining the luma information (e.g., at step 2130 in FIG. 21 and/or step 2310 in FIG. 23) may comprise determining a residual luma component, for example, based on inverse transforming, at a second level of spatial precision and based on the geometry of the colored point cloud, the decoded residual luma coefficients. The reconstructing the color attributes (e.g., at step 2140 in FIG. 21) may comprise determining the chroma information, for example, based on adding the at least one residual chroma component with at least one chroma predictor. The reconstructing the color attributes (e.g., at step 2140 in FIG. 21) may comprise determining the luma information, for example, based on adding the residual luma component with a luma predictor.

Transforming chroma information and luma information with different spatial precisions may (or may not) be wanted (e.g., considered advantageous). The same spatial precision (e.g., voxel precision) may be used for chroma information and luma information, for example, in lossless compression and/or high-quality workflows, (e.g., as used in post-production and/or raw storage). Transforming chroma information and luma information with different spatial precisions may be used to optimize the tradeoff between bitrate and visual quality, for example, for distribution of colored point clouds to end-users.

The encoding (e.g., as shown at step 2030 in FIG. 20) may comprise encoding a syntax element. The syntax element may signal (e.g., may indicate) the activation (or not) of the transforming chroma information and luma information with different spatial precisions. The syntax element may be a flag coded in a Sequence Parameter Set (SPS). The syntax element may be a flag coded in an Attribute Parameter Set (APS). The syntax element may be a flag coded in an Attribute Data Unit Header (e.g., an Attribute Brick Header).

The decoding (e.g., as shown at step 2110 in FIG. 21) may comprise decoding a syntax element. The syntax element may indicate (e.g., may signal) the activation (or not) of the transforming chroma information and luma information with different spatial precisions. The syntax element may be a flag coded in a SPS. The syntax element may be a flag coded in an APS. The syntax element may be a flag coded in an Attribute Data Unit Header (e.g., an Attribute Brick Header).

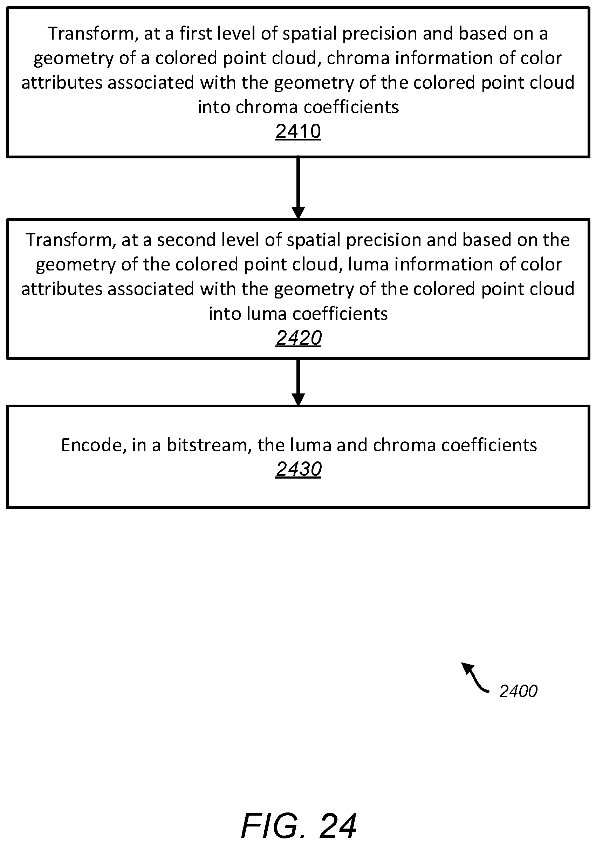

FIG. 24 shows an example method for encoding color attributes of a colored point cloud. The method (e.g., a method 2400 shown in FIG. 24) may be performed (e.g., implemented) by an encoder (e.g., the encoder 114 in FIG. 1). The method 2400 may correspond to the process 2000 in FIG. 20. At step 2410, an encoder may transform, at a first level of spatial precision and based on a geometry of a colored point cloud, chroma information of color attributes associated with the geometry of the colored point cloud into chroma coefficients. At step 2420, the encoder may transform, at a second level of spatial precision and based on the geometry of the colored point cloud, luma information of color attributes associated with the geometry of the colored point cloud into luma coefficients. The first level and the second level may be different. The second level may, for example, be at a higher spatial precision than the first level. The second level may, for example, be a voxel precision. At step 2430, the encoder may encode, in a bitstream, the luma and chroma coefficients.

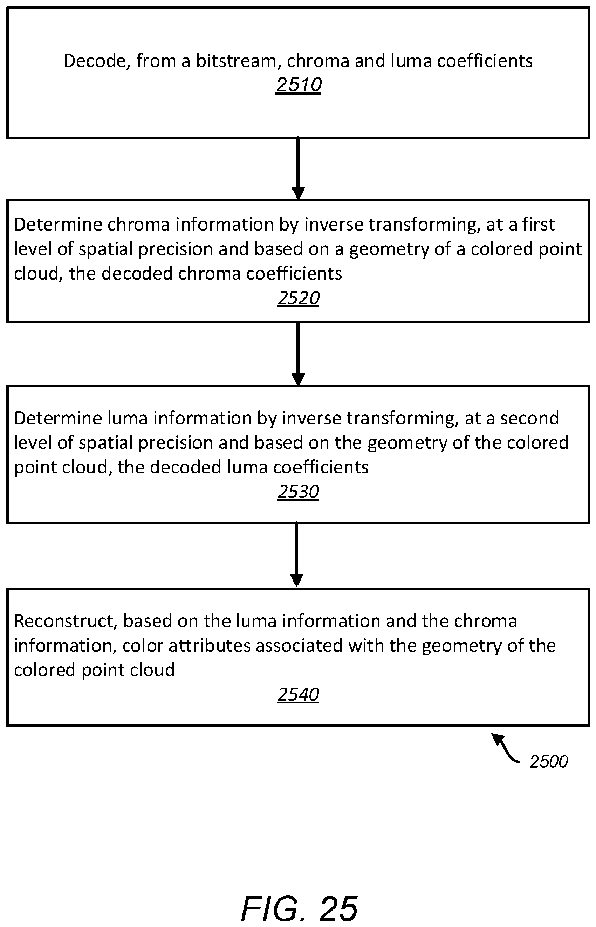

FIG. 25 shows an example method for decoding color attributes of a colored point cloud. The method (e.g., a method 2500 shown in FIG. 25) may be performed (e.g., implemented) by a decoder (e.g., the decoder 120 in FIG. 1). The method 2500 may correspond to the process 2100 in FIG. 21. At step 2510, a decoder may decode, from a bitstream, chroma and luma coefficients. At step 2520, the decoder may determine chroma information by inverse transforming, at a first level of spatial precision and based on a geometry of a colored point cloud, the decoded chroma coefficients. At step 2530, the decoder may determine luma information by inverse transforming, at a second level of spatial precision and based on the geometry of the colored point cloud, the decoded luma coefficients. The first level and the second level may be different. The second level may, for example, be at a higher spatial precision than the first level. The second level may, for example, be a voxel precision. At step 2540, the decoder may reconstruct, based on the luma information and the chroma information, color attributes associated with the geometry of the colored point cloud.

At least some features (e.g., embodiments) described herein may be implemented in hardware using analog and/or digital circuits in software. At least some features (e.g., embodiments) described herein may be implemented in hardware using analog and/or digital circuits in software, for example, through the execution of instructions by one or more general purpose or special-purpose processors and/or as a combination of hardware and software. At least some features (e.g., embodiments) described herein may be implemented in an environment of a computer system and/or other processing system.

FIG. 26 shows an example computer system in which examples of the present disclosure may be implemented. The example computer system may be a computer system 2600, as shown in FIG. 26. One or more steps of the methods described herein (e.g., the blocks shown in FIGS. 1, 6, 10-13, and 20-25) may execute on one or more computer systems 2600. The computer systems 2600 may be interconnected by one or more networks to form a cluster of computer systems that may act as a single pool of seamless resources, for example, if more than one computer system 2600 is used. The interconnected computer systems 2600 may form a "cloud" of computers.

The computer system 2600 may comprise one or more processors. The computer system 2600 may comprise one or more processors, for example, processor 2604. The processor 2604 may be, for example, a special purpose processor, general purpose processor, microprocessor, or digital signal processor. The processor 2604 may be connected to a communication infrastructure 2602 (e.g., a bus or a network). The computer system 2600 may comprise a main memory 2606 (e.g., a random access memory (RAM)).

The computer system 2600 may comprise a secondary memory 2608. The secondary memory 2608 may comprise, for example, a hard disk drive 2610 and/or a removable storage drive 2612 (e.g., representing a magnetic tape drive, an optical disk drive, and/or the like). The removable storage drive 2612 may read from and/or write to a removable storage unit 2616. The removable storage unit 2616 may represent, for example, a magnetic tape, optical disk, and/or the like. The removable storage unit 2616 may comprise a computer usable storage medium having stored therein computer software and/or data.

Additionally, or alternatively, the secondary memory 2608 may comprise other (e.g., similar) means for allowing computer programs and/or other instructions to be loaded into the computer system 2600. The other means may comprise, for example, a removable storage unit 2618 and an interface 2614. The other means may comprise a program cartridge and a cartridge interface (e.g., such as that found in video game devices), a removable memory chip (e.g., an EPROM or PROM) and an associated socket, a thumb drive and a USB port, and/or other removable storage units 2618 and interfaces 2614, for example, which allow software and/or data to be transferred from the removable storage unit 2618 to the computer system 2600.

The computer system 2600 may comprise a communications interface 2620. The communications interface 2620 may allow software and/or data to be transferred between the computer system 2600 and one or more external devices. The communications interface 2620 may comprise, for example, a modem, a network interface (e.g., an Ethernet card), a communications port, and the like. Software and data transferred via the communications interface 2620 may be in the form of signals. The signals may be electronic, electromagnetic, optical, and/or other signals capable of being received by the communications interface 2620. The signals may be provided to the communications interface 2620 via a communications path 2622. The communications path 2622 may carry signals, for example, using wire or cable, fiber optics, a phone line, a cellular phone link, an RF link, and/or other communications channels.

The computer system 2600 may comprise one or more sensor(s) 2624. The sensor(s) 2624 may measure and/or detect one or more physical quantities. The sensor(s) 2624 may convert the measured and/or detected physical quantities into an electrical signal in digital and/or analog form. The sensor(s) 2624 may comprise, for example, an eye tracking sensor to track the eye movement of a user. A display of a point cloud may be updated, for example, based on the eye movement of a user. The sensor(s) 2624 may comprise, for example, a head tracking sensor to the track the head movement of a user. A display of a point cloud may be updated, for example, based on the head movement of a user. The sensor(s) 2624 may comprise, for example, a camera sensor for taking photographs and/or a 3D scanning device (e.g., a laser scanning, structured light scanning, and/or modulated light scanning device). 3D scanning devices may determine geometry information, for example, by moving one or more laser heads, structured light, and/or modulated light cameras relative to an object and/or a scene being scanned. The geometry information may be used to construct a point cloud.

The terms "computer program medium" and "computer readable medium" used herein may be used to refer to tangible storage media. The tangible storage media may comprise (e.g., may be) the removable storage units 2616 and 2618 and/or a hard disk installed in the hard disk drive 2610. Computer program products (e.g., the tangible storage media) may be means for providing software to the computer system 2600. Computer programs (e.g., computer control logic) may be stored in the main memory 2606 and/or the secondary memory 2608. The computer programs may be received via the communications interface 2620. The computer programs, when executed, may enable the computer system 2600 to implement the features (e.g., embodiments) described herein. The computer programs, when executed, may enable the processor 2604 to implement one or more of the processes and/or methods described herein. The computer programs may represent controllers of the computer system 2600.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 27 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2730 may include one or more processors 2731, which may execute instructions stored in the random-access memory (RAM) 2733, the removable media 2734 (such as a Universal Serial Bus (USB) drive, compact disk (CD) or digital versatile disk (DVD), or floppy disk drive), or any other desired storage medium. Instructions may also be stored in an attached (or internal) hard drive 2735. The computing device 2730 may also include a security processor (not shown), which may execute instructions of one or more computer programs to monitor the processes executing on the processor 2731 and any process that requests access to any hardware and/or software components of the computing device 2730 (e.g., ROM 2732, RAM 2733, the removable media 2734, the hard drive 2735, the device controller 2737, a network interface 2739, a GPS 2741, a Bluetooth interface 2742, a WiFi interface 2743, etc.). The computing device 2730 may include one or more output devices, such as the display 2736 (e.g., a screen, a display device, a monitor, a television, etc.), and may include one or more output device controllers 2737, such as a video processor. There may also be one or more user input devices 2738, such as a remote control, keyboard, mouse, touch screen, microphone, etc. The computing device 2730 may also include one or more network interfaces, such as a network interface 2739, which may be a wired interface, a wireless interface, or a combination of the two. The network interface 2739 may provide an interface for the computing device 2730 to communicate with a network 2740 (e.g., a RAN, or any other network). The network interface 2739 may include a modem (e.g., a cable modem), and the external network 2740 may include communication links, an external network, an in-home network, a provider's wireless, coaxial, fiber, or hybrid fiber/coaxial distribution system (e.g., a DOCSIS network), or any other desired network. Additionally, the computing device 2730 may include a location-detecting device, such as a global positioning system (GPS) microprocessor 2741, which may be configured to receive and process global positioning signals and determine, with possible assistance from an external server and antenna, a geographic position of the computing device 2730.

The example in FIG. 27 may be a hardware configuration, although the components shown may be implemented as software as well. Modifications may be made to add, remove, combine, divide, etc. components of the computing device 2730 as desired. Additionally, the components may be implemented using basic computing devices and components, and the same components (e.g., processor 2731, ROM storage 2732, display 2736, etc.) may be used to implement any of the other computing devices and components described herein. For example, the various components described herein may be implemented using computing devices having components such as a processor executing computer-executable instructions stored on a computer-readable medium, as shown in FIG. 27. Some or all of the entities described herein may be software based, and may coexist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising decoding, by a computing device and from a bitstream, chroma coefficients and luma coefficients.

Clause 2. The method of clause 1, further comprising determining chroma information by inverse transforming, at a first level of spatial precision and based on a geometry of a colored point cloud associated with content, the decoded chroma coefficients.

Clause 3. The method of clause 1 or clause 2, further comprising determining luma information by inverse transforming, at a second level of spatial precision and based on the geometry of the colored point cloud, the decoded luma coefficients.

Clause 4. The method of any one of clauses 1 to 3, further comprising determining, based on the luma information and the chroma information, color attributes associated with the geometry of the colored point cloud.

Clause 5. The method of any one of clauses 1 to 4, wherein an inverse hierarchical transform, for inverse transforming the decoded chroma coefficients and the decoded luma coefficients, comprises a first level of hierarchy corresponding to the first level of spatial precision.

Clause 6. The method of any one of clauses 1 to 5, wherein an inverse hierarchical transform, for inverse transforming the decoded chroma coefficients and the decoded luma coefficients, comprises a second level of hierarchy corresponding to the second level of spatial precision.

Clause 7. The method of any one of clauses 1 to 6, wherein the second level of spatial precision is a refinement of the first level of spatial precision, or a reduced level of precision than the first level of spatial precision.

Clause 8. The method of any one of clauses 1 to 7, wherein the second level of spatial precision corresponds to a voxel precision of the geometry of the colored point cloud.

Clause 9. The method of any one of clauses 1 to 8, wherein the first level of spatial precision corresponds to 2x2x2 cubes of voxels.

Clause 10. The method of any one of clauses 1 to 9, wherein the second level of spatial precision corresponds to a maximum depth of a tree representing the geometry of the colored point cloud.

Clause 11. The method of any one of clauses 1 to 10, wherein the first level of spatial precision corresponds to a depth preceding the maximum depth of the tree.

Clause 12. The method of any one of clauses 1 to 11, wherein determining the chroma information and the luma information further comprises using a prediction-based color transform to inverse transform the chroma information and the luma information.

Clause 13. The method of any one of clauses 1 to 12, wherein the prediction-based color transform comprises a first level of detail of the color attributes corresponding to the first level of spatial precision.

Clause 14. The method of any one of clauses 1 to 13, wherein the prediction-based color transform comprises a second level of detail of the color attributes corresponding to the second level of spatial precision.

Clause 15. The method of any one of clauses 1 to 14, wherein the prediction-based color transform is a pred-lift based color transform.

Clause 16. The method of any one of clauses 1 to 15, wherein the determining the color attributes associated with the geometry of the colored point cloud comprises resampling the chroma information to the second level of spatial precision.

Clause 17. The method of any one of clauses 1 to 16, wherein the determining the color attributes associated with the geometry of the colored point cloud comprises determining the color attributes based on the resampled chroma information and the luma information.

Clause 18. The method of any one of clauses 1 to 17, wherein the determining the color attributes associated with the geometry of the colored point cloud comprises projecting the color attributes to points of the geometry of the colored point cloud.

Clause 19. The method of any one of clauses 1 to 18, wherein determining the luma information at the second level of spatial precision further comprises using a first level inverse transform to inverse transform second luma coefficients of the luma coefficients into intermediate luma coefficients.

Clause 20. The method of any one of clauses 1 to 19, wherein determining the luma information at the second level of spatial precision further comprises using a first to second level inverse transform to inverse transform first luma coefficients of the luma coefficients and the intermediate luma coefficients.

Clause 21. The method of any one of clauses 1 to 20, wherein the first to second level transform is an inverse region adaptive hierarchical transform (RAHT) transformation.

Clause 22. The method of any one of clauses 1 to 21, wherein the first level transform is an inverse RAHT iterative transformation.

Clause 23. The method of any one of clauses 1 to 22, wherein the chroma information represents two chroma components of a three-component color space.

Clause 24. The method of any one of clauses 1 to 23, wherein the luma information represents one luma component of the three-component color space.

Clause 25. A computing device comprising one or more processors and memory storing instructions that, when executed by the one or more processors, cause the computing device to perform the method of any one of clauses 1 to 24.

Clause 26. A system comprising a first computing device configured to perform the method of any one of clauses 1 to 24, and a second computing device configured to encode the chroma coefficients and the luma coefficients.

Clause 27. A computer-readable medium storing instructions that, when executed, cause performance of the method of any one of clauses 1 to 24.

Clause 28. A method comprising inverse transforming, by a computing device and based on a geometry of a colored point cloud associated with content, chroma coefficients using an inverse hierarchical transform to determine chroma information at a first level of spatial precision.

Clause 29. The method of clause 28, further comprising inverse transforming, based on the geometry of the colored point cloud, luma coefficients using the inverse hierarchical transform to determine luma information defined at a second level of spatial precision.

Clause 30. The method of clause 28 or clause 29, wherein the inverse hierarchical transform comprises a first level of hierarchy corresponding to the first level of spatial precision.

Clause 31. The method of any one of clauses 28 to 30, wherein the inverse hierarchical transform comprises a second level of hierarchy corresponding to the second level of spatial precision.

Clauses 32. The method of any one of clauses 28 to 31, further comprising decoding, from a bitstream, the chroma coefficients and the luma coefficients.

Clause 33. The method of any one of clauses 28 to 32, further comprising determining, based on the luma information and the chroma information, color attributes associated with the geometry of the colored point cloud.

Clause 34. The method of any one of clauses 28 to 33, wherein determining the luma information defined at the second level of spatial precision further comprises using a first level inverse transform to inverse transform second luma coefficients of the luma coefficients into intermediate luma coefficients.

Clause 35. The method of any one of clauses 28 to 34, wherein determining the luma information defined at the second level of spatial precision further comprises using a first to second level inverse transform to inverse transform first luma coefficients of the luma coefficients and the intermediate luma coefficients.

Clause 36. The method of any one of clauses 28 to 35, wherein the first to second level transform is an inverse region adaptive hierarchical transform (RAHT) transformation.

Clause 37. The method of any one of clauses 28 to 36, wherein the first level transform is an inverse RAHT iterative transformation.

Clause 38. The method of any one of clauses 28 to 37, wherein the inverse RAHT iterative transformation comprises a same quantity of iterations as a quantity of depths in a tree representing the geometry of the colored point cloud.

Clause 39. The method of any one of clauses 28 to 38, wherein the tree is an occupancy tree representing occupancy of nodes of the tree.

Clause 40. The method of any one of clauses 28 to 39, wherein the inverse hierarchical transform is a pred-lift based color transform comprising a first level of detail of color attributes associated with the geometry of the colored point cloud corresponding to the first level of hierarchy.

Clause 41. The method of any one of clauses 28 to 40, wherein the inverse hierarchical transform is a pred-lift based color transform comprising a second level of detail of the color attributes associated with the geometry of the colored point cloud corresponding to the second level of hierarchy.

Clause 42. The method of any one of clauses 1 to 41, wherein a prediction-based color transform or the inverse hierarchical transform is a pred-lift based color transform comprising a first level of detail of color attributes associated with the geometry of the colored point cloud corresponding to the first level of spatial precision or the first level of hierarchy.

Clause 43. The method of any one of clauses 1 to 42, wherein a prediction-based color transform or the inverse hierarchical transform is a pred-lift based color transform comprising a second level of detail of the color attributes associated with the geometry of the colored point cloud corresponding to the second level of spatial precision or the second level of hierarchy.

Clause 44. A computing device comprising one or more processors and memory storing instructions that, when executed by the one or more processors, cause the computing device to perform the method of any one of clauses 28 to 43.

Clause 45. A system comprising a first computing device configured to perform the method of any one of clauses 28 to 43, and a second computing device configured to encode the chroma coefficients and the luma coefficients.

Clause 46. A computer-readable medium storing instructions that, when executed, cause performance of the method of any one of clauses 28 to 43.

Clause 47. A method comprising transforming, by a computing device at a first level of spatial precision and based on a geometry of a colored point cloud associated with content, chroma information of color attributes associated with the geometry of the colored point cloud into chroma coefficients.

Clause 48. The method of clause 47, further comprising transforming, at a second level of spatial precision and based on the geometry of the colored point cloud, luma information of color attributes associated with the geometry of the colored point cloud into luma coefficients.

Clause 49. The method of clause 47 or clause 48, further comprising encoding, into a bitstream, the luma coefficients and the chroma coefficients.

Clause 50. The method of any one of clauses 47 to 49, wherein the transforming the chroma information and the transforming the luma information comprises using a hierarchical transform to transform the chroma information and the luma information.

Clause 51. The method of any one of clauses 47 to 50, wherein the hierarchical transform comprises a first level of hierarchy corresponding to the first level of spatial precision.

Clause 52. The method of any one of clauses 47 to 51, wherein the hierarchical transform comprises a second level of hierarchy corresponding to the second level of spatial precision.

Clause 53. The method of any one of clauses 47 to 52, wherein the second level of hierarchy comprises a second to first level transform and a first level transform.

Clause 54. The method of any one of clauses 47 to 53, wherein the chroma information represents two chroma components of a three-component color space.

Clause 55. The method of any one of clauses 47 to 54, wherein the luma information represents one luma component of the three-component color space.

Clause 56. The method of any one of clauses 47 to 55, wherein the encoding further comprises encoding a syntax element that signals activation of the transforming the chroma information and the transforming the luma information.

Clause 57. A computing device comprising one or more processors and memory storing instructions that, when executed by the one or more processors, cause the computing device to perform the method of any one of clauses 47 to 56.

Clause 58. A system comprising a first computing device configured to decode the luma coefficients and the chroma coefficients, and a second computing device configured to perform the method of any one of clauses 47 to 56.

Clause 59. A computer-readable medium storing instructions that, when executed, cause performance of the method of any one of clauses 47 to 56.

Clause 60. A method comprising transforming, at a first level of spatial precision and based on a geometry of a colored point cloud, chroma information of color attributes associated with the geometry of the colored point cloud into chroma coefficients.

Clause 61. The method of clause 60, further comprising transforming, at a second level of spatial precision and based on the geometry of the colored point cloud, luma information of color attributes associated with the geometry of the colored point cloud into luma coefficients.

Clause 62. The method of clause 60 or clause 61, further comprising encoding, in a bitstream, the luma and chroma coefficients.

Clause 63. The method of any one of clauses 60 to 62, wherein the transforming the chroma information at the first level of spatial precision and the transforming the luma information at the second level of spatial precision use an iterative RAHT transformation.

Clause 64. The method of any one of clauses 60 to 63, wherein the transforming the chroma information at the first level of spatial precision and the transforming the luma information at the second level of spatial precision uses a hierarchical transform with a first and a second level of hierarchy corresponding to the first and second levels of spatial precision, respectively.

Clause 65. The method of any one of clauses 60 to 64, wherein the hierarchical transform operates as either a first level transform for transforming the chroma information defined at the first level of spatial precision into the chroma coefficients or a second level transform for transforming the luma information defined at the second level of spatial precision into the luma coefficients.

Clause 66. The method of any one of clauses 60 to 65, wherein the second level transform is a combination of a second to first level transform and of the first level transform, the second to first level transform transforming the luma information into intermediate luma coefficients representing the luma information at the first level of spatial precision and into first luma coefficients of a set of luma coefficients and the first level transform transforming the intermediate luma coefficients into second luma coefficients of the set of luma coefficients.

Clause 67. The method of any one of clauses 60 to 66, wherein the second to first level transform is a RAHT transformation.

Clause 68. The method of any one of clauses 60 to 67, wherein the first level transform is an iterative RAHT transformation.

Clause 69. The method of any one of clauses 60 to 68, wherein the iterative RAHT transformation comprises as many iterations as depths in a tree representing the geometry of the colored point cloud.

Clause 70. The method of any one of clauses 60 to 69, wherein the tree is an occupancy tree representing occupancy of nodes of the tree.

Clause 71. The method of any one of clauses 60 to 70, wherein the chroma information defined at the first level of spatial precision may be determined by applying a RAHT transformation to a chroma information of the color attributes of the geometry of the colored point cloud defined at the second level of spatial precision.

Clause 72. The method of any one of clauses 60 to 71, wherein the transforming the chroma information at the first level of spatial precision and the transforming the luma information at the second level of spatial precision uses a prediction based color transform with a first and a second level of detail of the color attributes corresponding to the first and second levels of spatial precision, respectively.

Clause 73. The method of any one of clauses 60 to 72, wherein the prediction based color transform is a pred-lift based color transform.

Clause 74. The method of any one of clauses 60 to 73, wherein the hierarchical transform is a pred-lift based color transform with a first and a second level of detail of the color attributes corresponding to the first and second levels of hierarchy, respectively.

Clause 75. The method of any one of clauses 60 to 74, wherein the second level of detail of the color attributes corresponds to a voxel precision of the geometry of the colored point cloud and the first level of detail of the color attributes corresponds to points of the colored point cloud having the double of a characteristic distance between points of the second level of detail.

Clause 76. The method of any one of clauses 60 to 75, wherein the characteristic distance is a mean distance between points of the colored point cloud at the second level of detail.

Clause 77. The method of any one of clauses 60 to 76, wherein the second level of spatial precision or the second level of detail is a refinement of the first level of spatial precision or the first level of detail.

Clause 78. The method of any one of clauses 60 to 77, wherein the second level of spatial precision or the second level of detail is a lower than the first level of spatial precision or the first level of detail.

Clause 79. The method of any one of clauses 60 to 78, wherein the second level of spatial precision or the second level of detail is a next, lower level of precision or detail after the first level of spatial precision or the first level of detail, respectively.

Clause 80. The method of any one of clauses 60 to 79, wherein the second level of spatial precision equals a voxel precision of the geometry of the colored point cloud and the first level of spatial precision equals a 2x2x2 cubes of voxels.

Clause 81. The method of any one of clauses 60 to 80, wherein the second level of spatial precision corresponds to the maximum depth of a tree representing the geometry of the colored point cloud and the first level of spatial precision corresponds to the maximum depth minus one of the tree.

Clause 82. The method of any one of clauses 60 to 81, wherein the tree is an occupancy tree representing occupancy of nodes of the tree.

Clause 83. The method of any one of clauses 60 to 82, wherein the chroma information represents two chroma components and the luma information represents a luma component of a three-component color space comprising a luma component and two chroma components.

Clause 84. The method of any one of clauses 60 to 83, wherein all the chroma components of the chroma information are defined at the same first level of spatial precision.

Clause 85. The method of any one of clauses 60 to 84, wherein the colors are represented in the YUV or YCbCr color spaces.

Clause 86. The method of any one of clauses 60 to 85, wherein the chroma information represents at least one residual chroma component and the luma information represents a residual luma component.

Clause 87. The method of any one of clauses 60 to 86, wherein the residual luma and the chroma components are differences between luma and chroma components of the color attributes associated with the points of the geometry of the colored point cloud and luma and chroma predictors, respectively.

Clause 88. The method of any one of clauses 60 to 87, wherein the transforming the chroma information of the color attributes comprises transforming the at least one residual chroma component into residual chroma coefficients defined at the first level of spatial precision.

Clause 89. The method of any one of clauses 60 to 88, wherein the transforming the luma information of the color attributes comprises transforming the residual luma component into residual luma coefficients defined at the second level of spatial precision.

Clause 90. The method of any one of clauses 60 to 89, wherein the encoding the chroma and luma coefficients comprises encoding the residual luma and chroma coefficients.

Clause 91. The method of any one of clauses 60 to 90, wherein the encoding further comprises encoding a syntax element to signal the activation or not of the transforming chroma and luma information with different spatial precisions.

Clause 92. The method of any one of clauses 60 to 91, wherein the syntax element is a flag coded in a Sequence Parameter Set or an Attribute Parameter Set.

Clause 93. A computing device comprising one or more processors and memory storing instructions that, when executed by the one or more processors, cause the computing device to perform the method of any one of clauses 60 to 92.

Clause 94. A system comprising a first computing device configured to decode the luma coefficients and the chroma coefficients, and a second computing device configured to perform the method of any one of clauses 60 to 92.

Clause 95. A computer-readable medium storing instructions that, when executed, cause performance of the method of any one of clauses 60 to 92.

Clause 96. A method comprising decoding, from a bitstream, chroma and luma coefficients.

Clause 97. The method of clause 96, further comprising determining chroma information by inverse transforming, at a first level of spatial precision and based on a geometry of a colored point cloud, the decoded chroma coefficients.

Clause 98. The method of clause 96 or clause 97, further comprising determining luma information by inverse transforming, at a second level of spatial precision and based on the geometry of the colored point cloud, the decoded luma coefficients.

Clause 99. The method of any one of clauses 96 to 98, further comprising reconstructing, based on the luma information and the chroma information, color attributes associated with the geometry of the colored point cloud.

Clause 100. The method of any one of clauses 96 to 99, wherein the inverse transforming the chroma coefficients at the first level of spatial precision and the inverse transforming the luma coefficients at the second level of spatial precision use an inverse RAHT iterative transformation.

Clause 101. The method of any one of clauses 96 to 100, wherein the inverse transforming the chroma coefficients at the first level of spatial precision and the inverse transforming the luma coefficients at the second level of spatial precision uses an inverse hierarchical transform with the first and the second level of hierarchy corresponding to the first and second levels of spatial precision, respectively.

Clause 102. The method of any one of clauses 96 to 101, wherein the inverse hierarchical transform operates as either a first level inverse transform for inverse transforming the chroma coefficients into chroma information defined at the first level of spatial precision or a second level inverse transform for inverse transforming the luma coefficients into luma information defined at the second level of spatial precision.

Clause 103. The method of any one of clauses 96 to 102, wherein the second level inverse transform is a combination of a first to second level inverse transform and of the first level inverse transform, the first level inverse transform transforming the second luma coefficients of the luma coefficients into intermediate luma coefficients and the first to second level inverse transform inverse transforming the first luma coefficients of the luma coefficients and the intermediate luma coefficients into the luma information at the first level of spatial precision.

Clause 104. The method of any one of clauses 96 to 103, wherein the first to second level inverse transform is an inverse RAHT transformation.

Clause 105. The method of any one of clauses 96 to 104, wherein the first level transform is an inverse RAHT iterative transformation.

Clause 106. The method of any one of clauses 96 to 105, wherein the inverse RAHT iterative transformation comprises as many iterations as depths in a tree representing the geometry of the colored point cloud.

Clause 107. The method of any one of clauses 96 to 106, wherein the tree is an occupancy tree representing occupancy of nodes of the tree.

Clause 108. The method of any one of clauses 96 to 107, wherein the chroma information defined at the first level of spatial precision may be determined by applying a RAHT transformation to a chroma information of the color attributes of the geometry of the colored point cloud defined at the second level of spatial precision.

Clause 109. The method of any one of clauses 96 to 108, wherein the inverse transforming the chroma information at the first level of spatial precision and the inverse transforming the luma information at the second level of spatial precision uses a prediction based color transform with a first and second level of detail of the color attributes corresponding to the first and second levels of spatial precision, respectively.

Clause 110. The method of any one of clauses 96 to 109, wherein the prediction based color transform is a pred-lift based color transform.

Clause 111. The method of any one of clauses 96 to 110, wherein the inverse hierarchical transform is a pred-lift based color transform with a first and a second level of detail of the color attributes corresponding to the first and second levels of hierarchy, respectively.

Clause 112. The method of any one of clauses 96 to 111, wherein the second level of detail of the color attributes corresponds to a voxel precision of the geometry of the colored point cloud and the first level of detail of the color attributes corresponds to points of the colored point cloud having the double of a characteristic distance between points of the second level of detail.

Clause 113. The method of any one of clauses 96 to 112, wherein the characteristic distance is a mean distance between points of the colored point cloud at the second level of detail.

Clause 114. The method of any one of clauses 96 to 113, wherein the second level of spatial precision or the second level of detail is a refinement of the first level of spatial precision or the first level of detail.

Clause 115. The method of any one of clauses 96 to 114, wherein the second level of spatial precision or the second level of detail is a lower than the first level of spatial precision or the first level of detail.

Clause 116. The method of any one of clauses 96 to 115, wherein the second level of spatial precision or the second level of detail is a next, lower level of precision or detail after the first level of spatial precision or the first level of detail, respectively.

Clause 117. The method of any one of clauses 96 to 116, wherein the second level of spatial precision equals a voxel precision of the geometry of the colored point cloud and the first level of spatial precision equals a 2x2x2 cubes of voxels.

Clause 118. The method of any one of clauses 96 to 117, wherein the second level of spatial precision corresponds to the maximum depth of a tree representing the geometry of the colored point cloud and the first level of spatial precision corresponds to the maximum depth minus one of the tree.

Clause 119. The method of any one of clauses 96 to 118, wherein the tree is an occupancy tree representing occupancy of nodes of the tree.

Clause 120. The method of any one of clauses 96 to 119, wherein the reconstructing the color attributes associated with the geometry of the point cloud comprises resampling the chroma information to the second level of spatial precision.

Clause 121. The method of any one of clauses 96 to 120, wherein the reconstructing the color attributes associated with the geometry of the point cloud comprises determining the color attributes based on the resampled chroma information with the luma information.

Clause 122. The method of any one of clauses 96 to 121, wherein the color attributes are projected to the points of the geometry of the colored point cloud.

Clause 123. The method of any one of clauses 96 to 122, wherein the reconstructing the color attributes associated with the geometry of the point cloud comprises determining the color attributes based on the chroma information and the luma information.

Clause 124. The method of any one of clauses 96 to 123, wherein the chroma information represents two chroma components and the luma information represents a luma component of a three-component color space comprising a luma component and two chroma components.

Clause 125. The method of any one of clauses 96 to 124, wherein all the chroma components of the chroma information are defined at the same first level of spatial precision.

Clause 126. The method of any one of clauses 96 to 125, wherein the colors are represented in the YUV or YCbCr color spaces.

Clause 127. The method of any one of clauses 96 to 126, wherein the chroma information represents at least one residual chroma component and the luma information represents a residual luma component.

Clause 128. The method of any one of clauses 96 to 127, wherein the residual luma and the chroma components are differences between luma and chroma components of the color attributes associated with the points of the geometry of the colored point cloud and luma and chroma predictors, respectively.

Clause 129. The method of any one of clauses 96 to 128, wherein the inverse transforming the chroma and luma coefficients comprises decoding, from the bitstream, residual luma coefficients and residual chroma coefficients.

Clause 130. The method of any one of clauses 96 to 129, wherein the determining the chroma information comprises determining at least one residual chroma component based on inverse transforming, at a first level of spatial precision and based on a geometry of a colored point cloud, the decoded residual chroma coefficients.

Clause 131. The method of any one of clauses 96 to 130, wherein the determining the luma information comprises determining a residual luma component by inverse transforming, at a second level of spatial precision and based on the geometry of the colored point cloud, the decoded residual luma coefficients.

Clause 132. The method of any one of clauses 96 to 131, wherein the reconstructing the color attributes comprises determining the chroma information further based on adding the at least one residual chroma component with at least one chroma predictor and determining the luma information further based on adding the residual luma component with a luma predictor.

Clause 133. The method of any one of clauses 96 to 132, wherein encoding comprises encoding a syntax element to signal the activation or not of the transforming chroma and luma information with different spatial precisions.

Clause 134. The method of any one of clauses 96 to 133, wherein the syntax element is a flag coded in a Sequence Parameter Set or an Attribute Parameter Set.

Clause 135. A computing device comprising one or more processors and memory storing instructions that, when executed by the one or more processors, cause the computing device to perform the method of any one of clauses 96 to 134.

Clause 136. A system comprising a first computing device configured to perform the method of any one of clauses 96 to 134, and a second computing device configured to encode the chroma coefficients and the luma coefficients.

Clause 137. A computer-readable medium storing instructions that, when executed, cause performance of the method of any one of clauses 96 to 134.

A computing device may perform a method comprising multiple operations. The computing device may comprise a decoder. The computing device may decode chroma coefficients and luma coefficients, for example, from a bitstream. The computing device may determine the chroma information, for example, by inverse transforming, at a first level of spatial precision and based on a geometry of a colored point cloud associated with content, the decoded chroma coefficients. The computing device may determine luma information, for example, by inverse transforming, at a second level of spatial precision and based on the geometry of the colored point cloud, the decoded luma coefficients. The computing device may determine color attributes associated with the geometry of the colored point cloud, for example, based on the luma information and the chroma information. The computing device may use an inverse hierarchical transform for inverse transforming the decoded chroma coefficients and the decoded luma coefficients. The inverse hierarchical transform may comprise a first level of hierarchy, for example, corresponding to the first level of spatial precision. The inverse hierarchical transform may comprise a second level of hierarchy, for example, corresponding to the second level of spatial precision. The second level of spatial precision may be, for example, a refinement of the first level of spatial precision. The second level of precision may be, for example, a reduced level of precision than the first level of spatial precision. The second level of spatial precision may correspond to a voxel precision of the geometry of the colored point cloud. The first level of spatial precision may correspond to 2x2x2 cubes of voxels. The second level of spatial precision may correspond to a maximum depth of a tree representing the geometry of the colored point cloud. The first level of spatial precision may correspond to a depth, for example, preceding the maximum depth of the tree. The computing device may determine the chroma information and the luma information, for example, using a prediction-based color transform to inverse transform the chroma information and the luma information. The prediction-based color transform may comprise a first level of detail of the color attributes, for example, corresponding to the first level of spatial precision. The prediction-based color transform may comprise a second level of detail of the color attributes, for example, corresponding to the second level of spatial precision. The prediction-based color transform may be, for example, a pred-lift based color transform. The computing device determining the color attributes associated with the geometry of the colored point cloud may comprise resampling the chroma information, for example, to the second level of spatial precision. The computing device determining the color attributes associated with the geometry of the colored point cloud may comprise, for example, determining the color attributes based on the resampled chroma information and the luma information. The computing device determining the color attributes associated with the geometry of the colored point cloud may comprise projecting the color attributes, for example, to points of the geometry of the colored point cloud. The computing device determining the luma information at the second level of spatial precision may comprise using a first level inverse transform, for example, to inverse transform second luma coefficients of the luma coefficients into intermediate luma coefficents. The computing device determining the luma information at the second level of spatial precision may comprise using a first to second level inverse transform, for example, to inverse transform first luma coefficients of the luma coefficents and the intermediate luma coefficients. The first to second level transform may be, for example, an inverse region adaptive hierarchical transform (RAHT) transformation. The first level transform may be, for example, an inverse RAHT iterative transformation. The chroma information may represent two chroma components of a three-component color space. The luma information may represent one luma component of the three-component color space. The computing device may comprise one or more processors and memory, storing instructions that, when executed by the one or more processors, perform the method described herein. A system may comprise the computing device configured to perform the described method, additional operations, and/or include additional elements; and a second computing device configured to encode the chroma coefficients and the luma coefficients. A computer-readable medium may store instructions that, when executed, cause performance of the described method, additional operations, and/or include additional elements.

A computing device may perform a method comprising multiple operations. The computing device may comprise a decoder. The computing device may inverse transform chroma coefficients, for example, based on a geometry of a colored point cloud associated with content. The computing device may inverse transform the chroma coefficients, for example, using an inverse hierarchical transform. The computing device may inverse transform the chroma coefficients, for example, to determine chroma information at a first level of spatial precision. The computing device may inverse transform luma coefficients, for example, based on the geometry of the colored point cloud. The computing device may inverse transform the luma coefficients, for example, using the inverse hierarchical transform. The comuting device may inverse transform the luma coefficients, for example, to determine luma information defined at a second level of spatial precision. The inverse hierarchical transform may comprise a first level of hierarchy, for example, corresponding to the first level of spatial precision. The inverse hierarchical transform may comprise a second level of hierarchy, for example, corresponding to the second level of spatial precision. The computing device may decode the chroma coefficients and the luma coefficients, for example, from a bitstream. The computing device may determine color attributes associated with the geometry of the colored point cloud, for example, based on the luma information and the chroma information. The computing device determining the luma information defined at the second level of spatial precision may comprise using a first level inverse transform, for example, to inverse transform second luma coefficients of the luma coefficients into intermediate luma coefficients. The computing device determining the luma information defined at the second level of spatial precision may comprise using a first to second level inverse transform, for example, to inverse transform first luma coefficients of the luma coefficients and the intermediate luma coefficients. The first to second level transform may be, for example, an inverse region adaptive hierarchical transform (RAHT) transformation. The first level transform may be, for example, an inverse RAHT iterative transformation. The inverse RAHT iterative transformation may comprise, for example, a same quantity of iterations as a quantity of depths in a tree representing the geometry of the colored point cloud. The tree may be an occupancy tree, for example, representing occupancy of nodes of the tree. The inverse hierarchical transform may be, for example, a pred-lift based color transform. The pred-lift based color transform may comprise a first level of detail of color attributes associated with the geometry of the colored point cloud, for example, corresponding to the first level of hierarchy. The pred-lift based color transform may comprise a second level of detail of the color attributes associated with the geometry of the colored point cloud, for example, corresponding to the second level of hierarchy. A prediction-based color transform or the inverse hierarchical transform may be, for example, a pred-lift based color tansform. The pred-lift based color transform may comprise a first level of detail of color attributes associated with the geometry of the colored point cloud, for example, corresponding to the first level of spatial precision or the first level of hierarchy. The pred-lift based color transform may comprise a second level of detail of the color attributes associated with the geometry of the colored point cloud, for example, corresponding to the second level of spatial precision or the second level of hierarchy. The computing device may comprise one or more processors and memory, storing instructions that, when executed by the one or more processors, perform the method described herein. A system may comprise the computing device configured to perform the described method, additional operations, and/or include additional elements;

and a second computing device configured to encode the chroma coefficients and the luma coefficients. A computer-readable medium may store instructions that, when executed, cause performance of the described method, additional operations, and/or include additional elements.

A computing device may perform a method comprising multiple operations. The computing device may comprise an encoder. The computing device may transform chroma information of color attributes associated with a geometry of a colored point cloud into chroma coefficients, for example, at a first level of sptial precision and based on the geometry of the colored point cloud associated with content. The computing device may transform luma information of color attributes associated with the geometry of the colored point cloud into luma coefficients, for example, at a second level of spatial precision and based on the geometry of the colored point cloud. The computing device may encode the luma coefficients and the chroma coefficients, for example, into a bitstream. The computing device may use a hierarchical transform, for example, to transform the chroma information. The computing device may use the hierarchical transform, for example, to transform the luma information. The hierarchical transform may comprise a first level of hierarchy, for example, corresponding to the first level of spatial precision. The hierarchical transform may comprise a second level of hierarchy, for example, corresponding to the second level of spatial precision. The second level of hierarchy may comprise a second to first level transform and a first level transform. The chroma information may represent two chroma components of a three-component color space. The luma information may represent one luma component of the three-component color space. The computing device may encode a syntax element, for example, that signals activation of the transforming the chroma information and the transforming the luma information. The computing device may comprise one or more processors and memory, storing instructions that, when executed by the one or more processors, perform the method described herein. A system may comprise the computing device configured to perform the described method, additional operations, and/or include additional elements; and a second computing device configured to decode the chroma coefficients and the luma coefficients. A computer-readable medium may store instructions that, when executed, cause performance of the described method, additional operations, and/or include additional elements.

A computing device may perform a method comprising multiple operations. The computing device may comprise an encoder. The computing device may transform chroma information of color attributes associated with a geometry of a colored point cloud into chroma coefficients, for example, at a first level of spatial precision and based on the geometry of the colored point cloud. The computing device may transform luma information of color attributes associated with the geometry of the colored point cloud into luma coefficients, for example, at a second level of spatial precision and based on the geometry of the colored point cloud. The computing device may encode the luma and chroma coefficients, for example, in a bitstream. The computing device may transform the chroma information at the first level of spatial precision, for example, using an iterative RAHT transformation. The computing device may transform the luma information at the second level of spatial precision, for example, using the iterative RAHT transformation. The computing device may transform the chroma information at the first level of spatial precision and the luma information at the second level of spatial precision, for example, using a hierarchical transform with a first and second level of hierarchy corresponding to the first and second levels of spatial precision, respectively. The hierarchical transform may operate as a first level transform, for example, for transforming the chroma information defined at the first level of spatial precision into the chroma coefficients. The hierarchical transform may operate as a second level transform, for example, for transforming the luma information defined at the second level of spatial precision into the luma coefficients. The second level transform may be, for example, a combination of a second to first level transform and of the first level transform. The second to first level transform may transform the luma information into intermediate luma coefficients representing the luma information at the first level of spatial precision and into first luma coefficients of the set of luma coefficients. The first level transform may transform the intermediate luma coefficients into second luma coefficients of the set of luma coefficients. The second to first level transform may be, for example, a RAHT transformation. The first level transform may be, for example, an iterative RAHT transformation. The iterative RAHT transformation may comprise, for example, as many iterations as depths in a tree representing the geometry of the colored point cloud. The tree may be an occupancy tree, for example, representing occupancy of nodes of the tree. The computing device may determine the chroma information defined at the first level of spatial precision, for example, by applying a RAHT transformation to a chroma information of the color attributes of the geometry of the colored point cloud defined at the second level of spatial precision. The computing device may use a prediction based color transform for the transforming the chroma information at the first level of spatial precision and the transforming the luma information at the second level of spatial precision. The prediction based color transform may comprise a first level of detail of the color attributes, for example, corresponding to the first level of spatial precision. The prediction based color transform may comprise a second level of detail of the color attributes, for example, corresponding to the second level of spatial precision. The prediction based color transform may be a pred-lift based color transform. The hierarchical transform may be a pred-lift based color transform, for example, with a first and a second level of detail of the color attributes corresponding to the first and second levels of hierarchy, respectively. The second level of detail of the color attributes may correspond to a voxel precision of the geometry of the colored point cloud. The first level of detail of the color attributes may correspond to points of the colored point cloud, for example, having the double of a characteristic distance between points of the second level of detail. The characteristic distance may be, for example, a mean distance between points of the colored point cloud at the second level of detail. The second level of spatial precision or the second level of detail may be a refinement of the first level of spatial precision or the first level of detail. The second level of spatial precision or the second level of detail may be a lower than the first level of spatial precision or the first level of detail. The second level of spatial precision or the second level of detail may be, for example, a next, lower level of precision or detail after the first level of spatial precision or the first level of detail, respectively. The second level of spatial precision may equal a voxel precision of the geometry of the colored point cloud. The first level of spatial precision may equal, for example, a 2x2x2 cubes of voxels. The second level of spatial precision may correspond to the maximum depth of a tree, for example, representing the geometry of the colored point cloud. The first level of spatial precision may correspond to the maximum depth minus one of the tree. The tree may be an occupancy tree, for example, representing occupancy of nodes of the tree. The chroma information may represent two chroma components of a three-component color space. The luma information may represent a luma component of the three-component color space. The three-component color space may comprise, for example, a luma component and two chroma components. The chroma components (e.g., all the chroma components, the two chroma components) of the chroma information may be defined at the (same) first level of spatial precision. The colors may be represented, for example, in the YUV or YCbCr color spaces. The chroma information may represent at least one residual chroma component. The luma information may represent a residual luma component. The residual luma and the residual chroma components may be, for example, a difference between luma and chroma components of the color attributes associated with the points of the geometry of the colored point cloud and luma and chroma predictors, respectively. The computing device transforming the chroma information of the color attributes may comprise transforming the at least one residual chroma component into residual chroma coefficients defined at the first level of spatial precision. The computing device transforming the luma information of the color attributes may comprise transforming the residual luma component into residual luma coefficients defined at the second level of spatial precision. The computing device encoding the chroma and luma coefficients may comprise encoding the residual luma and chroma coefficients. The computing device may encode a syntax element, for example, to signal the activation or not of the transforming chroma and luma information with different spatial precisions. The syntax element may be a flag, for example, coded in a Sequence Parameter Set or an Attribute Parameter Set. The computing device may comprise one or more processors and memory, storing instructions that, when executed by the one or more processors, perform the method described herein. A system may comprise the computing device configured to perform the described method, additional operations, and/or include additional elements; and a second computing device configured to decode the chroma coefficients and the luma coefficients. A computer-readable medium may store instructions that, when executed, cause performance of the described method, additional operations, and/or include additional elements.

A computing device may perform a method comprising multiple operations. The computing device may comprise a decoder. The computing device may decode chroma and luma coefficients, for example, from a bitstream. The computing device may determine chroma information, for example, by inverse transforming, at a first level of spatial precision and based on a geometry of colored point cloud, the decoded chroma coefficients. The computing device may determine luma information, for example, by inverse transforming, at a second level of spatial precision and based on the geometry of colored point cloud, the decoded luma coefficients. The computing device may reconstruct color attributes associated with the geometry of the colored point cloud, for example, based on the luma information and the chroma information. The computing device may use an inverse RAHT iterative transformation, for example, for the inverse transforming the chroma coefficients at the first level of spatial precision and the inverse transforming the luma coefficients at the second level of spatial precision. The computing device may use an inverse hierarchical transform, for example, for the inverse transforming the chroma coefficients at the first level of spatial precision and the inverse transforming the luma coefficients at the second level of spatial precision. The inverse hierarchical transform may comprise, for example, first and second levels of hierarchy corresponding to the first and second levels of spatial precision, respectively. The inverse hierarchical transform may operate as a first level inverse transform for inverse transforming the chroma coefficients into chroma information defined at the first level of spatial precision. The inverse hierarchical transform may operate as a second level inverse transform for inverse transforming the luma coefficients into luma information defined at the second level of spatial precision. The second level inverse transform may be a combination of a first to second level transform and of the first level inverse transform. The first level inverse transform may transform second luma coefficients of the luma coefficients into intermediate luma coefficients. The first to second level inverse transform may inverse transform first luma coefficients of the luma coefficients and the intermediate luma coefficients into the luma information at the first level of spatial precision. The first to second level inverse transform may be an inverse RAHT transformation. The first level inverse transform may be an inverse RAHT iterative transformation. The inverse RAHT iterative transformation may comprise, for example, as many iterations as depths in a tree representing the geometry of the colored point cloud. The tree may be an occupancy tree, for example, representing occupancy of nodes of the tree. The computing device may determine the chroma information defined at the first level of spatial precision, for example, by applying a RAHT transformation to a chroma information of the color attributes of the geometry of the colored point cloud defined at the second level of spatial precision. The computing device may use a prediction based color transform, for example, for the inverse transforming the chroma information at the first level of spatial precision and the inverse transforming the luma information at the second level of spatial precision. The prediction based color transform may comprise a first and second level of detail of the color attributes, for example, corresponding to the first and second levels of spatial precision, respectively. The prediction based color transform may be a pred-lift based color transform. The inverse hierarchical transform may be a pred-lift based color transform, for example, with a first and a second level of detail of the color attributes corresponding to the first and second levels of hierarchy, respectively. The second level of detail of the color attributes may correspond to a voxel precision of the geometry of the colored point cloud. The first level of detail of the color attributes may correspond to points of the colored point cloud, for example, having the double of a characteristic distance between points of the second level of detail. The characteristic distance may be a mean distance between points of the colored point cloud at the second level of detail. The second level of spatial precision or the second level of detail may be a refinement of the first level of spatial precision or the first level of detail. The second level of spatial precision or the second level of detail may be a lower than the first level of spatial precision or the first level of detail. The second level of spatial precision or the second level of detail may be, for example, a next, lower level of precision or detail after the first level of spatial precision or the first level of detail, respectively. The second level of spatial precision may equal a voxel precision of the geometry of the colored point cloud. The first level of spatial precision may equal, for example, a 2x2x2 cubes of voxels. The second level of spatial precision may, for example, correspond to the maximum depth of a tree representing the geometry of the colored point cloud. The first level of spatial precision may, for example, correspond to the maximum depth minus one of the tree. The tree may be an occupancy tree, for example, representing occupancy of nodes of the tree. The computing device reconstructing the color attributes associated with the geometry of the point cloud may comprise resampling the chroma information to the second level of spatial precision. The computing device reconstructing the color attributes associated with the geometry of the colored point cloud may comprise determining the color attributes, for example, based on the resampled chroma information with the luma information. The computing device may project the color attributes to the points of the geometry of the colored point cloud. The computing device reconstructing the color attributes associated with the geometry of the point cloud may comprise determining the color attributes, for example, based on the chroma information and the luma information. The chroma information may represent two chroma components of a three-component color space. The luma information may represent a luma component of the three-component color space. The three-component color space may comprise, for example, a luma component and two chroma components. The chroma components (e.g., all the chroma components, the two chroma components) of the chroma information may be defined at the (same) first level of spatial precision. The colors may be represented, for example, in the YUV or YCrCb color spaces. The chroma information may represent at least one residual chroma component. The luma information may represent a residual luma component. The residual luma and the residual chroma components may be, for example, differences between luma and chroma components of the color attributes associated with the points of the geometry of the colored point cloud and luma and chroma predictors, respectively. The computing device inverse transforming the chroma and the luma coefficients may comprise decoding residual luma coefficients and residual chroma coefficients, for example, from the bitstream. The computing device determining the chroma information may comprise determining at least one residual chroma component, for example, based on inverse transforming, at a first level of spatial precision and based on a geometry of a colored point cloud, the decoded residual chroma coefficients. The computing device determining the luma information may comprise determining a residual luma component, for example, by inverse transforming, at a second level of spatial precision and based on the geometry of the colored point cloud, the decoded residual luma coefficients. The computing device reconstructing the color attributes may comprise determining the chroma information, for example, further based on adding the at least one residual chroma component with at least one chroma predictor. The computing device reconstructing the color attributes may comprise determining the luma information, for example, further based on adding the residual luma component with a luma predictor. The computing device may encode a syntax element, for example, to signal the activation or not of the transforming chroma and luma information with different spatial precisions. The syntax element may be a flag, for example, coded in a Sequence Parameter Set or an Attribute Parameter Set. The computing device may comprise one or more processors and memory, storing instructions that, when executed by the one or more processors, perform the method described herein. A system may comprise the computing device configured to perform the described method, additional operations, and/or include additional elements; and a second computing device configured to encode the chroma coefficients and the luma coefficients. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.   A method comprising:

decoding, by a computing device and from a bitstream, chroma coefficients and luma coefficients;
determining chroma information by inverse transforming, at a first level of spatial precision and based on a geometry of a colored point cloud associated with content, the decoded chroma coefficients;
determining luma information by inverse transforming, at a second level of spatial precision and based on the geometry of the colored point cloud, the decoded luma coefficients; and
determining, based on the luma information and the chroma information, color attributes associated with the geometry of the colored point cloud.

2.   The method of claim 1, wherein an inverse hierarchical transform, for inverse transforming the decoded chroma coefficients and the decoded luma coefficients, comprises:

a first level of hierarchy corresponding to the first level of spatial precision; and
a second level of hierarchy corresponding to the second level of spatial precision.

3.   The method of claim 1 or claim 2, wherein the second level of spatial precision is:

a refinement of the first level of spatial precision; or
a reduced level of precision than the first level of spatial precision.

4.   The method of any one of claims 1 to 3, wherein the second level of spatial precision corresponds to a voxel precision of the geometry of the colored point cloud, and wherein the first level of spatial precision corresponds to 2x2x2 cubes of voxels.

5.   The method of any one of claims 1 to 4, wherein the second level of spatial precision corresponds to a maximum depth of a tree representing the geometry of the colored point cloud, and wherein the first level of spatial precision corresponds to a depth preceding the maximum depth of the tree.

6.   The method of any one of claims 1 to 5, wherein determining the chroma information and the luma information further comprises:
using a prediction-based color transform to inverse transform the chroma information and the luma information, and wherein the prediction-based color transform comprises:

a first level of detail of the color attributes corresponding to the first level of spatial precision; and
a second level of detail of the color attributes corresponding to the second level of spatial precision.

7.   The method of any one of claims 1 to 6, wherein the prediction-based color transform is a pred-lift based color transform.

8.   The method of any one of claims 1 to 7, wherein the determining the color attributes associated with the geometry of the colored point cloud comprises:

resampling the chroma information to the second level of spatial precision; and
determining the color attributes based on the resampled chroma information and the luma information.

9. The method of any one of claims 1 to 8, wherein the determining the color attributes associated with the geometry of the colored point cloud comprises projecting the color attributes to points of the geometry of the colored point cloud.

10. The method of any one of claims 1 to 9, wherein determining the luma information at the second level of spatial precision further comprises:

using a first level inverse transform to inverse transform second luma coefficients of the luma coefficients into intermediate luma coefficients; and
using a first to second level inverse transform to inverse transform first luma coefficients of the luma coefficients and the intermediate luma coefficients.

11. The method of any one of claims 1 to 10, wherein the first to second level transform is an inverse region adaptive hierarchical transform (RAHT) transformation, and wherein the first level transform is an inverse RAHT iterative transformation.

12. The method of any one of claims 1 to 11, wherein the chroma information represents two chroma components of a three-component color space, and wherein the luma information represents one luma component of the three-component color space.

13. A computing device comprising:

one or more processors; and
memory storing instructions that, when executed by the one or more processors, cause the computing device to perform the method of any one of claims 1 to 12.

14. A system comprising:

a first computing device configured to perform the method of any one of claims 1 to 12; and
a second computing device configured to encode the chroma coefficients and the luma coefficients.

15. A computer-readable medium storing instructions that, when executed, cause performance of the method of any one of claims 1 to 12.

FIG. 1

EP 4 661 399 A1

*FIG. 2*

FIG. 3

*FIG. 4*

FIG. 5

```
┌─────────────────────────────────────┐
│  Determine occupancy configuration β │
│                 602                  │
└─────────────────────────────────────┘
                    │
                    ▼
┌─────────────────────────────────────┐
│   Dynamically reduce using $DR^n$    │
│                 604                  │
└─────────────────────────────────────┘
                    │
                    ▼
┌─────────────────────────────────────┐
│      Lookup context index in LUT     │
│                 606                  │
└─────────────────────────────────────┘
                    │
                    ▼
┌─────────────────────────────────────┐
│            Select context            │
│                 608                  │
└─────────────────────────────────────┘
                    │
                    ▼
┌─────────────────────────────────────┐
│  Entropy code occupancy of current   │
│             child cuboid             │
│                 610                  │
└─────────────────────────────────────┘
```

*FIG. 6*

**FIG. 7**

EP 4 661 399 A1

*FIG. 8A*

*FIG. 8B*

FIG. 8C

*FIG. 9A*

$$u+v+w = 1$$
$$0 \leq u, v, w$$

$$P = uA + vB + wC$$

*FIG. 9B*

EP 4 661 399 A1

FIG. 10

*FIG. 11*

EP 4 661 399 A1

FIG. 12

EP 4 661 399 A1

Decode
from
bitstream
1310

$res\ a^2$

$res\ up\ a^1$

$up\ up\ a^0$

Obtain
update
attributes
1375

Subtract update
attributes from
attributes
1380

$up\ a^0$

Add predicted
attributes
to residual attributes
1330

Predict
attributes
1320

$up\ a^1$

Merge
attributes
1340

$up\ a^0, up\ a^1$

subtract update
attributes from
attributes
1390

$a^0, a^1$

Obtain
update
attributes
1385

Add predicted
attributes
to residual attributes
1360

$a^2$

Predict attributes
1350

Merge attributes
1370

$a$

1300

**FIG. 13**

*FIG. 14*

FIG. 15

EP 4 661 399 A1

FIG. 16

transform along
three directions

$\{DC_j^k\}$        $\{DC_{j-1}^k\}$        $\{AC_d^k\}$

FIG. 17

$$d = 0 \quad\underline{\quad\quad}\quad DC_0^k \quad\Longrightarrow\quad \{AC_0^k\}$$

$$\Uparrow$$

$$d = 1 \quad\underline{\quad\quad}\quad \{DC_1^k\} \quad\Longrightarrow\quad \{AC_d^k\}$$

$$\vdots$$

$$d - 1 \quad\underline{\quad\quad}\quad \{DC_{j-1}^k\} \quad\Longrightarrow\quad \{AC_{d-1}^k\}$$

$$\Uparrow$$

$$d \quad\underline{\quad\quad}\quad \{DC_j^k\} \quad\Longrightarrow\quad \{AC_d^k\}$$

FIG. 18

$$d = 0 \quad \rule{2cm}{0.4pt} \quad DC_0^k \quad \Longleftarrow \quad \{AC_0^k\}$$

$$\Downarrow$$

$$d = 1 \quad \rule{2cm}{0.4pt} \quad \{DC_1^k\} \quad \Longleftarrow \quad \{AC_d^k\}$$

$$\vdots$$

$$d - 1 \quad \rule{2cm}{0.4pt} \quad \{DC_{j-1}^k\} \quad \Longleftarrow \quad \{AC_{d-1}^k\}$$

$$\Downarrow$$

$$d \quad \rule{2cm}{0.4pt} \quad \{DC_j^k\} \quad \Longleftarrow \quad \{AC_d^k\}$$

*FIG. 19*

FIG. 20

FIG. 21

luma information 2201

second to first level
transform
**2211**

second level transform
**2210**

Intermediate luma
coefficients 22111

first level transform
**2212**

chroma information
2202

first luma
coefficients 22041

chroma coefficients 2203

second luma
coefficients 22042

2200

luma coefficients 2204

*FIG. 22*

EP 4 661 399 A1

EP 4 661 399 A1

second luma coefficients 22042

chroma coefficients 2203

first level inverse
transform
2312

second level inverse transform
2310

Intermediate luma
coefficients (22111)

first to second level inverse
transform
2311

first luma coefficients 22041

luma information 2201

chroma information 2202

2300

*FIG. 23*

Transform, at a first level of spatial precision and based on a
geometry of a colored point cloud, chroma information of color
attributes associated with the geometry of the colored point cloud
into chroma coefficients
2410

Transform, at a second level of spatial precision and based on the
geometry of the colored point cloud, luma information of color
attributes associated with the geometry of the colored point cloud
into luma coefficients
2420

Encode, in a bitstream, the luma and chroma coefficients
2430

2400

FIG. 24

Decode, from a bitstream, chroma and luma coefficients
*2510*

Determine chroma information by inverse transforming, at a first level of spatial precision and based on a geometry of a colored point cloud, the decoded chroma coefficients
*2520*

Determine luma information by inverse transforming, at a second level of spatial precision and based on the geometry of the colored point cloud, the decoded luma coefficients
*2530*

Reconstruct, based on the luma information and the chroma information, color attributes associated with the geometry of the colored point cloud
*2540*

*2500*

*FIG. 25*

FIG. 26

FIG. 27

**EUROPEAN SEARCH REPORT**

| | Application Number |
| --- | --- |
| | EP 25 18 1176 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | SRIDHARA SHASHANK N ET AL: "Point Cloud Attribute Compression Via Chroma Subsampling", ICASSP 2022 - 2022 IEEE INTERNATIONAL CONFERENCE ON ACOUSTICS, SPEECH AND SIGNAL PROCESSING (ICASSP), IEEE, 23 May 2022 (2022-05-23), pages 2579-2583, XP034158881, DOI: 10.1109/ICASSP43922.2022.9746352 [retrieved on 2022-04-27] * the whole document * | 1-15 | INV.<br>H04N19/132<br>G06T9/00<br>H04N19/186<br>H04N19/597 |
| X | US 2023/111994 A1 (OH HYUNMOOK [KR] ET AL) 13 April 2023 (2023-04-13) * paragraphs [0068], [0088], [0140], [0156], [0266]; figures 4,11 * * paragraphs [0296] - [0374] * | 1-15 | |
| A | ANONYMOUS: "G-PCC codec description", 131. MPEG MEETING; 20200629 - 20200703; ONLINE; (MOTION PICTURE EXPERT GROUP OR ISO/IEC JTC1/SC29/WG11), , no. n19525 10 October 2020 (2020-10-10), pages 1-140, XP030292244, Retrieved from the Internet: URL:https://dms.mpeg.expert/doc_end_user/d ocuments/131_OnLine/wg11/w19525.zip w19525.docx [retrieved on 2020-10-10] * sections 2, 3.8 - 3.10, and 3.15.4.1 * | 1-15 | TECHNICAL FIELDS SEARCHED (IPC)<br><br>H04N<br>G06T |

-/--

The present search report has been drawn up for all claims

| Place of search | Date of completion of the search | Examiner |
| --- | --- | --- |
| The Hague | 20 October 2025 | André, Thomas |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 18 1176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LASSERRE (OFINNO) S ET AL: "[GPCC][EE13.75] On 420 RAHT for GeSTM", 148. MPEG MEETING; 20241104 - 20241108; KEMER; (MOTION PICTURE EXPERT GROUP OR ISO/IEC JTC1/SC29/WG11), , no. m69843 26 October 2024 (2024-10-26), XP030328448, Retrieved from the Internet: URL:https://dms.mpeg.expert/doc_end_user/documents/148_Kemer/wg11/m69843-v1-m69843%5BGPCC%5D%5BEE13.75%5DOn420RAHTforGeSTM.docx.zip m69843 [GPCC][EE13.75] On 420 RAHT for GeSTM.pptx [retrieved on 2024-10-26] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 20 October 2025 | André, Thomas |

## ANNEX TO THE EUROPEAN SEARCH REPORT
## ON EUROPEAN PATENT APPLICATION NO.

EP 25 18 1176

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | Publication date | Patent family member(s) | Publication date |
|---|---|---|---|
| US 2023111994 A1 | 13-04-2023 | US 2023111994 A1<br>WO 2021201390 A1 | 13-04-2023<br>07-10-2021 |

EPO FORM P0459

For more details about this annex : see Official Journal of the European Patent Office, No. 12/82

**REFERENCES CITED IN THE DESCRIPTION**

**Patent documents cited in the description**

- US 63657218